# EUROPEAN PATENT APPLICATION

(11) **EP 1 781 034 A1**
(43) Date of publication of application: **02.05.2007**
(21) Application number: 05728453.1
(22) Date of filing: 06.04.2005
(51) Int. Cl.: H04N 7/173

(54) **PSEUDO VIDEO-ON-DEMAND SYSTEM, PSEUDO VIDEO-ON-DEMAND SYSTEM CONTROL METHOD, AND PROGRAM AND RECORDING MEDIUM USED FOR THE SAME**

(30) Priority: 27.07.2004 JP 2004218891
(71) Applicant: SHARP KABUSHIKI KAISHA, Osaka-shi, Osaka 545-8522 (JP)
(72) Inventor: KAJIURA, Hiroyuki, 2900071 (JP)
(74) Representative: Brown, Kenneth Richard
(86) International application number: PCT/JP2005/006748
(87) International publication number: WO 2006/011270

(57) **Abstract**

A near video-on-demand system in which the viewer can pause and then resume the playback of content without problems. In a near video-on-demand system 1A, a stream transmission system 0001 for transmitting content transfers the stream data of content that is divided into a plurality of stages, on a plurality of channels with temporal displacements, using a stream transfer means 0005 on a stage-by-stage basis. The stream transmission system 0001 and a stream reception system 0002 exchange control data using control data transfer means 0006. A stream recording/playback means 0113 of the stream reception system 0006 receives, manages, and plays back content on a stage-by-stage basis. The stream reception system 0002 is capable of pausing the playback of content and then resuming the playback from the same stage on another channel, so that pausing and resumption of the playback of content can be smoothly carried out.

## Description

### TECHNICAL FIELD

The present invention relates to technologies for controlling video-on-demand systems, and more particularly, it relates to a technology for controlling near video-on-demand systems.

### BACKGROUND ART

As a result of the progress in digitization of broadcasting in recent years, more items of content are now being broadcast in more channels than before. CATV systems are also being digitized, with a resultant increase in the number of CATV channels.

In such multi-channel broadcasting systems, new services are being initiated, such as video-on-demand (to be hereafter referred to as "VOD") and near video-on-demand ("NVOD"). VOD allows the viewer to have desired content to be displayed on his or her reception system at a desired time. However, although the number of channels has been increased by the digitization of broadcasting, the required allocation of the channels for broadcasting content based on viewer convenience makes it basically impossible to accommodate every viewer's requests. The NVOD technology has been developed to address this problem, whereby each piece of content is broadcast in multiple channels with predetermined time shifts.

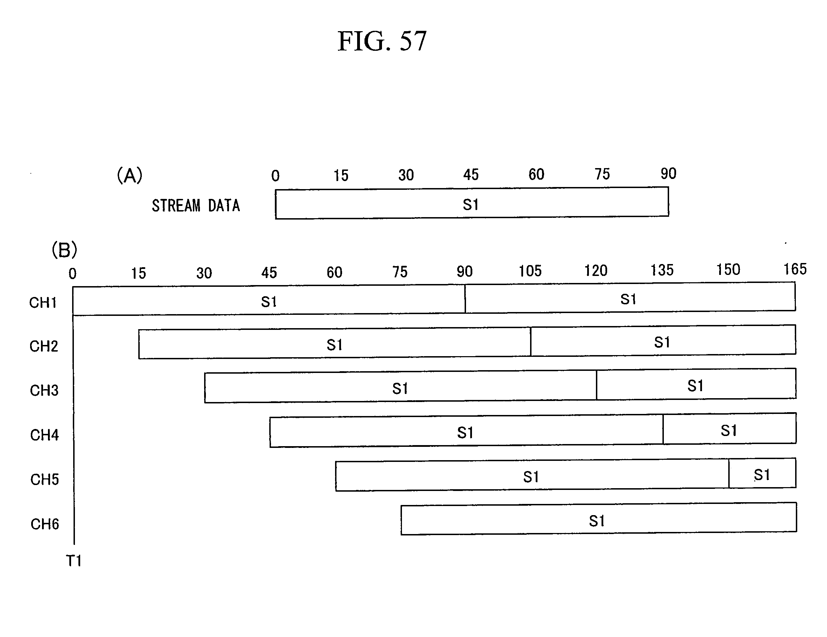

Fig. 57 shows a time table (B) of individual channels for conventional NVOD broadcasting. When the content that is broadcast consists of stream data (A), the stream data is broadcast repeatedly using channel CH1 from a reference time T1. The stream data is also broadcast repeatedly using channel CH2, from 15 minutes past the reference time T1. Similarly, the stream data is broadcast on channels CH3, CH4, CH5, and CH6 in turn, with each start of broadcasting being time-shifted 15 minutes by 15 minutes. In this way, the viewer can access the content from its beginning at any time with just the maximum of 15 minutes wait time.

Even if the number of digital broadcasting channels keeps increasing, there are limits to NVOD and it is impossible for the viewers to access a large number of pieces of content at the same time. For example, if there are 100 pieces of content, each having a length of 90 minutes, in order to allow access to them simultaneously with the 15-minute time shift using NVOD, the required number of channels would be 600 (90/15 x 100), which is not a realistic number.

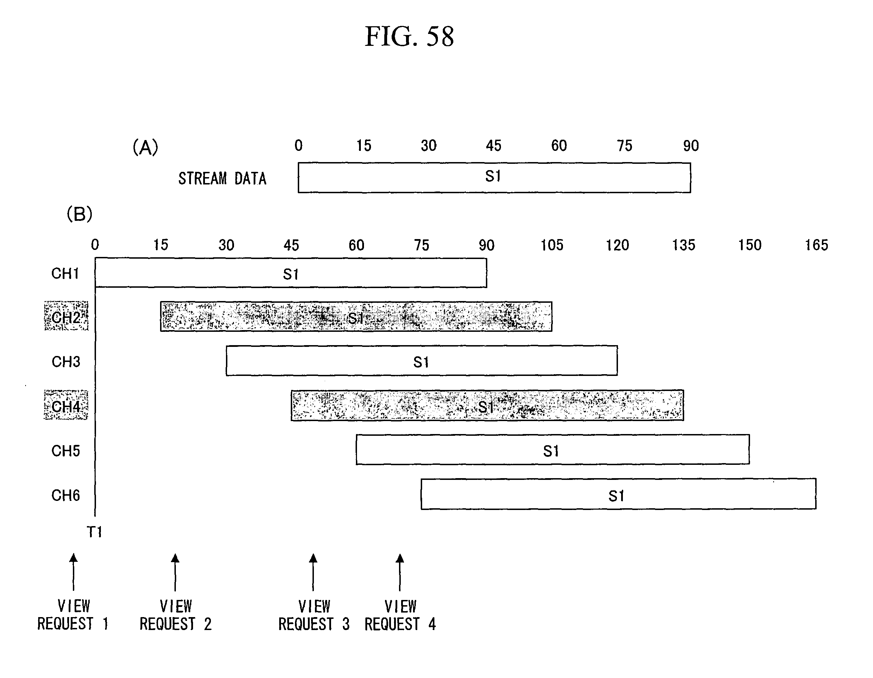

In order to solve the aforementioned problem, Patent Document 1 discloses a technology whereby a channel for content broadcast is allocated upon request from a viewer on the receiving system end. An example is shown in Fig. 58 showing a time table (B) for stream data (A) for the broadcast of content. Upon request from viewers for the viewing of content at timings indicated by view requests 1 to 4, channels CH1, CH3, CH5, and CH6 need to broadcast, for they each have a viewer. But channels CH2 and CH4 are not required to broadcast because there are no viewers. Thus, wasteful broadcast for non-existent viewers can be eliminated. While the above illustrated example is based on the assumption that channels are allocated in advance, a broadcast channel is actually allocated only upon request from a viewer within the duration of a certain time shift (see Patent Document 1, for example).

A technology is also known whereby a database for the management of viewers is provided on the broadcaster's end, and the broadcast of a certain channel is terminated upon loss of viewers on the channel (see Patent Document 2, for example).

Although NVOD allows access to desired content after a certain wait time, there is the need to pause the viewing of content due to the viewers' personal reasons.

In order to address this problem, Patent Document 3 discloses a technology whereby, if the viewer pauses the viewing of content by NVOD, at least a length of stream data corresponding to the time shift from where it was paused is recorded on a recording unit. Upon releasing of the pause, i.e., upon resumption of viewing by the viewer, the stream data recorded in the recording unit is played back. In this way, the NVOD viewer can start enjoying the content from where he or she paused.

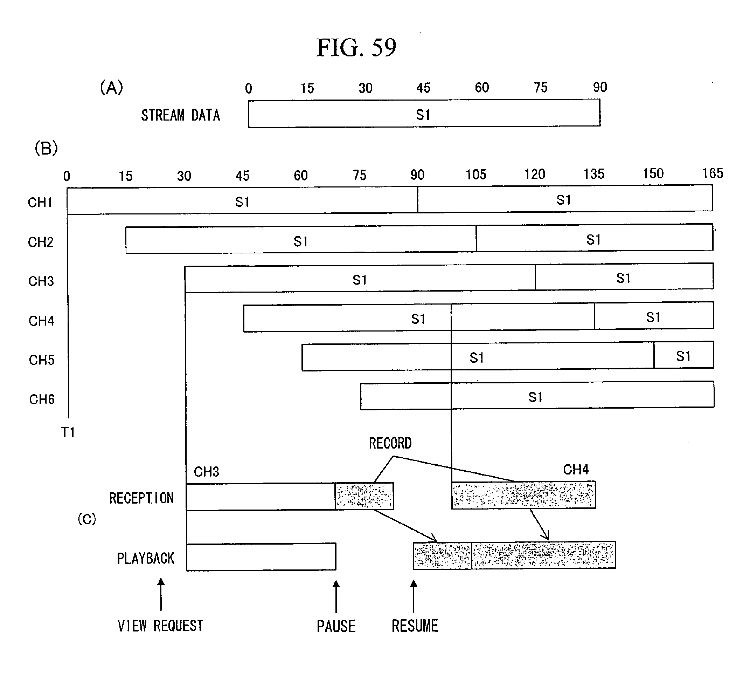

Fig. 59 shows an example of the aforementioned technology, where stream data (A) is broadcast by NVOD according to a time table (B). If, as shown in (C), a viewer pauses during the viewing of the stream data on CH3, the subsequent data is recorded in the recording area on a stream recording/playback means of the reception system. The recording area of this stream recording/playback means is required to have a capacity for the recording of stream data corresponding to at least the time shift. During the pause, the reception of the broadcast on the channel continues and the stream data is recorded on the recording unit. When the stream recording/playback means of the reception system cannot record any more, the reception of the channel is terminated. Upon resumption of viewing, the channel is switched to CH4 if the duration of pause has exceeded the duration of time shift, and the recording of the stream data starts where it continues from the stream data that is recorded in the stream recording/playback means. Thus, the viewing can be resumed from where the viewer paused by playing back the data recorded in the stream recording/playback means.

As the Internet (which is referred to herein in a narrow sense, i.e., as a network system based on TCP/IP, as opposed to its wider sense, in which the term refers to the ability to exchange data among a plurality of interconnected networks) becomes more and more broadband-based, it is becoming increasingly common to download streaming content, or to transfer live video or the like on an on-time basis to many users for simultaneous viewing, in a technology called Internet broadcasting.

Normally, digitized stream data is compressed before broadcast. For example, in CS/BS digital broadcast or terrestrial digital broadcast, video is digitized and compressed by MPEG2 (ISO/IEC 13818-2 (ITU-T H.262)) before broadcast. The relevant rate (which is herein referred to as the playback rate) is approximately 6 Mpbs in the case of normal broadcast (SD, Standard Definition). The rate at which broadcast is transferred (which is herein referred to as the transfer rate) is set to be the same as the playback rate. This is in view of the fact that, if the playback rate and the transfer rate are different, the received stream data would have to be recorded in the stream recording/playback means on the reception system end. The recording capacity of the stream recording/playback means for the recording of a stream varies depending on the length of content, the value of playback rate, and the ratio of playback rate to transfer rate.

While the playback rate and the transfer rate need to be identical in the case of live broadcast, they need not be identical in the case of NVOD, for example. If the transfer rate is lower than the playback rate, a certain volume of data needs to be downloaded before a continuous playback can be made. Conversely, if the transfer rate is higher than the playback rate, playback can be started immediately, although the stream data needs to be recorded in the stream recording/playback means. Indeed, the number of required channels can be reduced by increasing the transfer rate. However, as mentioned above, if the playback rate and the transfer rate are different, the stream data needs to be recorded on the reception system end, where the recording capacity varies and, in some cases, quite a large recording capacity is required in the stream recording/playback means. For these reasons, the playback rate and the transfer rate are normally set to be the same.
Patent Document 1: JP Patent Publication (Kokai) No. 9-182054 A (1997)
Patent Document 2: JP Patent Publication (Kokai) No. 9-18858 A (1997)
Patent Document 3: JP Patent Publication (Kokai) No. 7-307936 A (1995)

### DISCLOSURE OF THE INVENTION

### PROBLEMS TO BE SOLVED BY THE INVENTION

The modes shown in Figs. 57 and 58 require that, in order to allow resumption of playback following a pause, the stream data of the same content be broadcast on CH4 with a time-shift displacement. However, if there is no viewer who makes a view request within the duration of the previous time shift, there would be no broadcast with the necessary time shift when it is desired to broadcast the same stream data on CH4 as before the pause. As a result, there would be no channel on which the content is broadcast with the next time shift, making it impossible to resume playback following a pause.

In order to avoid such a case, it is necessary to keep receiving the same channel after a pause and keep recording the subsequent stream data in the recording unit. In this case, however, there is no way of knowing in advance when a pause would occur and when playback would be resumed. This makes it necessary to equip the stream recording/playback means of the reception system with a buffer having a capacity large enough to store the stream data of an entire piece of content.

In the case of a near video-on-demand system where the playback rate and the transfer rate are different, the receiving device would have to be provided with a recording area with a certain capacity for recording stream data. The size of such area cannot be uniquely defined for it differs depending on the length of the content, the value of playback rate, and the ratio of playback rate to transfer rate. In some cases, the recording area of the stream recording/playback means of the reception system could be required to have quite a large capacity.

It is therefore an object of the invention to solve the aforementioned problems and to provide a near video-on-demand system that would not prevent resumption of playback following a pause during the playback of a stream on the reception system end, and that would not require the installation of an excessive memory area in a recording/playback means of the reception system, a method for controlling such near video-on-demand system, and a program and a recording medium for such system and method.

### MEANS FOR SOLVING THE PROBLEMS

The invention provides a near video-on-demand control system in which the playback of a stream can be paused and then resumed without problems on the reception system end, and in which there is no need to provide the recording/playback means in the reception system with an excessive memory area. The invention also provides a near video-on-demand control method, a program, and a recording medium. Specifically, the aforementioned object of the invention are achieved by a near video-on-demand system in which a plurality of items of the same content are transmitted with their respective time shifts, the system including a stream transmission system, a stream reception system, a stream data transfer means, and a control data transfer means. The stream transmission means manages the stream data on a stage-by-stage basis, the stages being formed by dividing the stream data at predetermined time intervals.

Because the stream transmission means manages the stream data on a stage-by-stage basis by dividing it at predetermined time intervals, it becomes possible to make detailed settings in the mode of stream transmission, such as dynamically changing the transfer channel or preventing the transfer of unnecessary streams. As a result, the playback of stream data can be paused and then resumed without problems on the side of the reception system. Furthermore, because playback is made possible if only the stream data is recorded on a stage-by-stage basis on the reception system end, there is no need to increase the recording capacity of the stream recording/playback means excessively.

The aforementioned object of the invention are also achieved by a near video-on-demand system in which a plurality of items of the same content are transmitted with their respective time shifts, the system including a stream transmission system, a stream reception system, a stream data transfer means, and a control data transfer means. The stream transmission system includes a stream storage/playback means, a content managing means, a stream transmission means, a stream data transmission/reception means, a stream transmission managing means, and a user managing means. The stream reception system includes a stream reception unit and a user interface unit. The stream reception unit includes a stream recording/playback means, a stream reception means, a stream data transmission/reception means, and a stream reception managing means. The user interface unit includes a display means and an operating means. The stream transmission means transfers the content stream data on a stage-by-stage basis by dividing the stream data at predetermined time intervals.

Because the stream transmission system includes the stream transmission means and the control data transfer means separately, the system can be applied to a system in which stream data and control data are transmitted by separate communication means, such as a near video-on-demand system in which satellite communication and an Internet network are used in combination.

The aforementioned object of the invention can also be achieved by a near video-on-demand system in which a plurality of items of the same content are transmitted with their respective time shifts, the system including a stream transmission system, a stream reception system, and a data transfer means. The stream transmission system includes a stream storage/playback means, a content managing means, a stream transmission means, a control data transmission/reception means, a stream transmission managing means, and a user managing means. The stream reception system includes a stream reception unit and a user interface unit. The stream reception unit includes a stream recording/playback means, a stream reception means, a control data transmission/reception means, and a stream reception managing means. The user interface unit includes a display means and an operating means. The stream transmission means transfers the content stream data on a stage-by-stage basis by dividing the stream data at predetermined time intervals.

Because the stream transmission system includes only a data communication means for stream transmission and the transfer of control data, the invention can be applied to systems where stream data and control data are transmitted by the same communication means, such as a near video-on-demand system using an IP network.

The aforementioned object of the invention are also effectively achieved by a near video-on-demand system in which the stream transmission system includes a stream encrypting means and in which the stream reception system includes a stream decrypting means. The object is also effectively achieved by a near video-on-demand system in which the stream encrypting means and the stream decrypting means employ at least one of a secret-key cryptography system and a public-key cryptography system.

The invention can also be applied to a near video-on-demand system provided with an encryption means and a decryption means, whereby stream data can be exchanged with higher security.

The aforementioned object of the invention are more effectively achieved by a near video-on-demand system in which the stream transmission managing means manages the content stream data by dividing it at predetermined time intervals into a plurality of stages. It is also effectively achieved by a near video-on-demand system having various features for the accurate transmission and reception of stream data that is divided into a plurality of stages, such as a near video-on-demand system in which the stream recording/playback means has a memory area with capacity to record the stream data that is transferred within a single stage period.

By providing the stream transmission system and the stream reception system each with various features for the transmission and reception of the stream data divided in a plurality of stages, the stream data divided in stages can be transmitted without problems and played back in good order.

The object is also more effectively achieved by a near video-on-demand system having various features for pausing and resuming the playback of stream data, such as the feature in which the stream recording/playback means of the stream reception system pauses the playback of stream data and then resumes the playback.

By providing the various features for allowing the pausing and then resumption of the playback of stream data, a system can be provided that is friendly to the user and in which viewing troubles upon resumption of playback are prevented.

The object is also more effectively achieved by a near video-on-demand system in which the control data transfer means transmits various messages bidirectionally so as enable the viewing of content based on stream data.

Because the stream transmission system and the stream reception system exchange control data bidirectionally, it becomes possible to transmit a stream upon request from the user of the reception system, so that the playback of content can be paused and then resumed reliably without problems.

The aforementioned object of the invention are achieved by a method for controlling a near video-on-demand system including a stream transmission system, a stream reception system, a stream data transfer means, and a control data transfer means, in which a plurality of items of the same content are transmitted with their respective time shifts, the method comprising the steps of: a stream transmission managing means of the stream transmission system dividing content stream data at predetermined time intervals into stages; a stream transmission means of the stream transmission system transferring the stream data to the stream reception system on a stage-by-stage basis; the stream reception means receiving the stream data; accumulating the stream data received by the stream recording/playback means on a stage-by-stage basis; and the stream recording/playback means playing back the stream data.

Because the stream transmission means has the step of dividing the stream data at predetermined time intervals into stages, it becomes possible to make detailed settings concerning the mode of stream transmission, such as dynamically changing the channel used for transferring or preventing the transferring of unnecessary streams, thereby enabling the playback of stream data to be paused and then resumed on the reception system side without problems. Furthermore, because playback is possible if only the stream data is recorded stage by stage on the reception system end, there is no need to increase the recording capacity of the stream recording/playback means excessively. Because the present method is used in a stream transmission means having a stream transmission means and a control data transfer means separately, the invention can be applied to a system in which stream data and control data are transmitted by separate communication means, such as a near video-on-demand system in which satellite communication and an Internet network are used in combination.

The aforementioned object of the invention are achieved by a method for controlling a near video-on-demand system including a stream transmission system, a stream reception system, and a data transfer means, in which a plurality of items of the same content are transmitted with their respective time shifts, the method comprising the steps of: a stream transmission managing means of the stream transmission system dividing content stream data at predetermined time intervals into stages; a stream transmission means of the stream transmission system transferring the stream data to the stream reception system on a stage-by-stage basis; the stream reception means receiving the stream data; the stream recording/playback means accumulating the received stream data on a stage-by-stage basis; and the stream recording/playback means playing back the stream data.

By using a data communication means alone for stream transmission and the transfer of control data, the invention can be applied to a system in which stream data and control data are transmitted by the same communication means, such as a near video-on-demand system using an IP network.

The aforementioned object of the invention are effectively achieved by the method for controlling a near video-on-demand system, the method further including the steps of the stream transmission means encrypting the stream data divided into stages, and the stream reception means receiving and decrypting the encrypted stream data.

By encrypting the stream data for transmission and reception, it becomes possible to exchange stream data with high security levels.

The aforementioned object of the invention are achieved by a method including various steps for realizing and managing the transmission/reception, playback, and resumption following a pause of stream data divided into a plurality of stages, such as a method for controlling a near video-on-demand system, the method including the steps of: the stream recording/playback means of the stream reception system, upon reception by the operating means of an instruction to select/decide on a button for resuming the viewing of content displayed on the display means of the stream reception system, resuming the playback of content that has been paused; and the display means erasing the information that the reception and playback of the content is being interrupted, a button for cancelling the viewing of content, a button for pausing the viewing of content, and a button for resuming the viewing of content.

By providing these various steps, it becomes possible to distribute content using stream data divided into stages, play back such content, or pause and then resume the playback of content smoothly and without problems.

The aforementioned object of the invention are achieved by a program for causing a computer to carry out the above-described methods for controlling a near video-on-demand system or by a computer-readable recording medium in which such program is recorded.

The aforementioned object of the invention are achieved by a stream transmission system used in a near video-on-demand system in which a plurality of items of the same content are transmitted with their respective time shifts, wherein the content stream data is divided at predetermined time intervals and managed on a stage-by-stage basis.

By dividing the stream data at predetermined time intervals and managing the data on a stage-by-stage basis, the stream data can be transmitted easily and efficiently.

The aforementioned object of the invention are achieved by a stream transmission system used in a near video-on-demand system in which a plurality of items of the same content are transmitted with their respective time shifts, the system including: a stream storage/playback means; a content managing means; a stream transmission means; a control data transmission/reception means; a stream transmission managing means; and a user managing means. The stream transmission means transfers the content stream data on a stage-by-stage basis by dividing the stream data at predetermined time intervals.

Because the stream transmission means transfers the stream data on a stage-by-stage basis by dividing the data at predetermined time intervals, it becomes possible to make detailed settings concerning the mode of stream transmission, such as dynamically changing the transfer channel or preventing the transfer of unnecessary streams.

The aforementioned object of the invention are effectively achieved by a stream transmission system including a stream data transfer means and a control data transfer means.

By using the invention in a stream transmission means having a stream transmission means and a control data transfer means separately, it becomes possible to apply the invention in a system in which stream data and control data are transmitted by separate communication means, such as a near video-on-demand system in which satellite communication and an Internet network are used in combination.

The aforementioned object of the invention are more effectively achieved by a stream transmission system having features for transmitting and managing the transmission of stream data divided into stages, such as a stream transmission system in which the stream transmission managing means manages the content stream data by dividing it at predetermined time intervals into stages.

By transmitting or managing the transmission of stream data divided into stages, it becomes possible to play back content or pause and then resume the playback of content on the reception system side in an appropriate manner.

The aforementioned object of the invention are achieved by a stream reception system used in a near video-on-demand system in which a plurality of items of the same content are transmitted with their respective time shifts, the stream reception system including a stream reception unit for managing the content stream data on a stage-by-stage basis by dividing the data at predetermined time intervals.

Because the stream reception unit manages the content stream data on a stage-by-stage basis, stream data can be received, recorded, and played back easily and efficiently.

The aforementioned object of the invention are achieved by a stream reception system used in a near video-on-demand system in which a plurality of items of the same content are transmitted with their respective time shifts, the stream reception system including a stream reception unit and a user interface unit. The stream reception unit includes a stream recording/playback means, a stream reception means, a control data transmission/reception means, and a stream reception managing means. The user interface unit includes a display means and an operating means.

Because the stream reception system receives the transferred stream data that is divided into stages, it is only necessary to record the stream data on a stage-by-stage basis in order to enable playback, so that there is no need to increase the recording capacity of the stream recording/playback means excessively.

The aforementioned object of the invention are effectively achieved by a stream reception system having a stream decrypting means.

Because the stream reception system is provided with a decrypting means, the invention can be applied to a system in which encrypted stream data is received.

The aforementioned object of the invention are more effectively achieved by a stream reception system including various features for the execution and management of reception, playback, and resumption of playback after a pause of stream data divided into stages, such as a stream reception system in which the stream recording/playback means is capable of pausing the playback of stream data and then resuming the playback.

By providing the various features for the reception, playback, and resumption after a pause of stream data divided into stages, content can be played back, paused, and then played back again in an appropriate manner.

The aforementioned object of the invention are achieved by a stream transmission system having various steps for carrying out the transmission and management of transmission of stream data divided into stages in an appropriate manner, such as a method for controlling a stream transmission system used in a near video-on-demand system in which a plurality of items of the same content are transmitted with their respective time shifts, the method including the steps of: a stream transmission managing means dividing content stream data at predetermined time intervals into stages; and a stream transmission means for transferring the stream data to a stream reception system on a stage-by-stage basis.

The aforementioned object of the invention are achieved by a method for controlling a stream reception system for carrying out the playback and resumption after a pause of content in an apprioriate manner, such as a stream reception system used in a near video-on-demand system in which a plurality of items of the same content are transmitted with their respective time shifts, the method having the steps of: the stream reception means receiving the stream data; accumulating the stream data received by the stream recording/playback means on a stage-by-stage basis; and the stream recording/playback means playing back the stream data.

### EFFECT OF THE INVENTION

In accordance with the near video-on-demand system of the invention, a channel is allocated when a reservation for the viewing of content is made by the viewer, and stream data is transferred when it is time for transferring stream data using the allocated channel. Thus, resources can be saved as compared with the conventional near video-on-demand system in which the stream data for certain content needs to be transferred at all times using a plurality of channels.

In accordance with the near video-on-demand system of the invention, the viewer can pause and then resume the viewing of content.

In accordance with the near video-on-demand system of the invention, channels are not wasted by transmitting stream data when there is no viewer, and the viewer can pause and then resume the viewing of content.

Furthermore, in accordance with the near video-on-demand system of the invention, the viewer can start viewing content at any time after a predetermined time.

Furthermore, in accordance with the near video-on-demand system of the invention, there is no need to make the content stream playback rate and transfer rate the same. The time shift duration in the near video-on-demand system can be freely set, and the channels for the transfer of stream data can be saved.

### BRIEF DESCRIPTION OF THE DRAWINGS

Fig. 1 is a block diagram of the near video-on-demand system according to a first embodiment of the invention.
Fig. 2 is a block diagram of the near video-on-demand system according to a second embodiment of the invention.
Fig. 3 is a block diagram of the near video-on-demand system according to a third embodiment of the invention.
Fig. 4 is a block diagram of the near video-on-demand system according to a fourth embodiment of the invention.
Fig. 5 is a schematic diagram of an example of multicast transfer using the Internet in the near video-on-demand system according to an embodiment of the invention.
Fig. 6 shows a first example of a content transmission time table used in the near video-on-demand system according to an embodiment of the invention.
Fig. 7 shows a second example of the content transmission time table.
Fig. 8 shows a third example of the content transmission time table.
Fig. 9 shows a fourth example of the content transmission time table.
Fig. 10 shows a first example of a transfer database in the near video-on-demand system.
Fig. 11 shows a second example of the transfer database in the near video-on-demand system.
Fig. 12 shows a third example of the transfer database in the near video-on-demand system.
Fig. 13 shows a first example of a content database in the near video-on-demand system.
Fig. 14 shows a second example of the content database in the near video-on-demand system.
Fig. 15 shows a third example of the content database in the near video-on-demand system.
Fig. 16 shows a location for the storage of stage data in the near video-on-demand system.
Fig. 17 shows an example of user management data in the near video-on-demand system.
Fig. 18 shows an operating unit of a remote controller used in the near video-on-demand system.
Fig. 19 shows a content list screen displayed on a display of the near video-on-demand system.
Fig. 20 shows a stand-by screen that is displayed on the display of the near video-on-demand system after content to be viewed is selected and before the viewing of content becomes possible.
Fig. 21 shows a screen displayed on the display of the near video-on-demand system when it has become possible to start the viewing of content.
Fig. 22 shows a screen displayed on the display of the near video-on-demand system upon depressing of a Control button on the remote controller during the viewing of content.
Fig. 23 shows a screen displayed on the display of the near video-on-demand system when a pause process is being carried out.
Fig. 24 shows a screen displayed on the display of the near video-on-demand system for the confirmation as to whether or not the ongoing viewing of content should be cancelled.
Fig. 25 shows an example of the structure of a stream recording buffer within a stream recording/playback means in a stream reception system used in the near video-on-demand system.
Fig. 26 shows a sequence chart of control data that is exchanged between the stream reception system and the stream transmission system in the near video-on-demand system.
Fig. 27 shows a flowchart of the operation carried out by the stream reception system in the near video-on-demand system.
Fig. 28 shows a flowchart of the operation carried out by the stream transmission system in the near video-on-demand system.
Fig. 29 shows a flowchart of the operation carried out by the stream reception system in the near video-on-demand system.
Fig. 30 shows a flowchart of the operation carried out by the stream reception system in the near video-on-demand system.
Fig. 31A shows a flowchart of the operation carried out by the stream transmission system in the near video-on-demand system.
Fig. 31B shows a flowchart of the operation carried out by the stream transmission system in the near video-on-demand system.
Fig. 32 shows a flowchart of the operation carried out by the stream reception system in the near video-on-demand system.
Fig. 33 shows a flowchart of the operation carried out by the stream transmission system in the near video-on-demand system.
Fig. 34 shows a flowchart of the operation carried out by the stream transmission system in the near video-on-demand system.
Fig. 35A shows a flowchart of the operation carried out by the stream reception system in the near video-on-demand system.
Fig. 35B shows a flowchart of the operation carried out by the stream reception system in the near video-on-demand system.
Fig. 36 shows a flowchart of the operation carried out by the stream reception system in the near video-on-demand system.
Fig. 37 shows a flowchart of the operation carried out by the stream transmission system in the near video-on-demand system.
Fig. 38 shows a flowchart of the operation carried out by the stream transmission system in the near video-on-demand system.
Fig. 39A shows a flowchart of the operation carried out by the stream transmission system in the near video-on-demand system.
Fig. 39B shows a flowchart of the operation carried out by the stream transmission system in the near video-on-demand system.
Fig. 40A shows a flowchart of the operation carried out by the stream transmission system in the near video-on-demand system.
Fig. 40B shows a flowchart of the operation carried out by the stream transmission system in the near video-on-demand system.
Fig. 41 shows a flowchart of the operation carried out by the stream reception system in the near video-on-demand system.
Figs. 42(A) to (D) show a sequence chart of control data exchanged between the stream reception system and the stream transmission system of the near video-on-demand system.
Fig. 43 shows a flowchart of the operation carried out by the stream transmission system in the near video-on-demand system.
Fig. 44 shows a flowchart of the operation carried out by stream reception system in the near video-on-demand system.
Figs. 45 (A) to (D) show a sequence chart of control data exchanged between the stream reception system and the stream transmission system of the near video-on-demand system.
Fig. 46 shows a flowchart of the operation carried out by the stream reception system in the near video-on-demand system.
Fig. 47 shows a flowchart of the operation carried out by the stream reception system in the near video-on-demand system.
Fig. 48 shows a flowchart of the operation carried out by the stream reception system in the near video-on-demand system.
Fig. 49 shows a flowchart of the operation carried out by the stream reception system in the near video-on-demand system.
Fig. 50A shows a flowchart of the operation carried out by the stream reception system in the near video-on-demand system.
Fig. 50B shows a flowchart of the operation carried out by the stream reception system in the near video-on-demand system.
Fig. 51 shows a fourth example of the transfer database in the near video-on-demand system.
Fig. 52 shows a flowchart of the operation carried out by the stream transmission system in the near video-on-demand system.
Fig. 53 shows a first example of the near video-on-demand system.
Fig. 54 shows a second example of the near video-on-demand system.
Fig. 55 shows a third example of the near video-on-demand system.
Fig. 56 shows a fourth example of the near video-on-demand system.
Fig. 57 shows a content transmission time table in the conventional near video-on-demand system.
Figs. 58(A) and (B) show a content transmission time table in the conventional near video-on-demand system.
Fig. 59(A) and (B) show a content transmission time table in the conventional near video-on-demand system.

### EXPLANATION OF THE NUMERALS

1, 1A, 1B, 1C, 1D... near video-on-demand system, 0001... stream transmission system, 0002...stream reception system, 0003...stream reception unit, 0004...user interface unit (UI unit), 0005 ... stream transfer means, 0006...control data transfer means, 0007...data transfer means , 0101...stream storage/playback means, 0102...content managing means, 0102a...content database, 0103...stream transmission means, 0104...control data transmission/reception means, 0105...stream transmission managing means, 0105a...transfer database, 0106...user managing means, 0106a...user managing database, 0111...display means (display), 0112...operating means, 0113...stream recording/playback means, 0114... stream reception means, 0115... control data transmission/reception means, 0116... stream reception managing means, 0201... stream encrypting means, 0202... stream decrypting means, 1001... terrestrial digital broadcasting reception terminal, 1002... Internet service provider, 1003...Internet network, 1004...computer for processing bidirectional communications data, 1005...terrestrial digital broadcast station, 1006...radio tower for terrestrial digital broadcast, 1007... satellite broadcast ground equipment, 1008... satellite broadcast satellite, 1009... satellite broadcast reception antenna, 1101...BS digital reception terminal, 1010...CATV broadcast station, 1011...CATV STB, 1201...CATV reception terminal, 1012...provider providing NVOD using the Internet, 1013...computer system in which content is stored and that transmits content data using the Internet, 1014...STB that receives NVOD using the Internet, 1301...reception terminal for displaying stream data via the Internet, 2000...remote controller

### BEST MODE FOR CARRYING OUT THE INVENTION

### (First Embodiment)

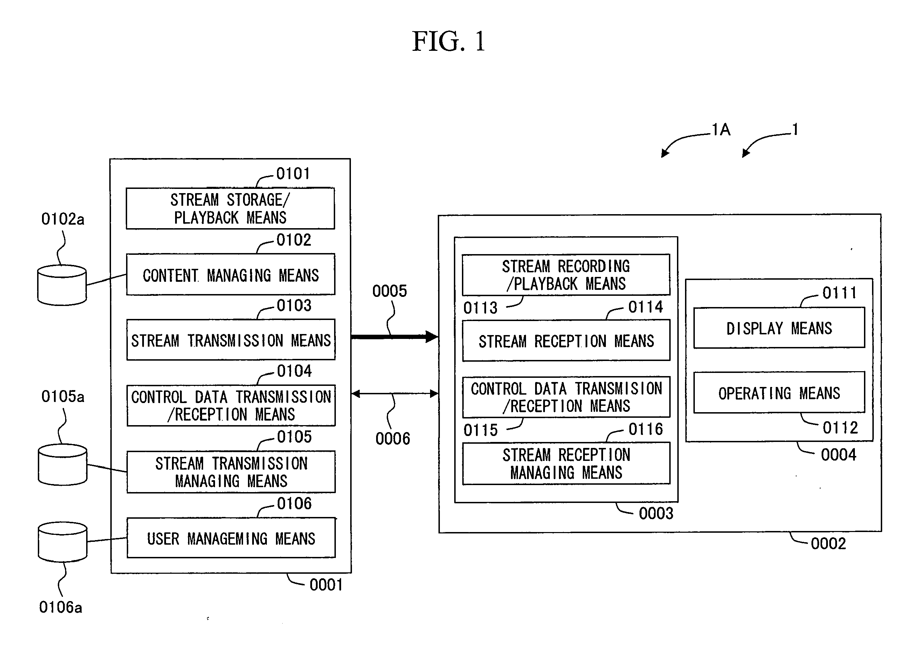

Hereafter, the near video-on-demand system according to a first embodiment of the invention will be described with reference to the drawings. Fig. 1 shows a block diagram of a near video-on-demand system 1 A according to the first embodiment.

In Fig. 1, numeral 0001 designates a stream transmission system, which is a system for transmitting the content in the near video-on-demand system 1A. Numeral 0002 designates a stream reception system that is a user terminal for the reception and playback of the content in the near video-on-demand system 1A.

The stream reception system 0002 includes a stream reception unit 0003 and a user interface unit (to be hereafter referred to as "a UI unit") 0004. The stream reception unit 0003 records received stream data temporarily. It includes a stream recording/playback means 0113 for the playback of the recorded stream data, a stream reception means 0114 for processing the reception of stream data, a control data transmission/reception means 0115 for processing the transmission and reception of control data, and a stream reception managing means 0116 for controlling the reception of stream data based on the transmission/reception of control data or an instruction from the UI unit 0004. The UI unit 0004 includes a display means 0111 for displaying content or a control screen to the user, and an operating means 0112 for performing operations for playing back, pausing, or selecting the content, for example. The display means 0111 is realized with the display of a television receiver or a personal computer or the like. The operating means 0112 is realized with the image adjusting unit, for example, built inside the television receiver or personal computer. The stream data that has been temporarily stored in the stream recording/playback means 0113 is played back by the stream recording/playback means 0113, and displayed by the display means 0111. The stream recording/playback means 0113 is realized with any of a variety of mechanisms for the temporary storage and continuous playback of received content, such as a CPU having a temporary cache. The control data transmission/reception means 0115 is realized with any of a variety of mechanisms for controlling various information necessary for the reception of stream data, such as the CPU built inside a television receiver or a personal computer, for example.

The stream transmission system 0001 includes a stream storage/playback means 0101 for storing a plurality of pieces of content data and playing back designated content, a content managing means 0102 for managing content, a stream transmission means 0103 for transmitting stream data, a control data transmission/reception means 0104 for the transmission/reception of control data, a stream transmission managing means 0105 for managing stream transmission, and a user managing means 0106 for user management. The stream storage/playback means 0101 and the stream transmission means 0103 are provided by a business-purpose server for distributing commercial content, or a civilian server of various kinds, such as a home server.

The content managing means 0102, the stream transmission managing means 0105, and the user managing means 0106 are various data storage media. The content managing means 0102 includes a content database 0102a for storing content data and various information associated therewith. The stream data transmission managing means 0105 includes a transfer database 0105a for storing various information necessary for transfer. The user managing means 0106 includes a user managing database 0106a for storing user information. The details of the data stored in the content database 0102a, the transfer database 0105a, and the user managing database 0106a will be described later.

The control data transmission/reception means 0104 is a mechanism of one kind or another for controlling various information required for the transmission of stream data. It is realized with the CPU, for example, built inside the server. The transfer of stream data from the stream transmission system 0001 to the stream reception system 0002 is carried out by the stream transfer means 0005. The stream transfer means 0005 may be realized with a communications network in a communications system suitable for the continuous transmission of large volumes of data, using, e.g., optical fiber cables or radio waves for terrestrial digital broadcasting. The control data transmitted and received between the stream transmission system 0001 and the stream reception system 0002 is transferred by the control data transfer means 0006. The control data transfer means 0006 is a communications system capable of reliably transmitting various data for controlling the transmission/reception of stream data. It can be realized with an Internet network capable of IP communications, for example.

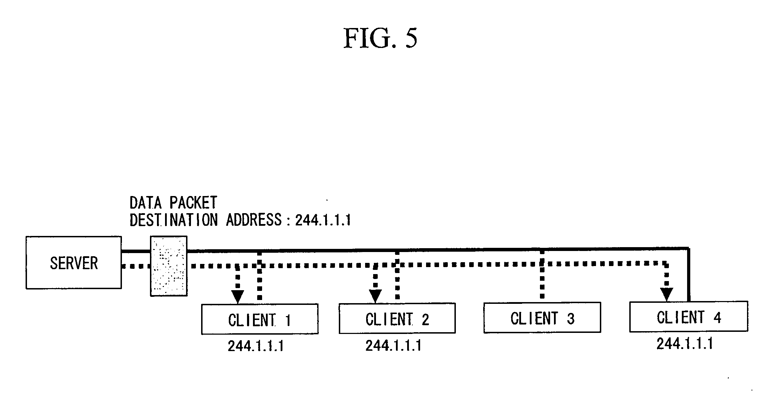

The stream data contains control data for realizing multicast transfer for simultaneously transferring data to a plurality of clients utilizing NVOD. Fig. 5 shows a diagram of multicast transfer. If the multicast address 244.1.1.1 is designated as the destination address for transferring a packet from the server to each client, the packet is delivered to client 1, client 2, and client 4 having the address registered for reception. In order to realize multicasting on the Internet, an IP packet is transferred using a multicast address different from the normal address as the destination address for the IP packet.

While in Fig. 1 the stream transmission system 0001 and the stream reception system 0002 are shown as a pair, there may be more than one of each system.

Content is transferred by the near video-on-demand system 1A shown in Fig. 1 from the stream transmission system 0001 to the stream reception system 0002, where the content can be displayed. The transmission and reception of control data allows the user to pause or resume the viewing of content by an operation.

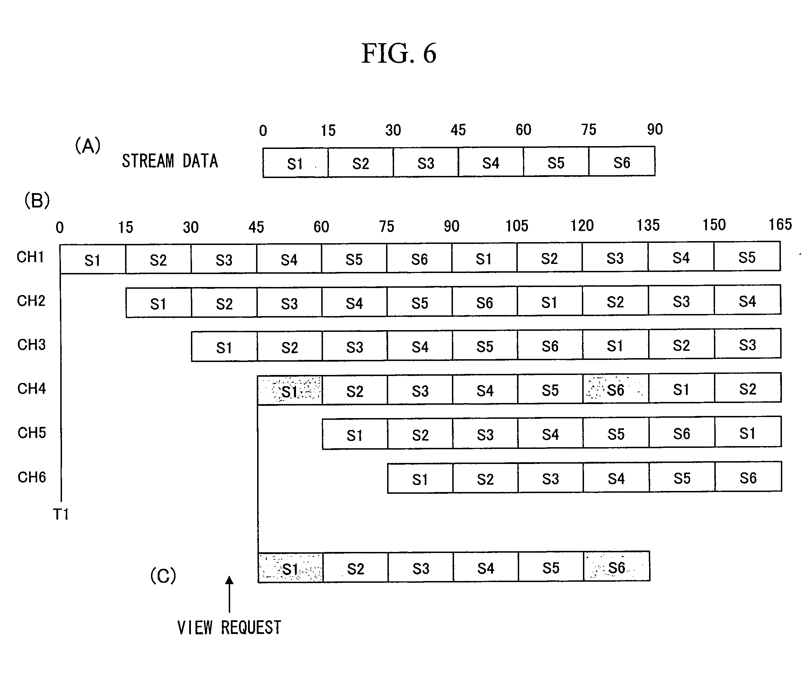

In this near video-on-demand system 1A, the stream data transmission managing means 0105 divides the stream data into a plurality of stages and transfers it in stages over multiple channels with temporal displacements. In the following, examples of such stage division and transfer of stream data will be described with reference to Figs. 6, 7, 8, and 9.

Fig. 6 shows a first example of the process of stage division and transfer. The figure shows a time table (B) of the near video-on-demand system 1A in which the stream data transmission managing means 0105 divides stream data into six stages (A) and transfers the stream data in such stages over multiple channels. As shown in (A), stream data for 90-minutes content is divided into six stages. The duration of time shift is 15 minutes, as shown in (B), and each stage is transferred in 15 minutes. Namely, the playback time of the stage and the NVOD time shift duration are the same, meaning that the playback rate and transfer rate of the stream are identical. In this case, if a certain viewer demands viewing at the time indicated by an arrow in the drawing, the transfer of the stream is initiated at a time 45 minutes later than the reference time T1, using CH4 (C). Because in the illustrated example the viewer does not pause, the individual stages of the stream data are transferred successively.

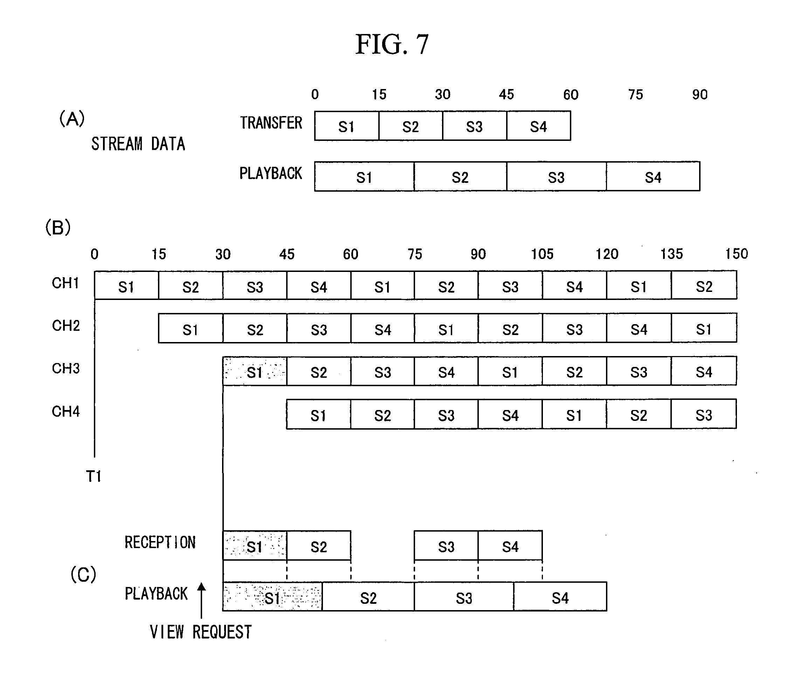

Fig. 7 shows a second example of stage division and transfer. This example involves a time table (B) of the near video-on-demand system 1A whereby the stream data of content is divided into four stages (A), and the stream data is transferred in such stages. As shown in (A), the stream data for 90-minutes content is divided into four stages. The time shift duration is 15 minutes, as shown in (B), and each stage is transferred in 15 minutes. Namely, the stage playback time is 1.5 times the NVOD time shift, meaning that the transfer rate is 1.5 times the playback rate. In this case, if a certain viewer demands viewing at the time indicated by an arrow in the drawing, transfer of the stream is initiated 30 minutes later than the reference time T1, using CH3 (C). The stream is transferred successively between stages 1 and 2. Thereafter, the stream data for stage 3 is not transferred because, for the subsequent time shift duration, the stream data necessary for stage 3 is already stored in the stream recording/playback means 0113 of the stream reception system 0002 (from 60 min to 75 min). In the subsequent time shift duration, stage 3 is transferred, and then stage 4 is further transferred in the following time shift duration.

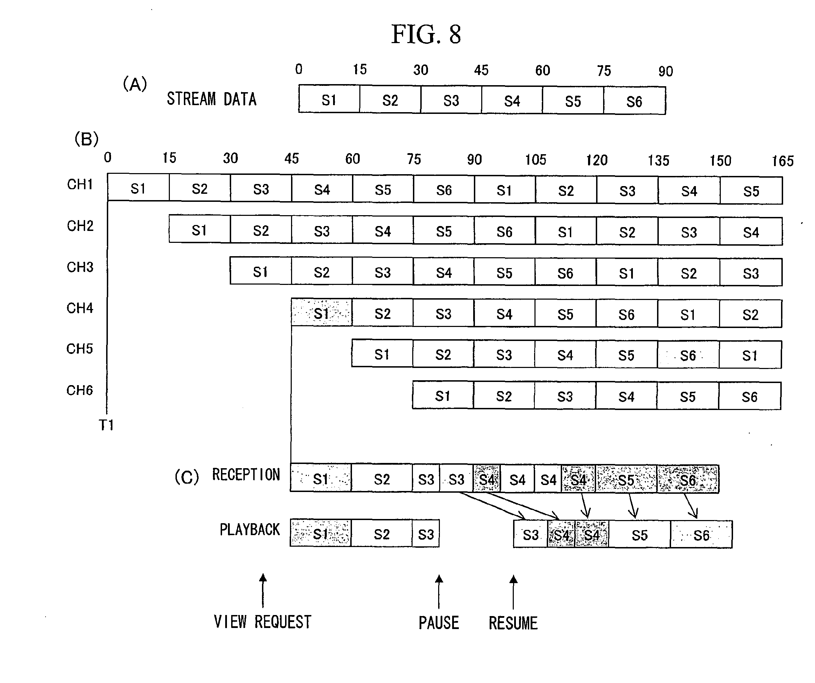

Fig. 8 shows a third example of stage division and transfer. The example involves a time table (B) for the near video-on-demand system 1A whereby the stream data is divided into six stages (A), and the stream data is transferred in such stages. As shown in (A), the stream data for 90-minutes content is divided into six stages. The time shift duration is 15 minutes, as shown in (B), and each stage is transferred in 15 minutes. Namely, the stage playback time and the NVOD time shift are the same, meaning that the playback rate and the transfer rate of the stream are the same. In this case, if a certain viewer demands viewing at the time indicated by an arrow in the drawing, transfer of the stream begins at a time 45 minutes later than the reference time T1 using CH4 (C).

Thereafter, if the viewer pauses at the time indicated by another arrow, which is during the playback of the stream of stage 3, the reception of the stream in that stage continues. In the subsequent stage (stage 4), too, the stream data can be successively recorded by the stream recording/playback means 0113 of the stream reception system 0002, so that the stream data is successively transferred. Recording is terminated when the buffer in the stream recording/playback means cannot record any more stream data.

Upon resumption of playback at the time indicated by the third arrow in the drawing, playback of the stream starts from where the pause occurred, i.e., somewhere along stage 3. Then, from where the next time shift beings (105 min), the channels are switched to CH5 and reception begins of stage 4 of which not all of the stage data has been received. The stream data of stage 4 is recorded succeeding the stream data of stage 4 that has been recorded in the stream recording/playback means 0113. Thereafter, reception of stage data continues using CH5 while the stream data is played back.

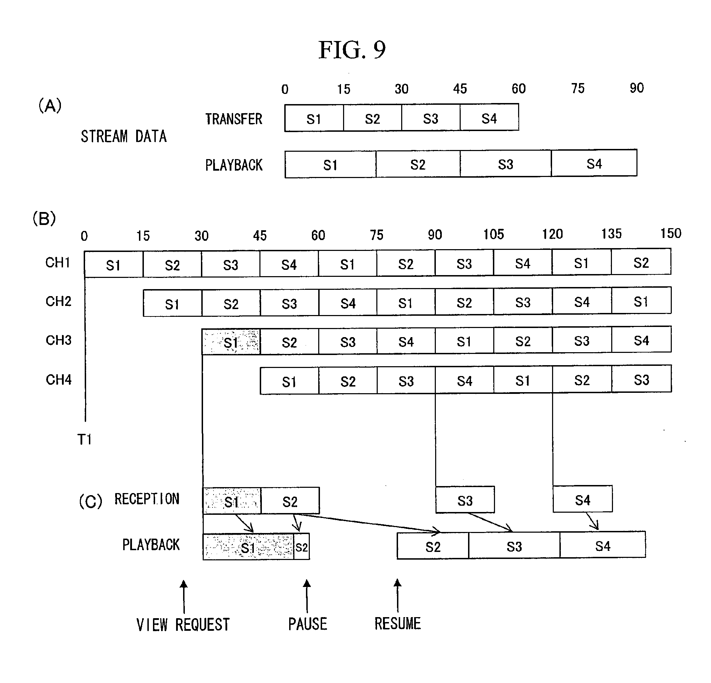

Fig. 9 shows a fourth example of stage division and transfer, showing a time table (B) of the near video-on-demand system 1A whereby the stream data of content is divided into four stages (A), and the stream data is transferred in such stages. As shown in (A), the stream data of 90-minutes content is divided into four stages. The time shift duration is 15 minutes, and each stage is transferred in 15 minutes, as shown in (B). Thus, the stage playback time is 1.5 times the NVOD time shift, meaning that the transfer rate is 1.5 times the playback rate. In this case, if a certain viewer demands viewing at a time indicated by an arrow in the drawing, transfer of the stream begins at a time 30 minutes later than the reference time T1, using CH3 (C). Transfer of the stream is carried out successively between stages 1 and 2.

If the viewer pauses at a time indicated by another arrow during the playback of the stream of stage 2, reception of the stream in that stage continues. In the next stage (stage 3), however, no transfer of the stream data takes place because the stream data required within a single time shift duration is already stored in the stream recording/playback means 0113.

Upon resumption of playback at a time indicated by the third arrow, playback of the stream is resumed from where the pause occurred, i.e., somewhere in stage 2. And reception of the data for stage 3 begins from where the next time shift begins (90 min), using CH1. In the next time shift duration (105 min), since the stream data necessary for that time shift duration has already been stored in the stream recording/playback means 0113, no transfer of stream data is carried out. In the next time shift duration (120 min), the stream data for stage 4 is transferred.

As will be seen from the NVOD time schedules shown in Figs. 6, 7, 8, and 9, the stream recording/playback means 0113 is only required to have a capacity enough to record the stream data that is transferred within a single stage period. The stream data may be recorded in a ring buffer or any other similar means of storage. Before the beginning of each time shift duration, the stream reception system 0002 may let the stream transmission system 0001 know the data of what stage is required and have the stream transmission system 0001 transmit the necessary stage data. In this way, it becomes possible to dynamically change the channel for transfer, or to prevent the transfer of undesired stream. Because it is possible to determine the playback time of content, the number of stages divided, the stage transfer time, and playback time on a content-by-content basis, the time shift duration can be set on a content-by-content basis, for example. In order to allow for simple and efficient transmission and reception of content, the divided stages preferably have an identical size, as shown in Figs. 6 to 9. It is also desirable that individual pieces of content have the same time shift intervals when they are transmitted.

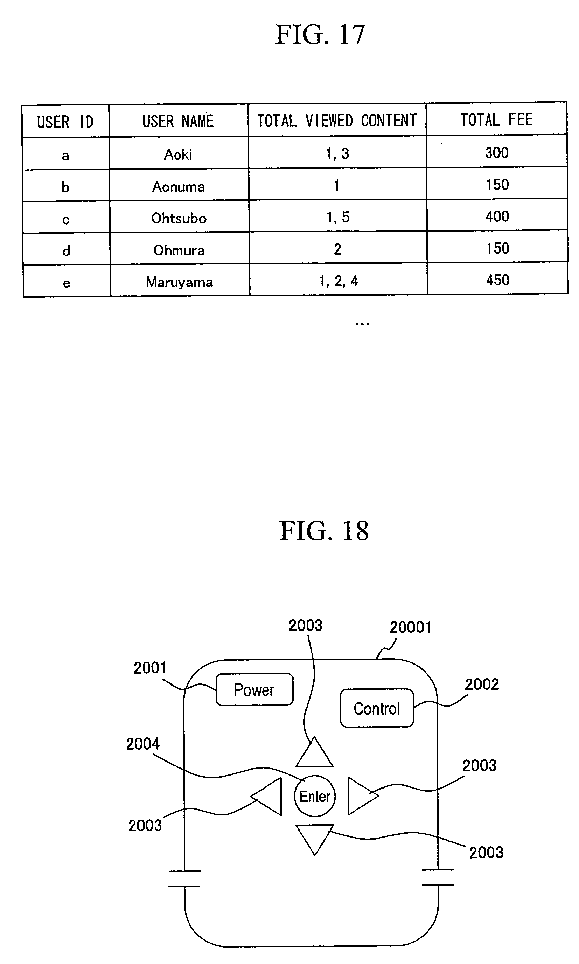

The stream data transmission managing means 0105 includes a transfer database, in which the stream data divided in stages is stored. Examples of the stream data stored in the transfer database are shown in Figs. 17 to 20.

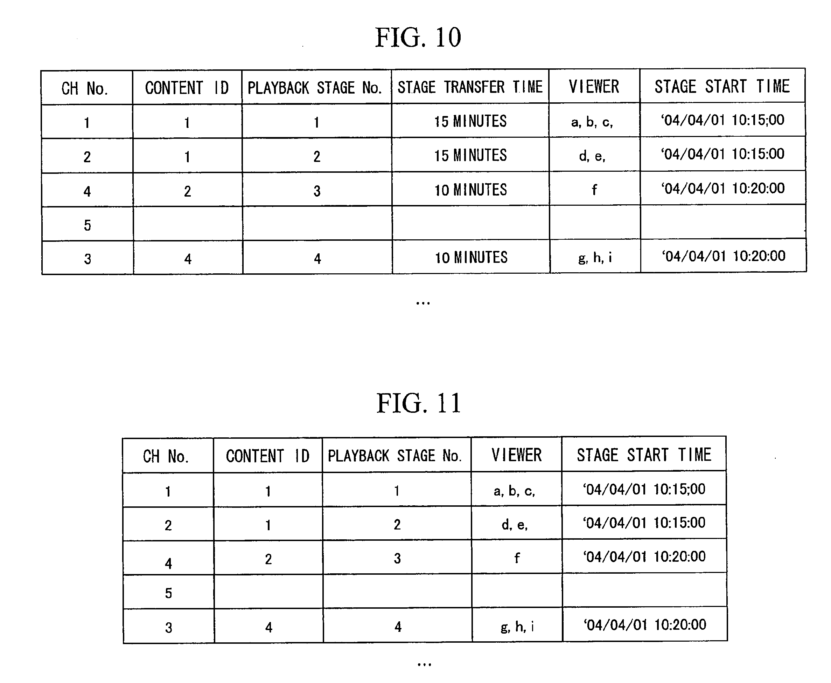

Fig. 10 shows a first example of the transfer database. The transfer database 0105a includes the number of the channel on which a stream is transfered, the ID of the type of content, the number of the stage being played back, stage transmission time, a list of viewers to which the stream is transferred, and the time of beginning of a stage.

In the transfer database 0105a shown in Fig. 10, the content with content ID1 is transferred on channel Nos. 1 and 2. On CH1, stage 1 is transferred, while on CH2, stage 2 is transferred. On CH4, the stream with content ID 2 for stage 3 is transferred. On CH3, the stream with content ID 3 for stage 4 is transferred.

Fig. 11 shows a second example of the transfer database 0105a. The items of the transfer database 0105a are the same as those of the transfer database 0105a shown in Fig 10 with the exception that the stage transfer time is not included. Namely, the items are the number of the channel for the transfer of a stream, the ID of the type of content, the number of the stage being played back, the list of the viewers to which the stream is being transferred, and the stage start time. Management is possible with only the items of Fig. 11 because the stage transfer time can be calculated from the data in the content database.

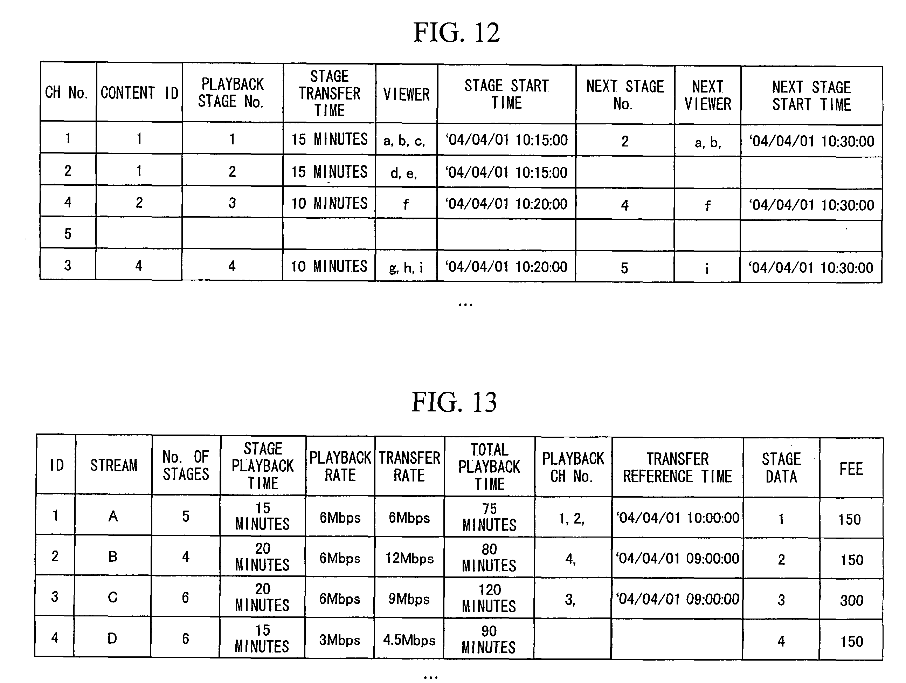

Fig. 12 shows a fourth example of the transfer database 0105a. This transfer database 0105d includes the number of the next stage, a list of viewers who have made a reservation for the transfer of the next stage, and the start time of the next stage, in addition to the items of Fig. 10, i.e., the number of the channel for the transfer of the stream, the ID of the type of content, the number of the stage being played back, the list of viewers to which the stream is being transferred, and the stage start time.

By using the transfer database 0105a shown in Fig. 12, it becomes possible to transfer the stream data successively over the same channel, namely, without switching the channels between stages.

The stream transmission system 0001 includes a content database 0102a as a content managing means 0102 for storing the content information about the stream data that is transferred. In the following, examples of the stream data stored in the content database 0102a are described with reference to Figs. 13 to 15.

Fig. 13 shows a first example of the content database 0102a. The content in this example includes the ID of content, the name of the stream, the number of stages, the stage playback time, playback rate, transfer rate, total playback time, a list of channels on which the content is currently transferred, transfer reference time, a pointer to the information about the location where stream data of each stage is stored, and the fee for the content. In the drawing, the pointer where the information about the location of storage of stage data is stored is indicated in the column for stage data.

For example, in the first line of the content database 0102a shown in Fig. 13, the ID of content A is 1, the number of stages is 5, stage playback time is 15 minutes, playback rate is 6Mbps, transfer rate is 6Mbps, the total playback time is 75 minutes, the channels on which the content is currently being transferred are channels 1 and 2, the transfer reference time is '04/04/04 10:00:00, the pointer where the information about the location of storage of stage data is stored is 1, and the fee is 150 yen.

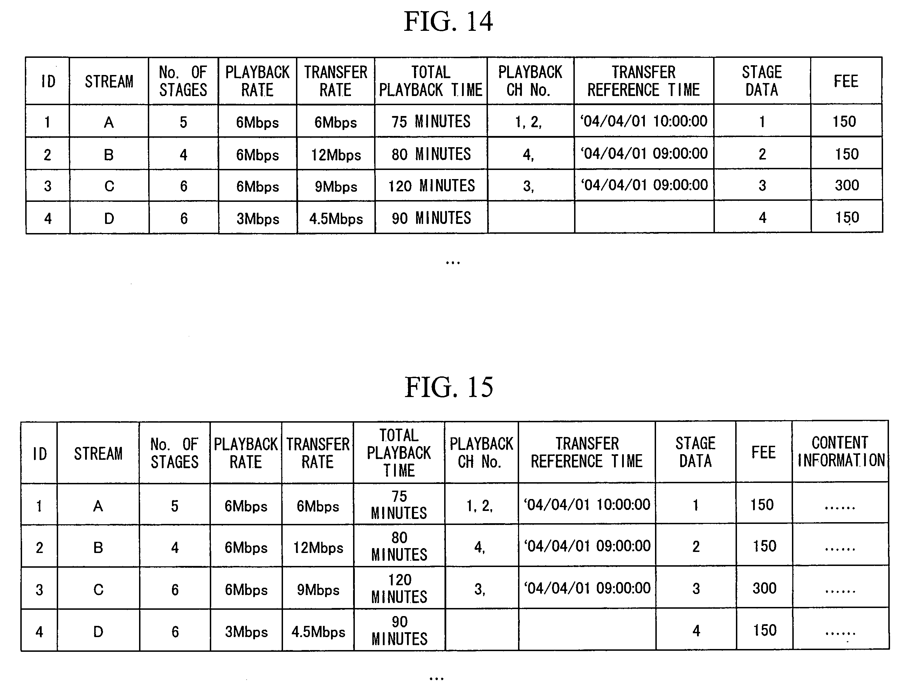

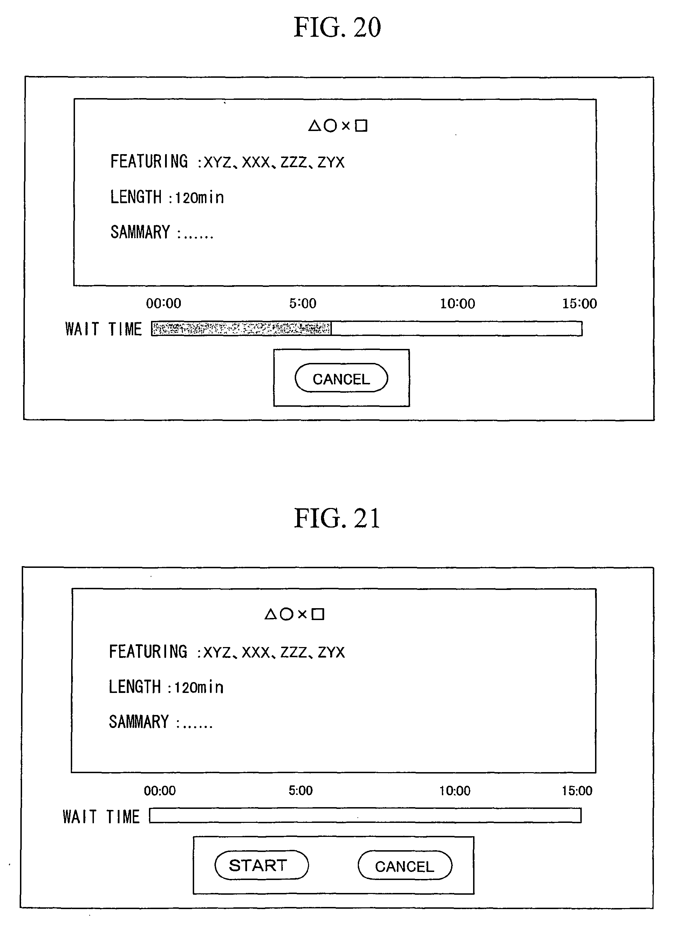

Fig. 14 shows a second example of the content database 0102a. This content database 0102a includes the items of the content database 0102a of Fig. 21 other than the stage playback time; namely, the content ID, the name of the stream, the number of stages, playback rate, transfer rate, total playback time, the list of the numbers of the channels on which the content is currently being transferred, the transfer reference time, the pointer to the information about the location of storage of the stream data of each stage, and the content fee. In the figure, the pointer where the information about the location of storage of stage data is stored is shown in the stage data column. Since the stage playback time can be calculated from the total playback time and the stage number, management is possible with only those items shown in Fig. 14.

Fig. 15 shows a third example of the content database 0102a. This content database 0102a contains items relating to additional content information, in addition to those items contained in the content database 0102a shown in Fig. 13, i.e., the ID of the content, stream name, the number of stages, playback rate, transfer rate, total playback time, a list of the numbers of the channels on which the content is currently being transferred, transfer reference time, a pointer to the information about the location of storage of stream data for each stage, and the content fee. The pointer where the information about the location of storage of stage data is stored is shown in the stage data column. The additional information includes the names of people appearing in the content and its production staff, filmed location, filming conditions, rough story, keywords used for content search or the like, language used, genre of content, and the presence or absence of any subtitles.

The additional information added to the items of the database is useful when the user selects the content while the stream reception system 0002 displays a content list. It can also be used for content search or the sorting of the content list.

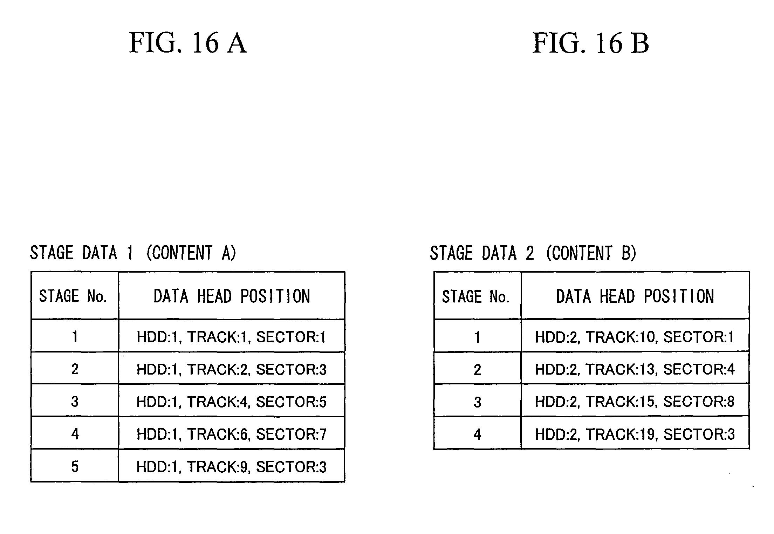

In the content database 0102a shown in Figs. 13 to 15, the stream data for each stage is stored in the pointed memory area. Fig. 16 shows information about the location where individual pieces of content stage data are stored, i.e., the data indicated by the pointer concerning the information about the location in the content database 0102a where the stream data for each stage is stored. In the example shown in Fig. 16, stage data 1 indicates the location where the stream data for each stage of content A is stored, and stage data 2 indicates the location where the stream data for each stage of content B is stored.

The user managing means 0106 of the stream transmission system 0001 includes a user managing database 0106a. Fig. 17 shows an example of the user managing database 0106a. In this user managing database 0106a, the user name, user ID, a list of contents viewed by the user, and the fee for the content viewed by the user are indicated as items of stored data.

For example, the first line of Fig. 17 shows that "Aoki" with user ID "a" has viewed content with IDs 1 and 3 and the total fee is 300 yen.

Meanwhile, the operating means 0112 of the stream reception system 0002 is remotely controlled by a remote controller 2000. Fig. 18 shows a part of an example of the remote controller 2000 used in the stream reception system 0002. This remote controller 2000 includes: a "Power" button 2001 for turning on or off the stream reception system 0002; upper, lower, left, and right arrow-shaped buttons 2003 for moving a focused area; an "Enter" button 2004 for causing the function affixed to the focused area to be executed; and a "Control" button for causing a control dialog to appear when the stream data of content is being displayed. Description of other buttons is omitted herein.

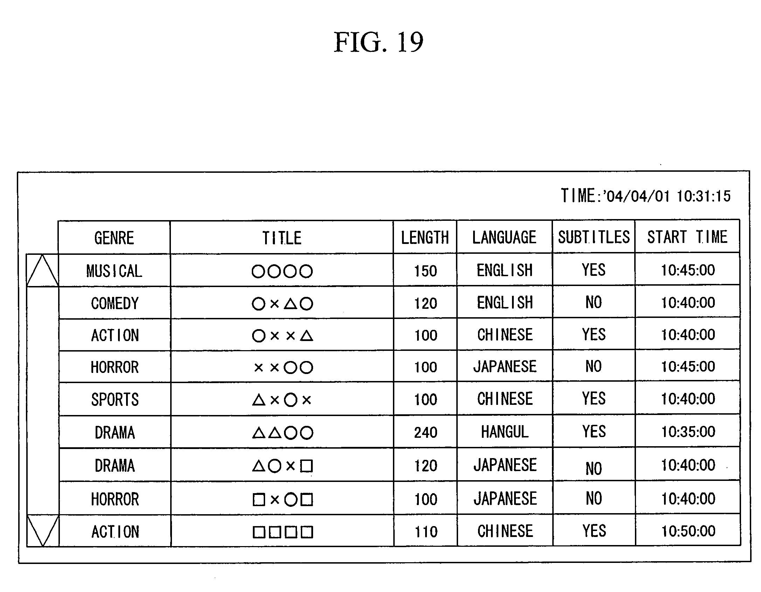

On the display means 0111 of the stream reception system 0002, image information or character information is displayed. Fig. 19 shows an example of the content list displayed on the display 0111 as a display means of the stream reception system 0002. In the present example, the content information that is displayed includes the genre of content, title, content playback time, language used, subtitles, and the nearest time when the content will be played back. In the illustrated example, focus is currently placed on the content "Yellow Handkerchief". By depressing the upper or lower arrow button of the remote controller 2000, the focus can be shifted. By depressing the upper button when the focus is placed at the top of the currently displayed content list, the content list scrolls down to reveal hidden content information that is then focused. Similarly, by depressing the lower button when the focus is placed at the bottom, the focus shifts to the lower content.

If the user makes a request for a list of content provided by the near video-on-demand system 1A, the stream reception system 0002 sends a content list request to the stream transmission system 0001. The stream reception system 0002 then sends back a content list response, with the content list as a parameter, to the stream transmission system 0001. Upon reception of the content list response, the stream reception system 0002 interprets the parameter therein and displays the content list shown in Fig. 19.

Fig. 20 shows an example in which content that is focused on the content list of Fig. 19 is selected, and then detailed information about that content is displayed on the display 0111. In this example, the title of content, people appearing in it, playback time, and rough story are displayed. The screen also includes an indicator of the wait time before the content can be played back, and a "Cancel" button for canceling the viewing of content.

If the Cancel button is selected by operating the remote controller 2000, the display returns to the screen of Fig. 19.

Fig. 21 shows a screen that is displayed on the display 0111 when the time before the content is ready for playback has become zero, i.e., when the playback of content is ready. In this example, the screen shows the content information, an indicator showing that the time before playback of content is ready is zero, the Cancel button for canceling the viewing of the content, and the Start button for starting the viewing of the content, as in the example shown in Fig. 20.

If the Cancel button is selected by operating the remote controller 2000, the screen returns to the screen of Fig. 19. If the Start button is selected by operating the remote controller 2000, viewing of content begins and the stream data for the content is displayed on the display 0111.

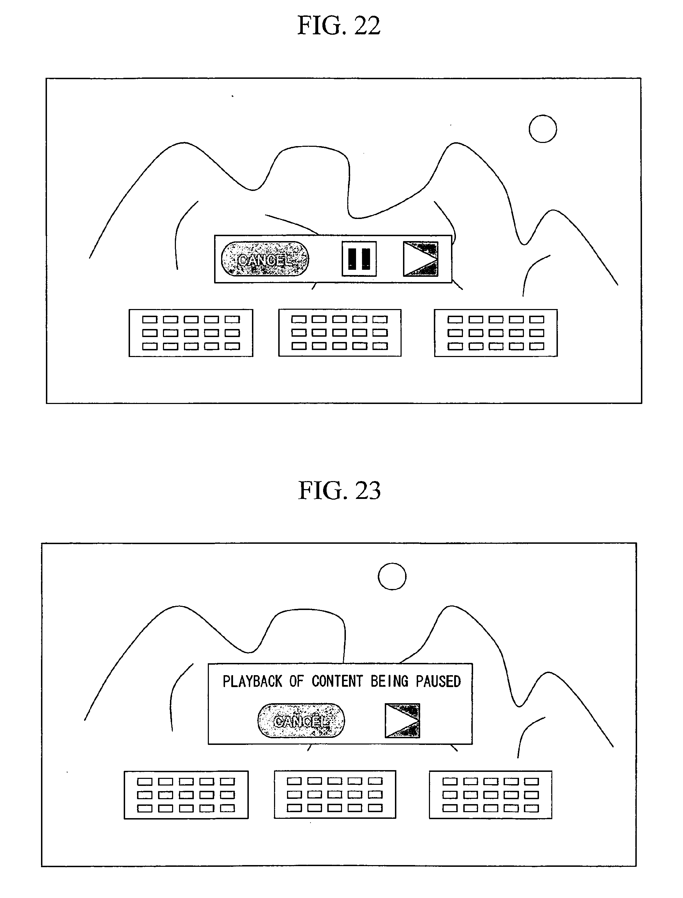

Fig. 22 shows a screen that is displayed on the display 0111 when the Control button on the remote controller 2000 is depressed during the viewing of content. In this example, the screen on which the content is being played back shows the Cancel button for canceling the viewing of content, a pause button for pausing the viewing of content, and a playback button for resuming the viewing of content. In Fig. 22, the central button is the pause button and the right button is the playback button.

At this point, the viewing of content has not yet been paused, and the viewing of content continues. If the playback button is now selected by operating the remote controller 2000, the buttons that have been displayed are erased.

Fig. 23 shows a screen that is displayed if the pause button is selected by operating the remote controller 2000. In this example, in addition to the three buttons shown in Fig. 22, a message appears stating that the viewing of content is currently being interrupted, indicating that this is a view-interrupted state.

If the playback button is now selected by operating the remote controller 2000, the interruption of the viewing of content is overcome and the viewing of content resumes from where it was paused. Further, the message indicating the interruption of the pause and the buttons are also eliminated.

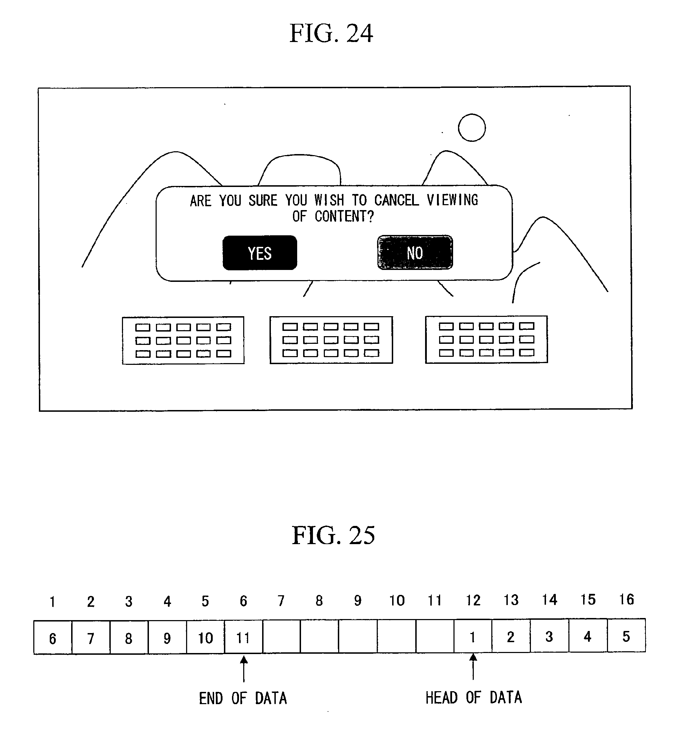

Fig. 24 shows a screen that is displayed when the Cancel button is selected by operating the remote controller 2000 in Fig. 22 or 23. In this example, the buttons shown in Fig. 22 or 23 are eliminated and instead a dialog for the confirmation of the canceling of the viewing of content is displayed. In the illustrated example of the dialog, a message asking if the user is surely canceling the viewing, a "Yes" button for confirming the canceling, and a "No" button for canceling the canceling are displayed. If the "Yes" button is selected by operating the remote controller 2000, the viewing of content is cancelled. If the "No" button is selected, the canceling of the viewing of content is cancelled, and the screen returns to an earlier one. Namely, if the screen has transitioned from Fig. 22, it returns to the screen of Fig. 23, and if it has transitioned from the screen of Fig. 23, it returns to the screen of Fig. 23.

Fig. 25 shows a schematic diagram of a buffer for recording the stream data in the stream recording/playback means 0113 in the stream reception unit 0003 of the stream reception system 0002. In this example, the buffer is array buffer with Nos. 1 to 16, to which index information indicating the start and end of the data is separately attached.

When stream data is successively recorded from the state shown in the drawing, the data is stored in array No. 7 in view of the index information indicating the end of data. Thus, the index information indicating the end would point to 7. When the stream data is read, the data stored in array No. 12 is read in view of the index information indicating the start of the data. The index information indicating the start would therefore be pointing to 13. When the index information has proceeded to the end of the array, it returns to the head of the array, i.e., array No. 1. When the index indicating the head of data immediately follows the index indicating the end of data, this shows that the buffer has stored all of the data.

Through the foregoing operations, it becomes possible to simulate a ring buffer using a buffer having an array data structure as shown in Fig. 25.

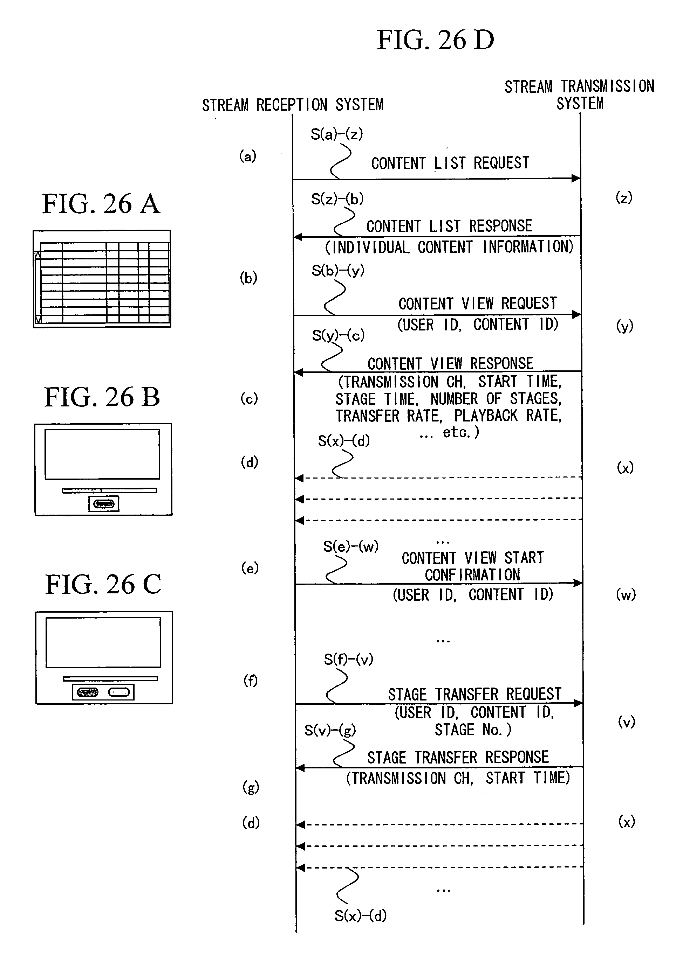

Fig. 26 shows a sequence of control data transmitted and received between the stream reception system 0002 and the stream transmission system 0001, and content stream data that is transferred. The screen images shown to the left of the sequence chart (Figs. 26(A) to 26(C)) are examples of the screens displayed on the display 0111 of the stream reception system 0002 at each stage of the sequence. While in Fig. 26 it is assumed that the control data is transmitted or received in message format, other modes of communication is also possible.

First, in order for the user to select desired content using the near video-on-demand system 1A, the stream reception system 0002 transmits a content list request message to the stream transmission system 0001 (step S(a)-(z)). Upon reception of the content list request message, the stream transmission system 0001 searches the content database 0102a in the content managing means 0102, and transmits a content list response message including a content list as a parameter to the content reception system 0002 (steps S(z)-(b)). The content reception system 0002, upon reception of the content list response message, interprets the parameter and causes the content list to be displayed on the display 0111. While the drawing shows only one content list response message, the response that is transmitted may consist of a plurality of content response messages if there are a number of content lists.

When the user has selected one of the contents in the content list, the stream reception system 0002 transmits a content view request message to the stream transmission system 0001 (step S(b)-(y)). At this time, the user ID and the content ID of the desired content are delivered as parameters. The content transmission system 0001, upon reception of the content view request message from the content reception system 0002, searches the content database 0102a in the content managing means 0102 and the transfer database 0105a in the stream data transmission managing means 0105, and transmits a content view response message to the stream reception system 0002. At this time, the channel number for the transfer of stream, the start time at which viewing can begin, the stage transfer time, the number of stages, transfer rate, playback rate, and content information, for example, are transmitted as parameters (step S(y)-(c)). The stream reception system 0002, upon reception of the content view response message, causes the content information, the indicator of the time before the viewable time, the Cancel button, and the like to be displayed on the display 0111.

When it is time for transferring the content stream, the stream transmission system 0001 transfers the stream data for the initial stage using the designated channel. The stream reception system 0002 receives the stream data, which is recorded in the buffer within the stream recording/playback means 0113 (step S(x)-(d)). The contents of display on the display 0111 are also changed. Namely, the screen now shows the content information, the indicator indicating that the time before the viewable time is zero, the Cancel button, and the Start button.

As the viewer presses the Start button on the operating means 0112, the stream reception system 0002 starts to play back the content, and also transmits a content view start confirming message to the stream transmission system 0001 (step S(e)-(w)). At this time, the user ID of the viewer and the content ID are delivered as parameters. The stream transmission system 0001, upon reception of the content view start confirming message, controls the user managing database 0106a of the user managing means 0106 so as to carry out the charging process for the fees incurred by the viewer for the viewing of content.

The stream reception system 0002, as the time shift of the stage that is currently being received nears an end, transmits a stage transfer request message to the stream transmission system 0001 so as to request the stream data for the stage required by the next time shift (step S(f)-(v)). At this time, the content ID and the stage number are transferred as parameters. The stream transmission system 0001, upon reception of the stage transfer request message, operates the content database 0102a and the transfer database 0105a so as to send back a stage transfer response message (step S(v)-(g)). At this time, the channel number for the transmission of the stream data and the start time are delivered as parameters.

Thereafter, the transfer of the stream data for the designated stage content begins as described above (step S(x)-(d)).

The above described transmission and reception of control data and stream data allows the viewer to view content using the near video-on-demand system 1A.

In the following, the details of signal processing performed in the stream transmission system 0001 and the stream reception system 0002 before and after each of the foregoing steps will be described with reference to the drawings.

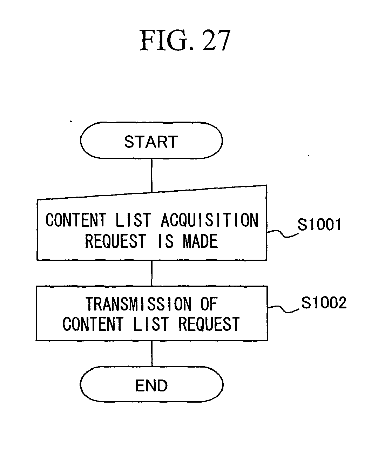

Fig. 27 shows a flowchart of the process of the viewer requesting a content list provided by the near video-on-demand system 1A in the stream reception system 0002. Specifically, the flowchart shows the processes performed by the stream reception system 0002 at point of time (a) in Fig. 26.

First, in step S1001, the viewer operates the remote controller 2000 and makes a content list acquisition request. In step S1002, the stream reception system 0002 transmits a content list request message to the stream transmission system 0001.

Through these steps, in response to a request by the viewer for a list of contents provided by the near video-on-demand system 1A, the content reception system 0002 can request that the content transmission system 0001 send a list of content provided by the near video-on-demand system 1A.

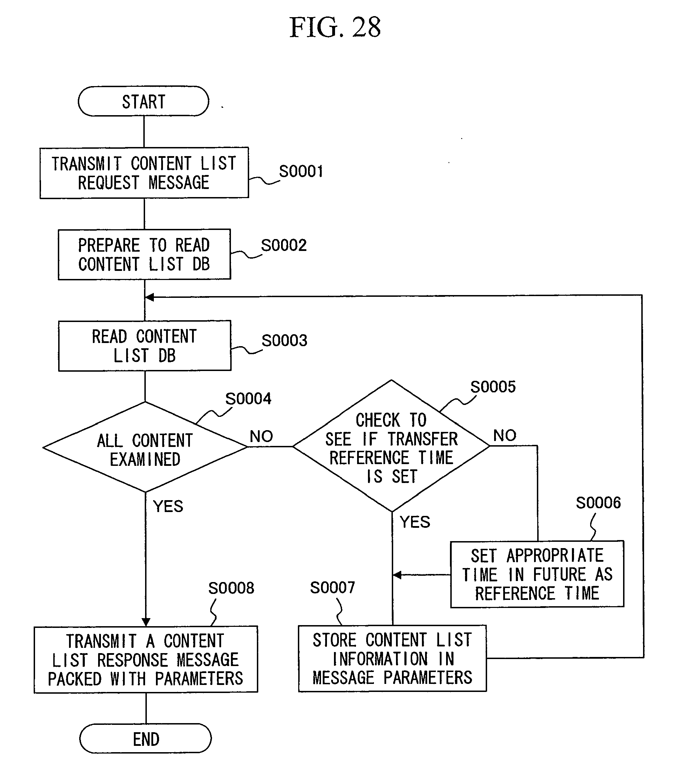

Hereafter, reference is made to Fig. 28, and the process carried out upon reception by the stream transmission system 0001 of the content list request message from the stream reception system 0002 is described. Fig. 28 shows a flowchart of the process carried out by the stream transmission system 0001 at point in time (z) in Fig. 26.

First, in step S0001, upon reception of a content list request message from the stream reception system 0002, the stream transmission system 0001, in step S0002, prepares for the reading of the content database 0102a. In step S0003, the system reads the data for a piece of content from the content database 0102a. In step S0004, it is checked whether all of the contents in the content database 0102a have been examined. If not all of the contents have been examined ("No"), step S0005 is carried out.

In step S0005, the channel that is playing back the content is examined based on the data of content that has been read, and it is checked to see if that content is being played back. If it is not set ("No"), step S0006 is carried out. If it is set ("Yes"), step S0007 is carried out.

In step S0006, an appropriate time in the future is set as a reference time. Then, in step S0007, the content information is stored in the parameters of the message. Step S0003 is then carried out.

If in step S0004 it turns out that all of the contents have been examined ("Yes"), step S0008 is carried out. In step S0008, a content list response message with a pack of parameters that are to be added is transmitted to the stream reception system 0002.

Through these processes, it becomes possible, upon reception of a content list request message from the stream reception system 0002, for the stream transmission system 0001 to transfer a content list to the stream reception system 0002.

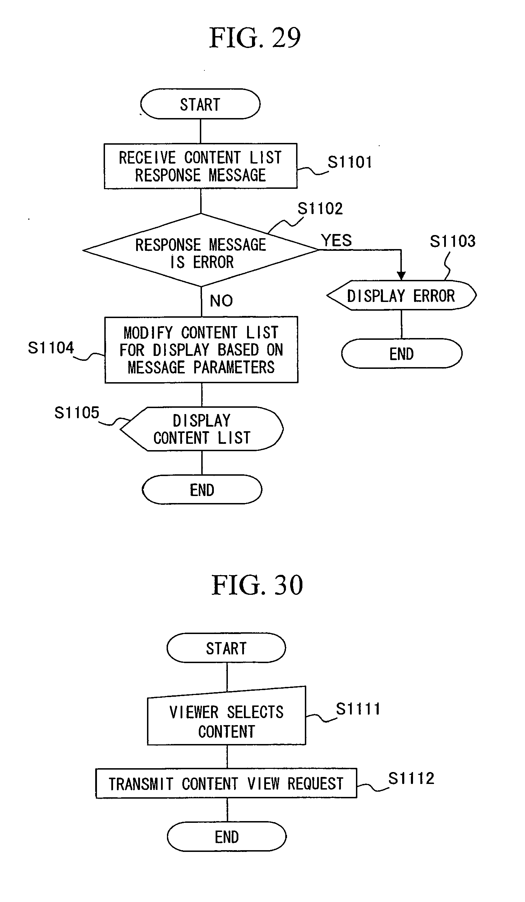

Fig. 29 shows the process upon reception by the stream reception system 0002 of a content list response message from the stream transmission system 0001. Specifically, Fig. 29 is a flowchart of the process performed by the stream reception system 0002 at a point in time (b) in Fig. 26.

First, in step S1101, the stream reception system 0002 receives a content list response message from the stream transmission system 0001. It is then checked in step S 1102 whether the response message is an error. If it is an error ("Yes"), step S 1103 is carried out whereby the occurrence of an error is indicated on the display 0111 so as to alert the viewer. If it is found in step S 1102 that the response message is not an error ("No"), step S 1104 is carried out whereby the content list is obtained from the parameters of the message and modified such that it can be displayed on the display 0111. Then, in step S 1105, the content list is displayed on the display 0111.

Through these processes, it becomes possible, as shown in Fig. 26, to display the list of content (Fig. 19) provided by the near video-on-demand system 1A that has been transmitted from the stream transmission system 0001 on the display 0111 of the stream reception system 0002 for the viewer.

Fig. 30 is a flowchart of the process that is carried out upon selection by the viewer of desired content from the content list displayed on the display 0111. Specifically, the flowchart shows the process performed by the stream reception system 0002 at point in time (b) in Fig. 26.

In step S1111, the viewer selects from the list of content provided by the near video-on-demand system 1A that is displayed on the display 0111, desired content by operating the remote controller 2000. In step S1112, the stream reception system 0002 transmits a content view request message to the stream transmission system 0001.

Through these steps, it becomes possible for the stream reception system 0002, upon selection by the viewer of desired content, to make a request for the viewing of the desired content to the content transmission system 0001.

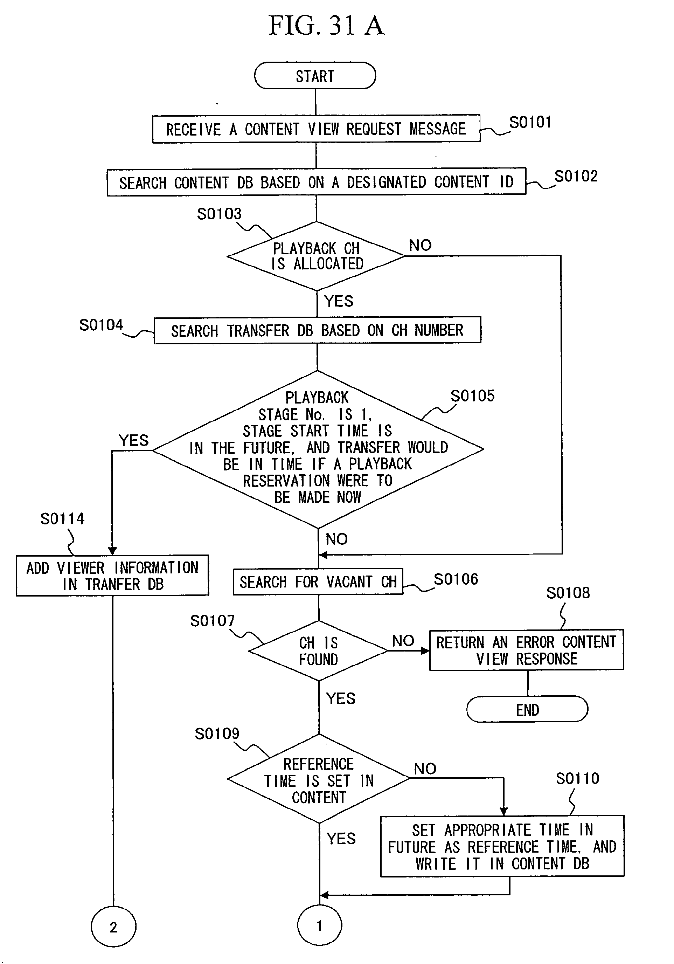

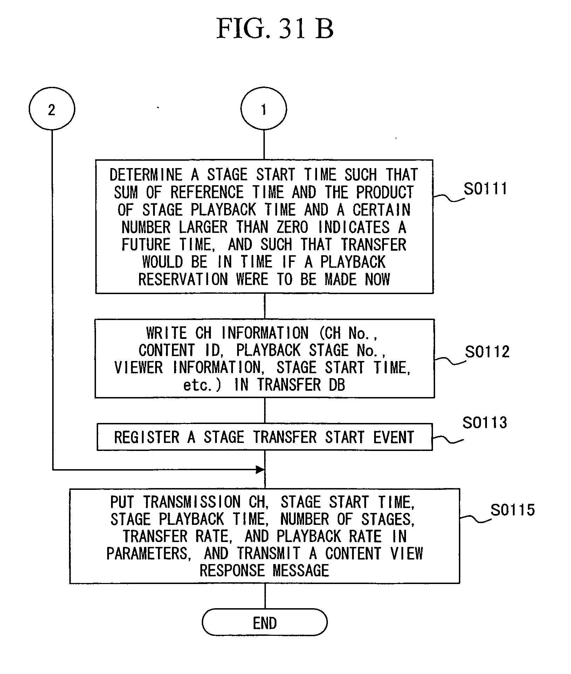

Figs. 31 A and 31 B show the process performed upon reception by the stream transmission system 0001 of a content view request message from the stream reception system 0002. Specifically, Figs. 31A and 31B show a flowchart of the process that is carried out by the stream transmission system 0001 at a point in time (y) in Fig. 26.

First, in step S0101, the stream transmission system 0001 receives a content list request message from the stream reception system 0002. In step S0102, the system searches the content database 0102a in the content managing means 0102 using the content ID designated by the parameters of the message. In step S0103, based on the content information retrieved, it is checked to see if a channel is currently allocated to that content. If a channel is allocated ("Yes"), in step S0104 the transfer database 0105a in the stream transmission means 0103 is searched based on the channel number. In step S0105, it is checked if, in each channel of the transfer database 0105a that has been searched, the number of the playback stage is 1, if the stage start time is some future time, and if the transfer of a stage would be in time if a playback reservation were to be made now. If it is determined that the transfer would not be in time ("No"), step S0106 is carried out.

On the other hand, if in step S0103 it is determined that no channel has been allocated ("No"), the process proceeds to step S0106 and the transfer database 0105a is searched for a vacant channel. In step S0107, it is checked to see if any vacant channel has been found. If not ("No"), step S0108 is carried out whereby an error content view response is sent back to the stream reception system 0002 because there is no vacant channel and the transfer of a stream is impossible, and the routine ends.

If in step S0107 a vacant channel is found ("Yes"), the process proceeds to step S0109 where it is checked to see if a reference time is set in the content information in the content database 0102a. If not ("No"), step S0110 is carried out whereby an appropriate time in the future is set as the reference time and written in the content database 0102a, followed by step S0111.

On the other hand, if it is determined in step S0109 that a reference time is set ("Yes"), the process proceeds to step S0111 wherea stage playback start time is determined such that the sum of the reference time and the product of the stage playback time and a constant number greater than zero is ahead of the current time and that transfer would be in time if a stage playback reservation were to be made now. In step S0112, information about the channel that is to be used, such as the channel number, content ID, playback stage number, viewer information, and stage start time, is written in the transfer database 0105a. Thereafter, in step S0113, a stage transfer start event is registered. This event is issued when it is the stage transfer start time so as to cause the stream transmission means 0103 to start transmitting the stream data for the designated stage. This is followed by step S0115.

If in step S0105 the result of determination is "Yes", step S0114 is carried out whereby the viewer who made the reservation is added to the viewer information for the channel in the transfer database 0105a. In step S0115, a content view response message is transmitted to the stream reception system 0002, using the channel number, stage start time, stage playback time, the number of stages, transfer rate, playback rate, and so on as parameters.

Through these processes, the stream transmission system 0001, upon reception of the content view request message from stream reception system 0002, can make a reservation for the stream transfer of the designated content.

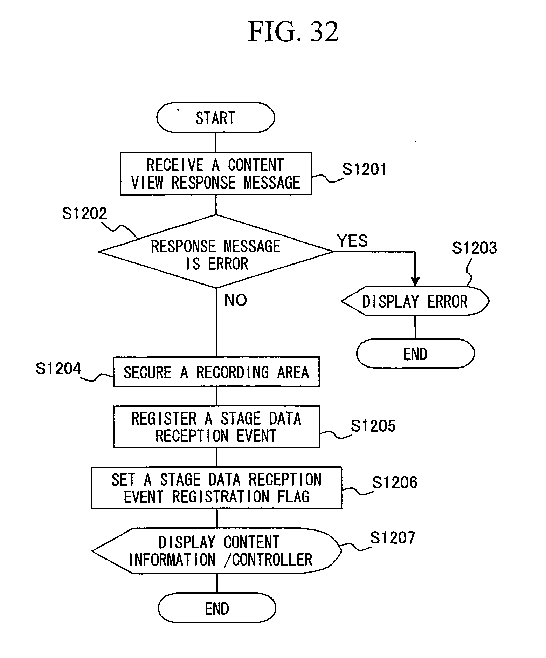

Fig. 32 shows the process performed in the stream reception system 0002 upon reception of the content view response message from the stream transmission system 0001. Specifically, Fig. 32 shows a flowchart of the process performed by the stream reception system 0002 at the point in time (c) in Fig. 26.

In step S1201, the stream transmission system 0001 receives a content list request message from the stream reception system 0002. In step S1202, it is checked to see if the response message is an error.

If the response message is an error ("Yes"), step S1203 is carried out whereby the fact that an error has occurred is displayed on the display 0111 so as to alert the viewer. If in step S1202 it is determined that the response message was not an error ("No"), step S1204 is carried out whereby an area for recording the stream data is ensured in the stream recording/playback means 0113 of the stream reception system 0002. In step S1205 the stage data reception event is registered. In step S1206, a stage data reception event registration flag is set. In step S1207, the display 0111 displays the information about the content that is about to be viewed, the indicator of the time before viewing of the content becomes possible, and the button for cancelling the viewing of content.

Through these processes, the stream reception system 0002 can process the reception of the content view response message transmitted from the stream transmission system 0001, and make preparations for the viewing of content.

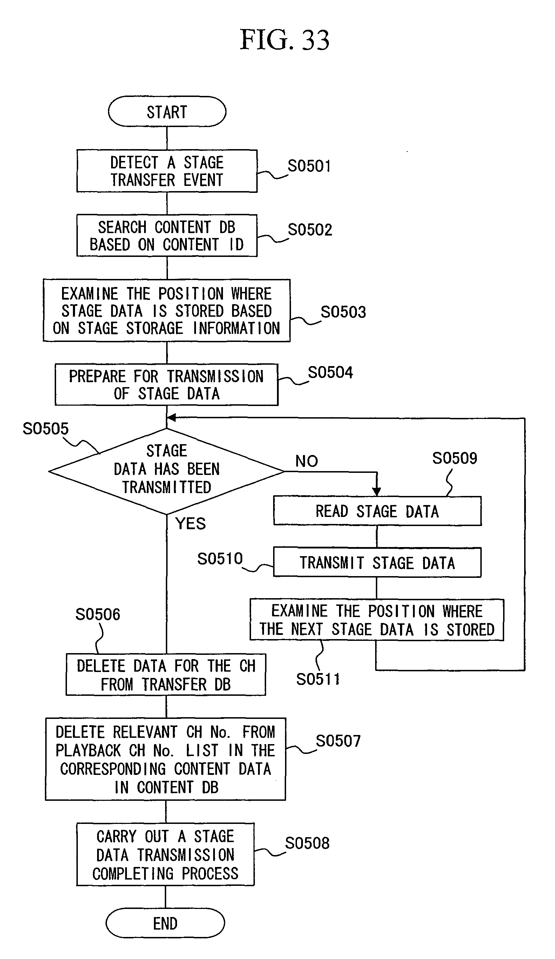

Fig. 33 shows the process carried out upon occurrence of a stage transfer event that the stream transmission system 0001 has registered by itself. Specifically, Fig. 33 is a flowchart of the process carried out by the stream transmission system 0001 at the point in time (x) in Fig. 26. In this flowchart, the transfer database 0105a shown in either Fig. 10 or 11 is used.

The stream transmission system 0001 first detects the stage transfer event in step S0501 and acquires the parameters or the like. In step S0502, the system searches the content database 0102a in the content managing means 0102 using the content ID designated by the event parameters. In step S0503, the system tracks the pointer to the information about the location in the content database 0102a where the stream data for each stage is stored, and determines the position of the memory area where the stream data is stored, based on the stage storage information. In step S0504, preparations for the transmission of the stage stream data are made. In step S0505, it is checked to see if the stage stream data has been transferred.

If the transmission of the stream data has been transferred ("Yes"), the stream transmission system 0001 then carries out step S0506 whereby the information about the channel is deleted from the transfer database 0105a. In step S0507, the channel number is deleted from the playback channel number list in the designated content data in the content database 0102a. In step S0508, the process for completing the transmission of the stage stream data is carried out.

On the other hand, if in step S0505 it is determined that the transfer of the stream data has not been completed ("No"), the stream transmission system 0001 then reads the stream data from the memory area where the stage stream data is stored in step S0509. In step S0510, the system transmits the stream data read from the memory area to the stream reception system 0002. In step S0511, the position of the memory area where the next stage stream data is stored is determined, followed by the execution of step S0505 again.

Through these processes, the stream transmission system 0001 can transfer the stage stream data to the stream reception system 0002.

The flowchart of Fig. 33 includes the detection of a stage transfer event and the transfer of stage data. However, the flowchart portion for the transfer of stage data (S0503 to S0511) may be processed by a separate task, process, or thread. In this case, a task, process, or thread for transferring stage data may be generated or activated, or a message may be transmitted to or an interruption may be caused in the halted task, process, or thread for transferring stage data so as to restart such task, process, or thread.

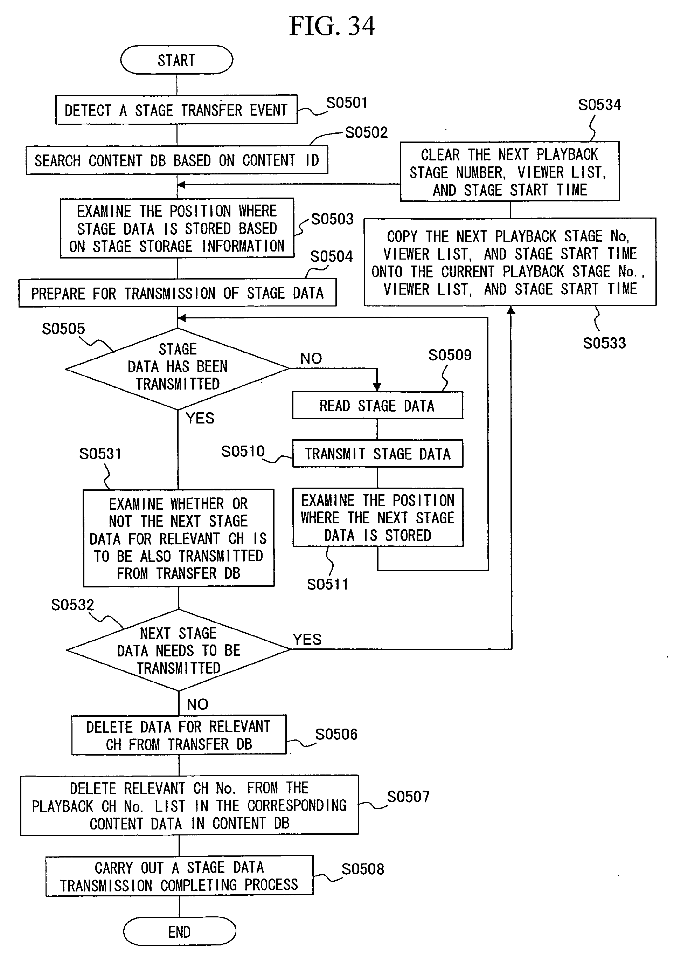

Fig. 34 shows the process carried out upon occurrence of a stage transfer event that the stream transmission system 0001 has registered by itself. Specifically, Fig. 34 is a flowchart of the process that is carried out by the stream transmission system 0001 at the point in time (x) of Fig. 26 instead of the process carried out in Fig. 33. In this flowchart, the transfer database 0105a shown in Fig. 12 is used. In the process of Fig. 33, there was the possibility that the channel might be changed when transferring stages successively for a single piece of content. In the process of Fig. 34, the same channel is used for transferring the stream data when transferring stages successively.

In Fig. 34, the processes identical to those shown in Fig. 33 are designated with the same step numbers, and their descriptions are omitted herein.

In step S0505 if the transfer of all of the stage stream data has been completed ("Yes"), step S0531 is carried out. In step S0531 it is determined whether or not the next stage stream data should also be transmitted from the transfer database 0105a on the same channel. In step S0532, it is checked to see if the next stage stream data also needs to be transmitted. If not ("No"), step S0506 is carried out.

If in step S0532 it is determined that there is such need ("Yes"), step S5033 is carried out whereby the next playback stage number, viewer list, and stage start time are copied onto the current playback stage number, viewer list, and stage start time, based on the channel information from the transfer database 0105a. Then in step S0534, the next playback stage number, the next viewer list, and the next stage start time are cleared, followed by step S0503.

Through these processes, the stream transmission system 0001 can transfer the stage stream data to the stream reception system 0002. It can also transfer the stream data using the same channel when transferring the stage stream data successively for a single content.

The flowchart of Fig. 34 includes the detection of a stage transfer event and the transfer of stage data. However, the flowchart portion for the transfer of stage data (S0503 to S0511 and S0531 to S0534) may be processed by a separate task, process, or thread. In this case, a task, process, or thread for transferring stage data may be generated or activated, or a message may be transmitted to or an interruption may be caused in the halted task, process, or thread for transferring stage data so as to restart such task, process, or thread.

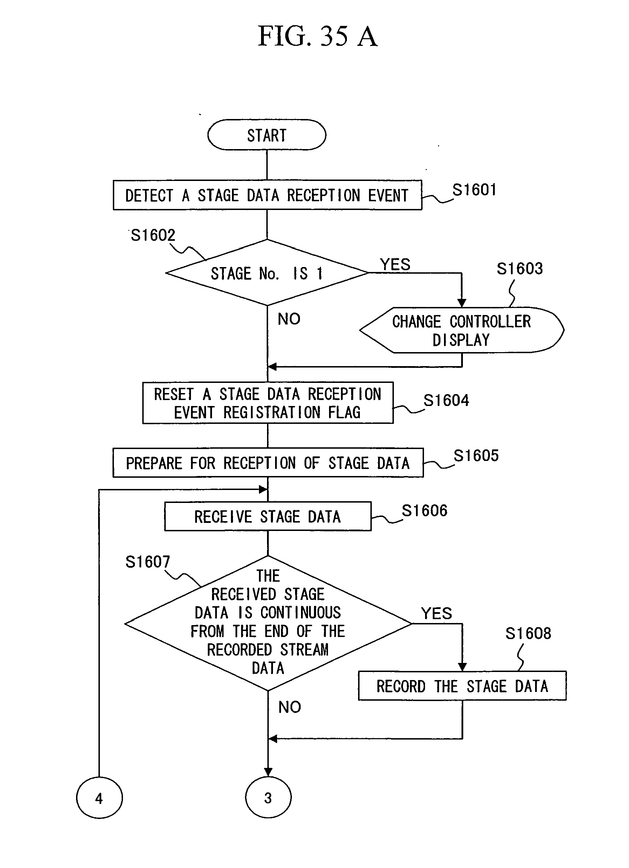

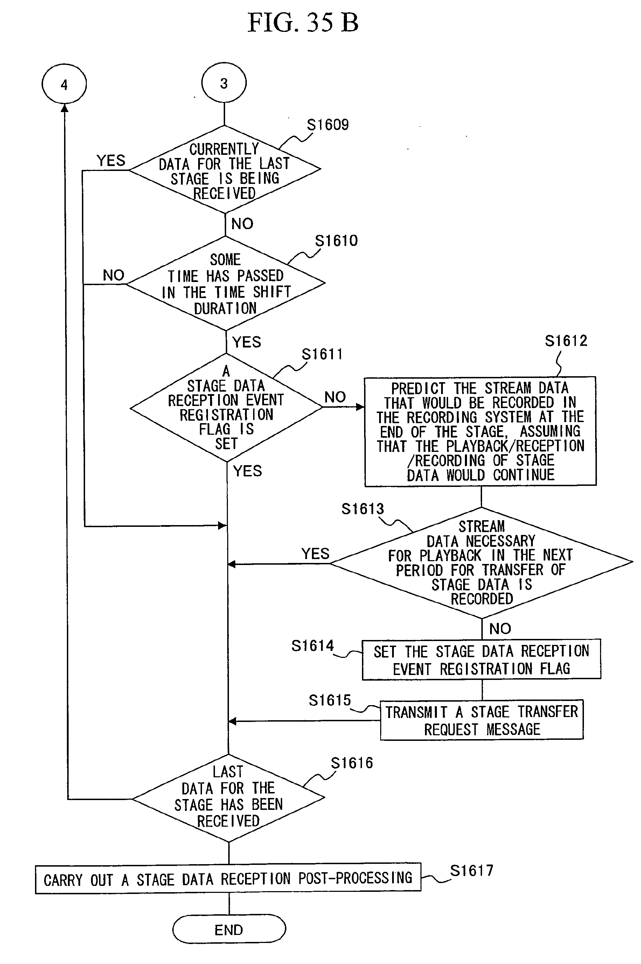

Figs. 35A and 35B show the process carried out upon detection of a stage data reception event in the stream reception system 0002. Specifically, Figs. 35A and 35B show a flowchart of the process carried out by the stream reception system 0002 at the point in time (d) in Fig. 26.

Upon detection by the stream reception system 0002 of a stage data reception event in step S 1601, it is determined in step S1602 if the number of the stage to be received is 1. If the stage number is 1 ("Yes"), the controller display on the screen is modified in step S1603 so as to display a button for starting the viewing of content, in addition to the information about the content to be viewed, the indicator of the time before the viewing of content is possible, and the button for canceling the viewing of content, which are already on the display 0111 (namely, the screen of the display 0111 transitions from the one shown in Fig. 20 to the one shown in Fig. 21). Then, step S1604 is carried out as will be described later. If in step S1602 it is determined that the stage number is not 1, S1603 is not carried out and instead the process proceeds to step S1604, which will be described below. In step S1604, the stage data reception event registration flag is reset. In step S1605, preparations for the reception of stage stream data are made, followed by the reception of the stage stream data. In step S1607, it is determined whether or not the received stage stream data is the last continuation data of the stream data recorded in the stream recording/playback means 0113. If it is ("Yes"), step S1608 is carried out to record the received stream data using the stream recording/playback means 0113, and the process then proceeds to S1609, which will be described later. On the other hand, if it is determined in step S1607 that the received data is not the last continuation data ("No"), the process proceeds to step S1609, which will be described later.

In step S1609, it is determined whether or not the currently received stage is the final stage. If it is ("Yes"), step S 1616 is carried out.

If it is determined in step S1609 that it is not the final stage ("No"), it is checked in step S1610 whether or not some time has passed in the current time shift duration. If not ("No"), step S 1616 is carried out.

In step S1610, if it has passed ("Yes"), it is checked in step S 1611 whether or not the stage data reception event registration flag is set. If not ("No"), it is estimated in step S1612, assuming that the reception of stage stream data and the playback of stream data would continue, how much of the stream data would be recorded in the stream recording/playback means 0113 at the end of the stage. Then, in S1613, it is checked whether or not data necessary for the playback of the stream data during the next period for transferring the stage stream data is recorded in the stream recording/playback means 0113. If no such data for the playback of the stream data is recorded ("No"), the stage data reception event registration flag is set in step S1614. In step S1615, the stage transfer request message for the next stage is transmitted to the stream transmission system 0001, which is followed by S 1616.

If it is determined in step S1613 that such data is recorded ("Yes"), step S 1616 is carried out.

If in step S1611 the stage data reception event registration flag is set ("Yes"), step S 1616 is carried out.

It is then checked in step S1616 whether or not the final stream data for the stage has been received. If it has been ("Yes"), a post-processing is carried out in step S 1617 for the reception of the stage stream data. On the other hand, if it is determined in step S1616 that no such final stream data has been received ("No"), step S1606 is carried out.

Through these processes, the stream reception system 0002 receives the stage stream data and, if necessary, records the stream data in the stream recording/playback means 0113.

The flowchart of Fig. 35 includes the detection of a stage data reception event and the reception/recording of the content stream data. However, the flowchart portion for the reception/transmission of content stream data (S1605 to S1617) may be processed by a separate task, process, or thread. In this case, a task, process, or thread for transferring stage data may be generated or activated, or a message may be transmitted to or an interruption may be caused in the halted task, process, or thread for transferring stage data so as to restart such task, process, or thread.

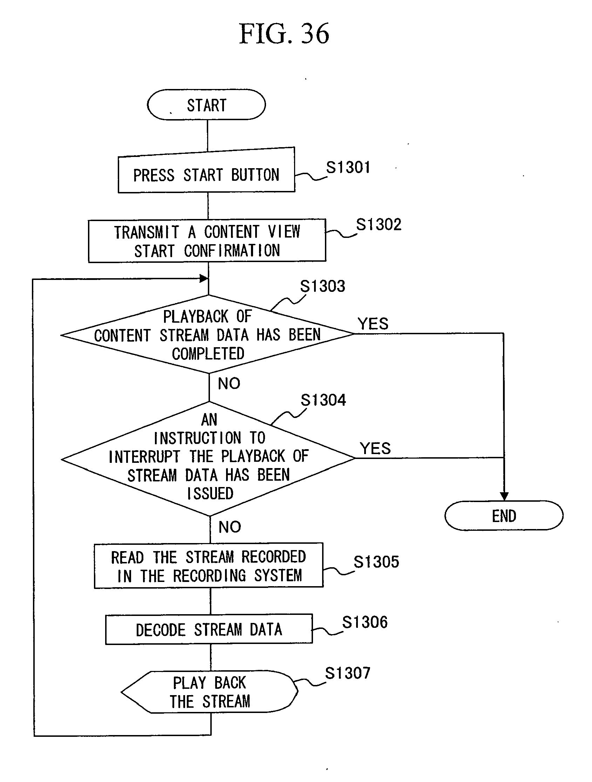

Fig. 36 shows the process carried out in the stream reception system 0002 for playing back a stream upon depressing of the start button by the viewer for stream playback after the viewing of the stream is enabled. Specifically, Fig. 36 is a flowchart of the process carried out by the stream reception system 0002 at the point in time of (e) in Fig. 26.

In step S1301, the viewer selects the start button for starting the viewing of the content displayed on the display 0111. In step S1302, the stream reception system 0002 transmits a content view start confirming message to the stream transmission system 0001. In step S1303, it is checked whether or not the playback of content stream data has been completed. If it has been completed ("Yes"), the process ends.

If it is determined in step S 1303 that the playback has not been completed ("No"), step S1304 is carried out. In step S1304, it is checked to see if an instruction for interrupting the playback of stream data has been issued. If it has been ("Yes"), the process comes to an end.

If in step S1304 it is determined that no such instruction has been issued ("No"), step S1305 is carried out. In step S1305, the recorded stream data is read by the stream recording/playback means 0113. Then, in step S1306, decoding is carried out in order to display the stream data that has been read on the display 0111. In step S 1307, the stream data thus decoded is played back and displayed on the display 0111, and then step S1303 is carried out.

Through these processes, the viewing of content is started upon the viewer operating the button for starting the viewing of content.

The flowchart of Fig. 36 includes the selection of the start button by the viewer and the playback of content stream data. However, the flowchart portion for the playback of content stream data (S1303 to S1307) may be processed by a separate task, process, or thread. In this case, a task, process, or thread for playing back the content stream data may be generated or activated, or a message may be transmitted to or an interruption may be caused in the halted task, process, or thread for playing back the content stream data so as to restart such task, process, or thread.

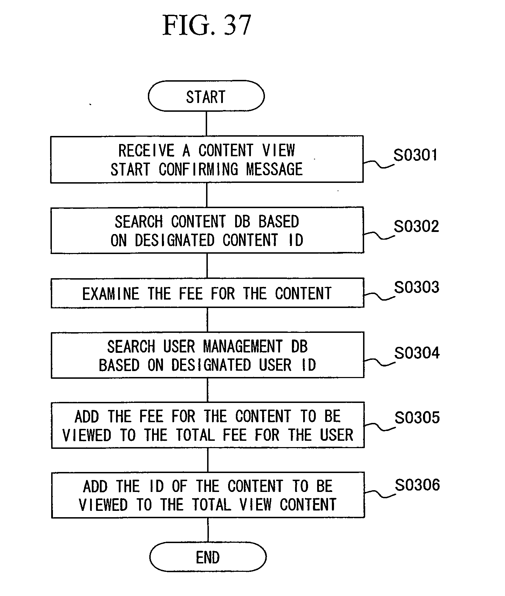

Fig. 37 shows the process carried out upon reception by the stream transmission system 0001 of a content view start confirming message from stream reception system 0002. Specifically, Fig. 37 is a flowchart of the process carried out by the stream transmission system 0001 at the point in time (w) of Fig. 26.

First, upon reception by the stream transmission system 0001 of a content view start confirming message from the stream reception system 0002 in step S0301, the content database 0102a is searched in step S0302, using the content ID designated by the parameters in the message. In step S0303, the viewing fee for the content is examined. Then, in step S0304, the user managing database 0106a is searched using the user ID designated by the parameters in the message. In step S0305, the fee for the content that is to be viewed is added to the total fee for the user in the user managing database 0106a. In step S0306, the content ID of the content to be viewed is added in the total viewed content list for the user in the user managing database 0106a.

Through these processes, the stream transmission system 0001, upon reception of the content view start confirming message from the stream reception system 0002, adds to the designated content list and total viewing fee for the designate viewer. In this way, it becomes possible to monitor what content is being viewed by the viewer. It becomes also possible to charge the viewer for the fee-based content on a monthly basis, for example.

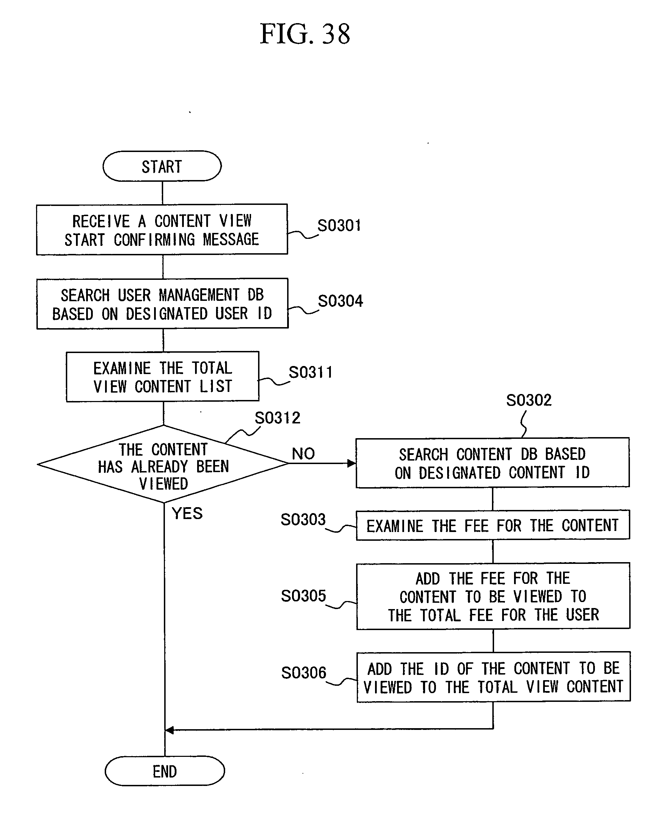

Fig. 38 shows another process that is carried out upon reception by the stream transmission system 0001 of the content view start confirming message from the stream reception system 0002. Specifically, Fig. 38 is a flowchart of the process that is carried out by the stream transmission system 0001 at the point in time (w) in Fig. 26 instead of the process of Fig. 37. In Fig. 37, a fee is added each time a particular user views the same content. In Fig. 38, however, no additional fee is charged if the same content has been viewed in the past.

In Fig. 38, the processes identical to those shown in Fig. 37 are designated with the same step numbers, and their descriptions are omitted herein.

After carrying out step S0301 and step S0304, step S0311 is carried out. In step S0311, the list of contents viewed by the viewer is examined. Then, in step S0312, it is checked to see if the content to be viewed this time has been viewed in the past. If it has been ("Yes"), the process comes to an end.

If the content has not yet been viewed ("No"), step S0302 is carried out.

Through these processes, the stream transmission system 0001, upon reception of a content view start confirming message from the stream reception system 0002, adds to the content list and the total viewing fee designated to the viewer if the content has not yet been viewed, thereby monitoring what content is being viewed by the viewer. It becomes also possible to charge the viewer for the fee-based content on a monthly basis, for example.

In the sequence of the messages assumed herein, the content view start confirming message does not require a response message. However, the sequence may be modified such that a response message is returned.

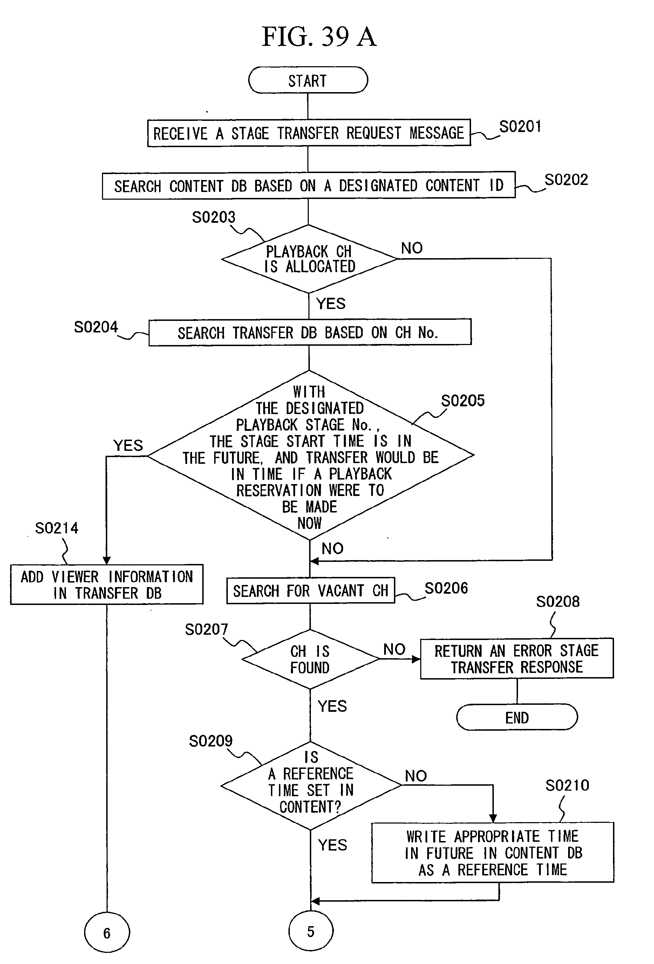

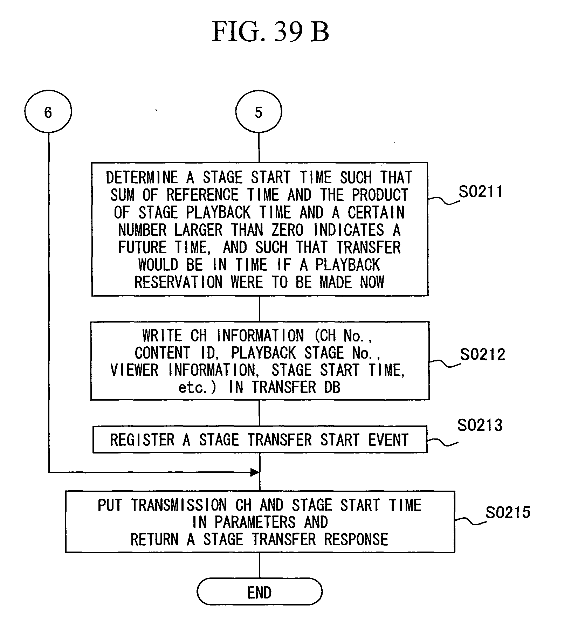

Figs. 39A and 39B show the process that is carried out upon reception by the stream transmission system 0001 of a stage transfer request message from the stream reception system 0002. Specifically, Figs. 39A and 39B show a flowchart of the process carried out by the stream transmission system 0001 at the point in time (v) of Fig. 26. The illustrated flowchart uses the transfer database 0105a shown in either Fig. 10 or 11.

Upon reception by the stream transmission system 0001 of a stage transfer request message from the stream reception system 0002 in step S0201, the content database 0102a is searched in step S0202 using the content ID designated in the message parameters. Then, in step S0203, it is checked to see if a channel is allocated to the content based on the content information that is retrieved. If a channel is allocated ("Yes"), step S0204 is carried out.

In step S0204, the transfer database 0105a is searched using the channel number. Then, in step S0205, it is checked to see if, in each of the channels of the transfer database 0105a that has been searched, with the designated stage number, the stage start time would be some time in the future, and if the transfer of the stage would be in time if a reservation for playback were to be made now. If not ("No"), step S0206 is carried out.

If in step S0203 it is determined that no channel is allocated ("No"), step S0206 is carried out.

In step S0206, the transfer database 0105a is searched for a vacant channel. In step S0207, it is checked if a vacant channel is found. If not ("No"), step S0208 is carried out.

In step S0208, since no vacant channel is found and the stream cannot be transferred, an error stage transfer response is returned to the stream reception system 0002 and the process comes to an end.

If a vacant channel is found in step S0207 ("Yes"), step S0209 is carried out. In step S0209, it is checked if a reference time is set in the content information in the content database 0102a. If it is not set ("No"), step S0210 is carried out.

In step S0210, an appropriate time in the future is determined and written in the content database 0102a as the reference time, and then step S0211 is carried out.

In step S0209, if such reference time is set ("Yes"), step S0211 is carried out.

In step S0211, a stage playback start time is determined such that the sum of the reference time and the product of the stage playback time and a constant number greater than zero is ahead of the current time, and such that transfer would be in time if a stage reservation were to be made now. Then in step S0212, information about the channel that is to be used, such as the channel number, content ID, playback stage number, viewer information, and stage start time, is written in the transfer database 0105a. Thereafter, in step S0213, a stage transfer start event is registered. This event is issued when it is the stage transfer start time so as to cause the stream transmission means 0103 to start transmitting the stream data for the designated stage. This is followed by step S0215.

If in step S0205 the result of determination is positive ("Yes"), step S0214 is carried out.

In step S0214, the viewer who made the view reservation is added to the viewer information for the channel in the transfer database 0105a. In step S0215, using the channel number, stage start time, stage playback time, the number of stages, transfer rate, playback rate, and so on as parameters, a stage transfer response message is transmitted to the stream reception system 0002.

Through these processes, the stream transmission system 0001, upon reception of a stage transfer request message from the stream reception system 0002, can make a reservation for the transfer of a designated stage of designated content.

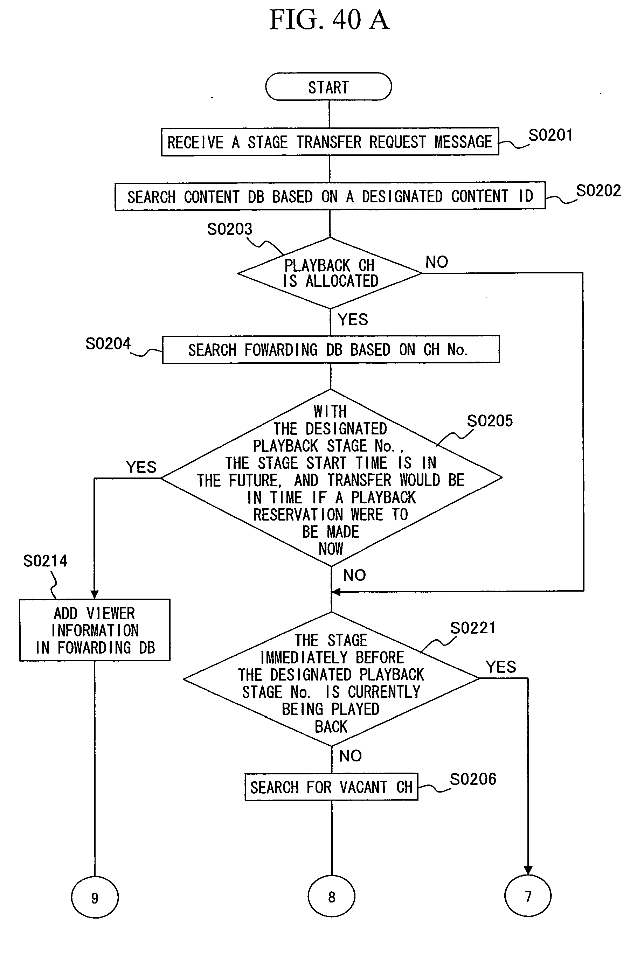

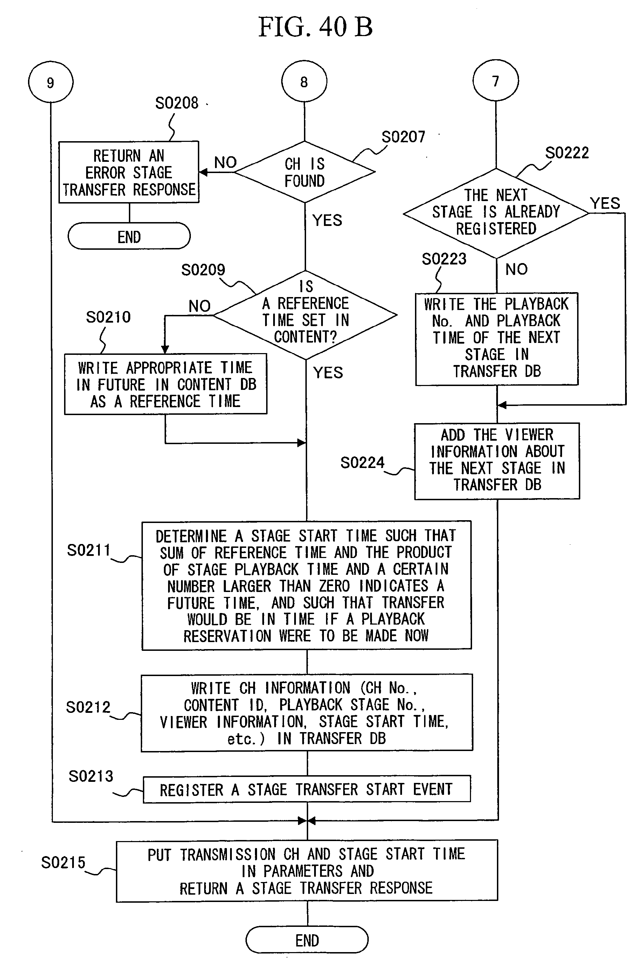

Figs. 40A and 40B show another process that is carried out upon reception by the stream transmission system 0001 of a stage transfer request message from the stream reception system 0002. Specifically, Figs. 40A and 40B show a flowchart of the process that is carried out by the stream transmission system 0001 at the point in time (v) of Fig. 26 instead of the process shown in Figs. 39A and 39B. In this flowchart, the transfer database 0105a shown in Fig. 12 is used.

In Figs. 40A and 40B, the processes identical to those shown in Figs. 39A and 39B are designated with the same step numbers and their descriptions are omitted herein.

If in step S0203 it is determined that no channel is allocated ("No"), step S0221is carried out.

If in step S0205 it is determined that the transfer of the stage would not be in time ("No"), step S0221 is carried out.

In step S0221, it is checked if the stage immediately prior to the designated stage number is currently being played back. If not ("No"), step S0206 is carried out. If it is ("Yes"), step S0222 is carried out.

In step S0222, it is checked if the next stage information is already registered in the transfer database 0105a. If it is not ("No"), the playback number and the playback time of the next stage are written in the transfer database 0105a in step S0223, and then the process proceeds to step S0224. On the other hand, if it is determined in step S0222 that such information is registered ("Yes"), the process proceeds to step S0224.

In step S0224, the viewer information about the next stage is added to the transfer database 0105a, followed by step S0215.

Through these processes, the stream transmission system 0001, upon reception of a stage transfer request message from the stream reception system 0002, can make a reservation for the transferring of a designated stage of a designated content.

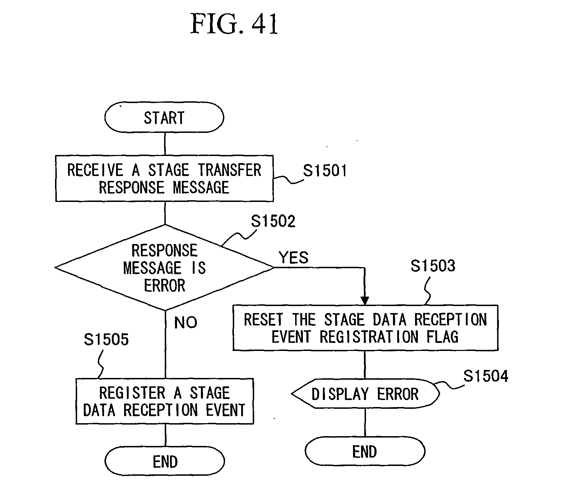

Fig. 41 shows a process that is carried out upon reception by the stream reception system 0002 of a stage transfer response message. Specifically, Fig. 41 is a flowchart of the process carried out by the stream reception system 0002 at the point in time (g) of Fig. 26.

Upon reception by the stream reception system 0002 of a stage transfer response message from the stream transmission system 0001 in step S1501, it is checked in step S1502 if the response message is an error. If it is an error ("Yes"), the stage data reception event registration flag is reset in step S1503. Then, in S1504, the fact that such an error has occurred is indicated on the display 0111 so as to alert the viewer. In step S1505, the stage data reception event is registered. On the other hand, if it is determined in step S1502 that there was no such error ("No"), the process proceeds to step S1505 where the stage data reception event is registered.

Through these processes, the stream reception system 0002 can process the reception of the stage transfer response message transmitted from the stream transmission system 0001, and make preparations for the reception of stage stream data.

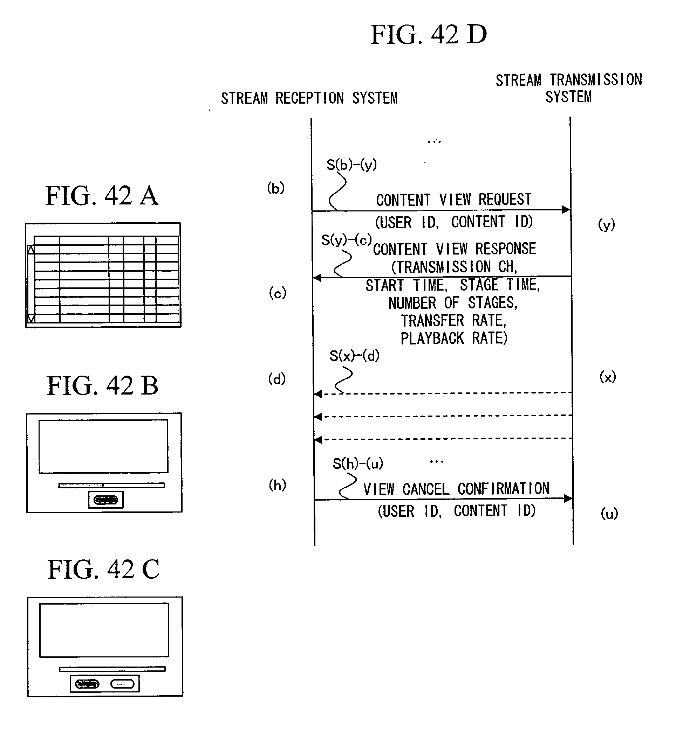

Figs. 42(A) to (D) show a sequence of messages exchanged between the stream reception system 0002 and the stream transmission system 0001 in the case where the viewing of content is cancelled prior to the viewing thereof. In the figures, the messages exchanged between the stream transmission system 0001 and the stream reception system 0002 before the initial stage stream data is transferred (step S(x)-(d)) are identical to those of Fig. 34, and therefore their descriptions are omitted herein.

If the remote controller 2000 is operated to select "Cancel" after the transfer of the initial stage stream data is started (step S(x)-(d)) and when the stream reception system 0002 is waiting to see if the viewer starts to view the content or cancels it (in this state, Fig. 22 is shown on the display 0111), the stream reception system 0002 terminates the reception of the stream data, and transmits a view cancel confirmation message to the stream transmission system 0001 (step S(h)-(u)) (in this state, Fig. 24 is shown on the display 0111). At this time, the user ID and the content ID are delivered as parameters. Upon reception of the cancel message from the stream reception system 0002, the stream transmission system 0001 terminates the transfer of stream data, and then operates the content database 0102a, the transfer database 0105a, and the user managing database 0106a.

Through these processes, the near video-on-demand system 1A can carry out the view canceling process if the viewer requests to cancel before the start of the actual viewing of the content.

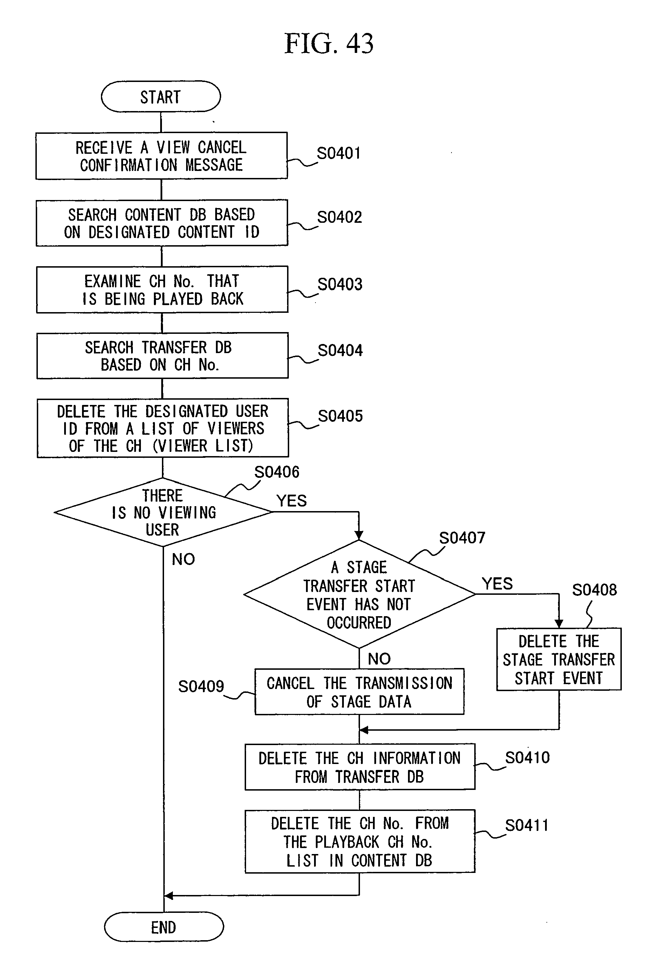

Fig. 43 shows a process carried out upon reception by the stream transmission system 0001 of a view cancel confirmation message from the stream reception system 0002. Specifically, Fig. 43 is a flowchart of the process carried out by the stream transmission system 0001 at the point in time (u) of Fig. 42.

In step S0401, the stream transmission system 0001 receives a view cancel confirmation message from the stream reception system 0002. In step S0402, the content database 0102a is searched using the content ID designated in the designated in the message parameters. In step S0403, the channel number used for the transfer of the stream data of the content is examined. In step S0404, the transfer database 0105a is searched using the channel number. In step S0405, the viewer is deleted from the viewer list of the corresponding channel in the transfer database 0105a. In step S0406, it is checked whether or not the viewer list has become zero as a result of the deletion. Specifically, it is checked whether or not there is any viewer in it. If there is ("No"), the process comes to an end.

If in step S0406 it is determined that there is at least one viewer ("Yes"), it is then checked in step S0407 if the stage transfer start event of the content is registered or occurred. If it has not occurred ("Yes"), the registered stage transfer start event is deleted in step S0408, and then step S0410 is carried out.

In step S0407, if it is determined that the event has occurred ("No"), this means that the stream data for the relevant stage has been transferred. Therefore, the transfer of the stream data is interrupted in step S0409, and then step S0410 is carried out.

In step S0410, the relevant channel information is deleted from the transfer database 0105a. In step S0411, the relevant channel number is deleted from the playback channel list in the content database 0102a.

Through these processes, the stream transmission system 0001, upon reception of a view cancel confirmation message from the stream reception system 0002, can cancel the viewing of the content. If the stage stream data is already being transferred, the transfer is terminated.

In the sequence of messages assumed herein, the view cancel confirmation message does not require a response message. However, the sequence may be modified such that a response message is returned.

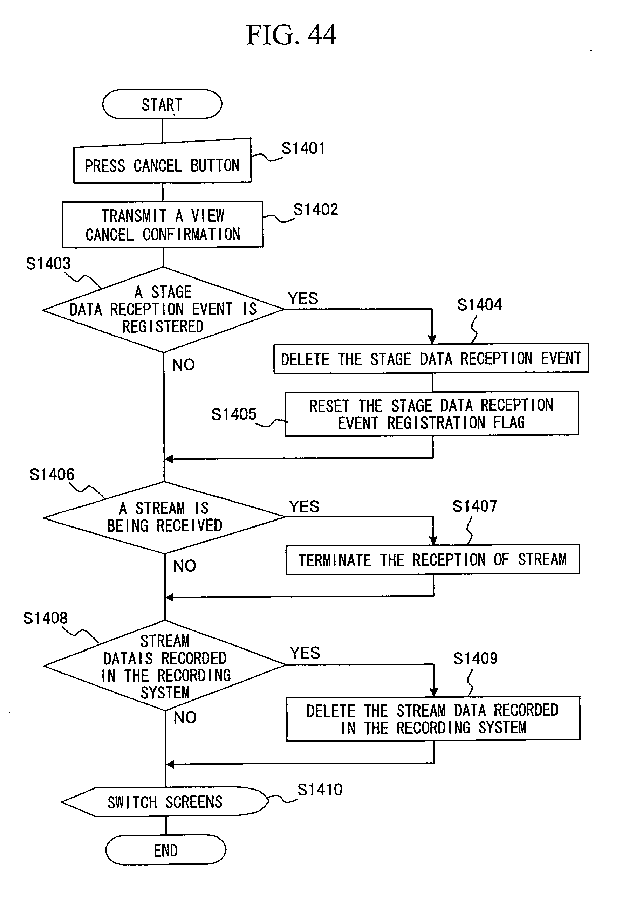

Fig. 44 shows a process that is carried out in the stream reception system 0002 upon canceling of the viewing of content by the viewer when the content has been selected and the content has been ready for viewing. Specifically, Fig. 44 is a flowchart of the process carried out by the stream reception system 0002 upon canceling at a point in time earlier than (h) or (d) in Fig. 42.

In step S1401, the viewer selects a Cancel button on the display 0111 in order to cancel the viewing of content (Specifically, the screen on the display 0111 transitions from Fig. 22 to Fig. 24, and the "Yes" button in Fig. 24 is selected). Then, in step S1402, the stream reception system 0002 transmits a view cancel confirmation message to the stream transmission system 0001. In step S1403, it is checked if the stage data reception event is registered. If it is ("Yes"), the stage data reception event is deleted in step S1404. In step S 1405, the stage data reception event registration flag is reset, and the process proceeds to step S1406. On the other hand, if in step S1403 it is determined that there is no registration ("No"), the process proceeds to step S1406.

In step S 1406, it is checked if there is any reception of stream data at the moment. If there is ("Yes"), such reception of stream data is terminated in step S1407, and the process proceeds to step S1408. On the other hand, if in step S1406 no such reception is recognized ("No"), the process proceeds to step S1408.

In step S1408, it is checked if the stream recording/playback means 0113 is currently recording any stream data. If it is ("Yes"), the stream data that has been recorded is deleted in step S1409, and the process proceeds to step S1410. On the other hand, if in step S 1408 it is not recording ("No"), step S 1410 is carried out

In step S 1410, the screens on the display 0111 are switched to indicate to the viewer that the viewing of content has been cancelled (the screen of Fig. 32 is displayed on the display 0111).

Through these processes, the stream reception system 0002 can cancel the viewing of content if the viewer requests to cancel before the viewing of content starts.

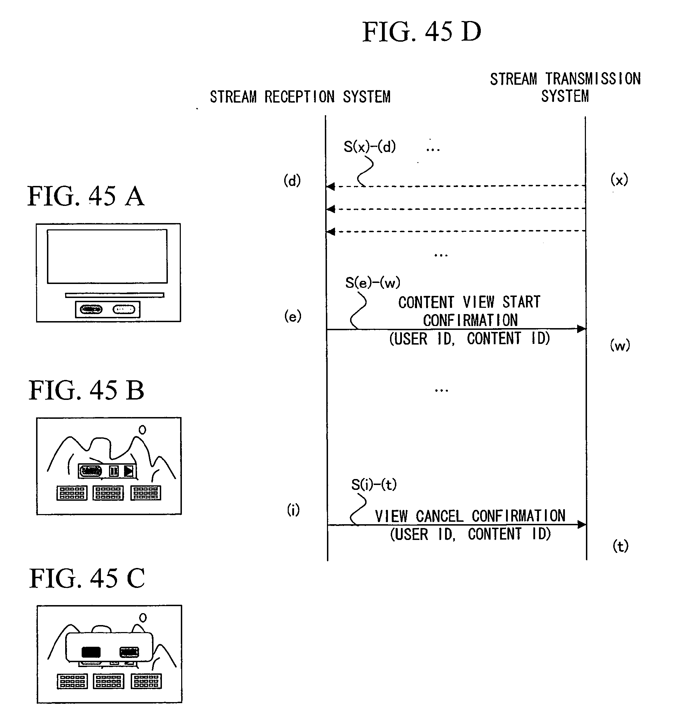

Figs. 45(A) to (D) show a sequence of messages that are exchanged between the stream reception system 0002 and the stream transmission system 0001 upon canceling during the viewing of content. In these figures, the messages exchanged between the stream transmission system 0001 and the stream reception system 0002 before the viewing of content begins (step S(x)-(d)) are the same as those of Fig. 26 and are therefore not described herein

As the viewer depresses the Start button on the remote controller 2000, the stream reception system 0002 starts to playback content. After a content view start confirming message is transmitted to the stream transmission system 0001 (step S(e)-(w)), the viewer operates the remote controller 2000 during the viewing of content so as to cancel the viewing (Specifically, the screen on the display 0111 transitions from Fig. 22 to Fig. 24, and the "Yes" button in Fig. 24 is depressed). In response, the stream reception system 0002 terminates the reception of stream data and the playback of content, and transmits a view cancel confirmation message to the stream transmission system 0001 (step S(i)-(t)). At this time, the user ID of the viewer and the content ID are delivered as parameters. The stream transmission system 0001, upon reception of the view cancel confirmation message from the stream reception system 0002, terminates the transfer of stream data, and then manipulates the content database 0102a in the content managing means 0102, the transfer database 0105a in the stream transmission managing means 0105a, and the user managing database 0106a in the user managing means 0106.

Through these processes, the near video-on-demand system 1A can process the canceling of the viewing of content by the viewer during the viewing of content.

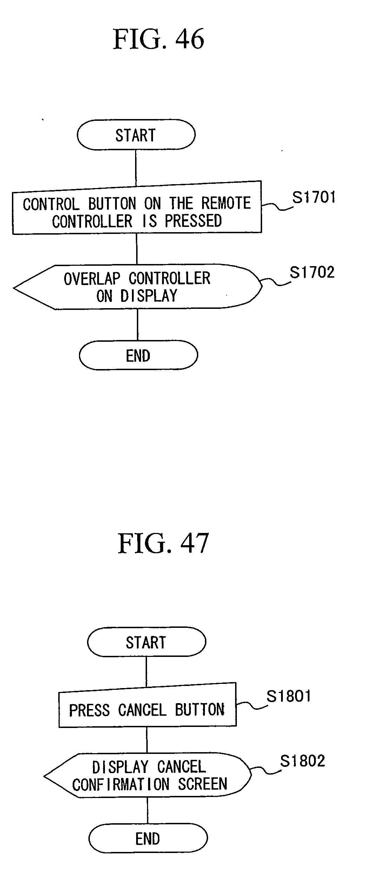

Fig. 46 shows a flowchart of the process that is carried out when the viewer depresses the Control button by operating the remote controller 2000 during the viewing of content in the stream reception system 0002.

In step S1701, the viewer operates remote controller 2000 and depresses the Control button during the viewing of content. In step S1702, the button for pausing the viewing of content, the button for canceling the viewing of content, and the button for resuming the viewing of content are displayed (i.e., the screen of Fig. 22 is displayed on the display 0111).

Through these processes, in response to the depressing of the Control button on the remote controller 2000 during the viewing of content, the buttons for canceling or pausing the content are displayed, thereby allowing the viewer to control the viewing of content.

Fig. 47 shows a flowchart of the process that is carried out when, during the viewing of content, the viewer depresses the Control button and then the Cancel button on the remote controller 2000.

The display 0111 shows the screen of Fig. 22. In step S1801, the viewer operates the remote controller 2000 and selects/enters the Cancel button. In step S 1802, a dialog for the confirmation of whether or not the viewing of content is to be canceled is displayed (i.e., the screen of Fig. 24 is shown on the display 0111).

Through these processes, when the viewer operates the remote controller 2000 and selects the Cancel button, the dialog for the confirmation of canceling of the viewing of content can be displayed.

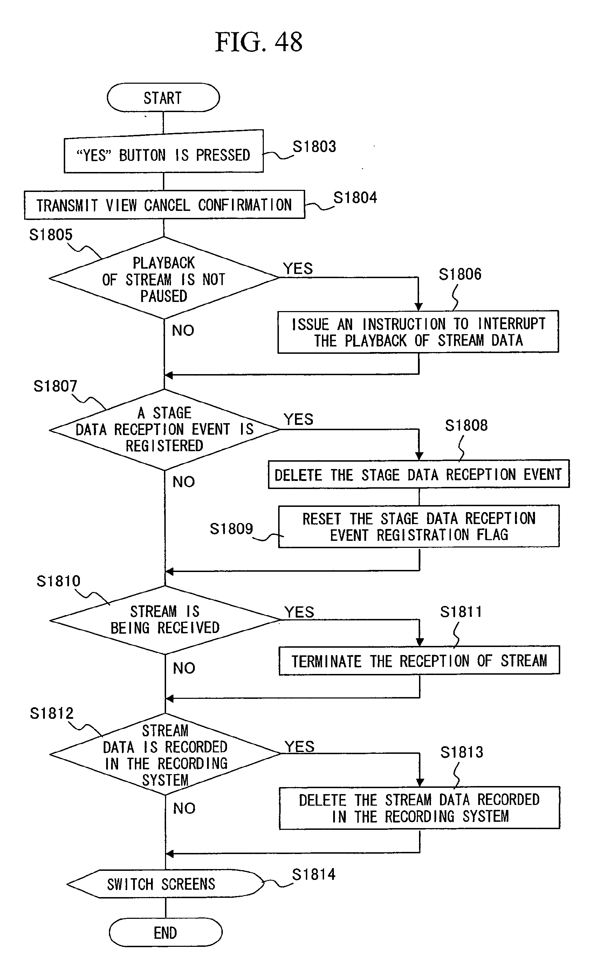

Fig. 48 shows the process that is carried out when the viewer cancels the viewing of content during the viewing thereof. Specifically, Fig. 48 is a flowchart of the process carried out by the stream reception system 0002 at the point in time (i) in Fig. 45.

After the screen of Fig. 24 is displayed on the display 0111 by the process in S1802, the viewer operates the remote controller 2000 in step S1803 and selects the "Yes" button in the dialog. In step S1804, a view cancel confirmation message is transmitted to the stream transmission system 0001. In step S1805, it is checked if the playback of stream is paused. If it is paused ("Yes"), step S1806 is carried out. In step S 1806, a stream data playback interrupting instruction is issued, and then S1807 is carried out.

If it is determined in step S1805 that the playback is paused ("No"), it is then checked in step S1807 whether or not the stage data reception event is registered. If it is ("Yes"), the stage data reception event is deleted in step S1808. Then, in step S1809, the stage data reception event registration flag is reset, and the process proceeds to step S1810. On the other hand, if in step S1807 it is determined that the event is not registered ("No"), the process proceeds to step S1810.

In step S 1810, it is checked if any stream data is being received. If it is ("Yes"), such reception of stage stream data is terminated in step S 1811, followed by step S 1812. If there is no such reception in step S1810 ("No"), the process proceeds to step S1812.

In step S 1812, it is checked if there is any stream data recorded in the stream recording/playback means 0113. If there is ("Yes"), the stream data recorded in the stream recording/playback means 0113 is deleted in step S 1813, followed by step S1814. If it is determined in step S1812 that there is no such recording ("No"), the process proceeds to step S1814.

In step S 1814, the fact that the viewing of content has been cancelled is indicated on the display 0111.

Through these processes, the stream reception system 0002 can cancel the viewing during the viewing of content.

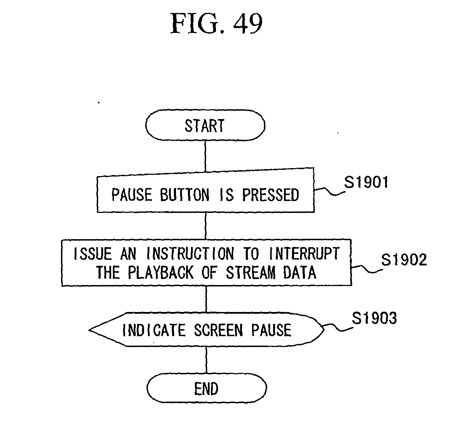

Fig. 49 shows a flowchart of the process carried out when, during the viewing of content, the viewer depresses the Control button on the remote controller 2000 and then selects the Pause button.

First, the display 0111 shows the screen of Fig. 22. In step S1901, the viewer operates the remote controller 2000 and selects the button for pausing the viewing of content. In step S1902, an instruction for interrupting the playback of stream data is issued. In step S1903, the fact that the viewing of content has been paused is indicated on the display 0111 (i.e., the screen of Fig. 23 is shown on the display 0111).

Through these processes, it becomes possible to pause the viewing of content when the viewer operates the remote controller 2000 and selects the button for pausing the viewing of content.

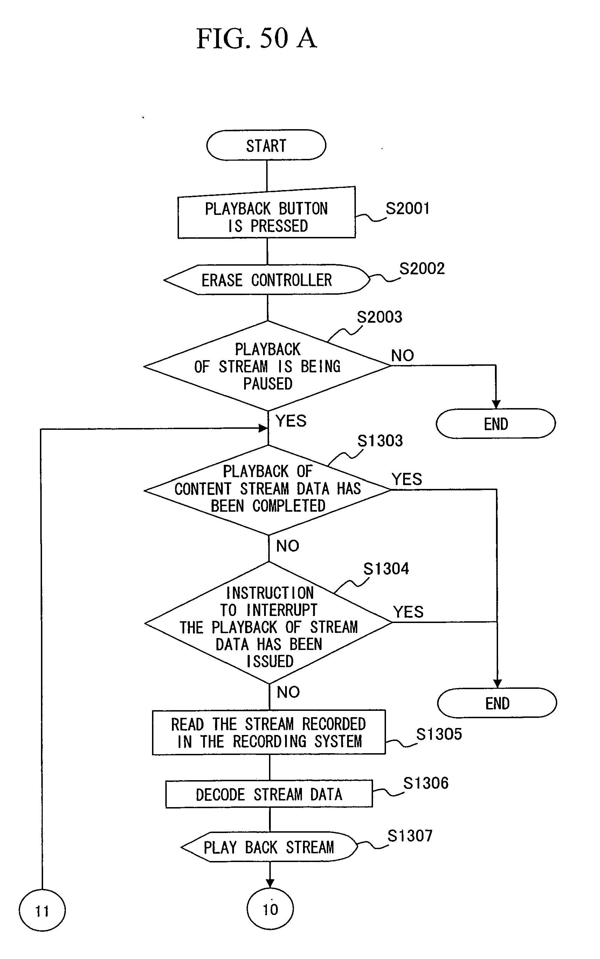

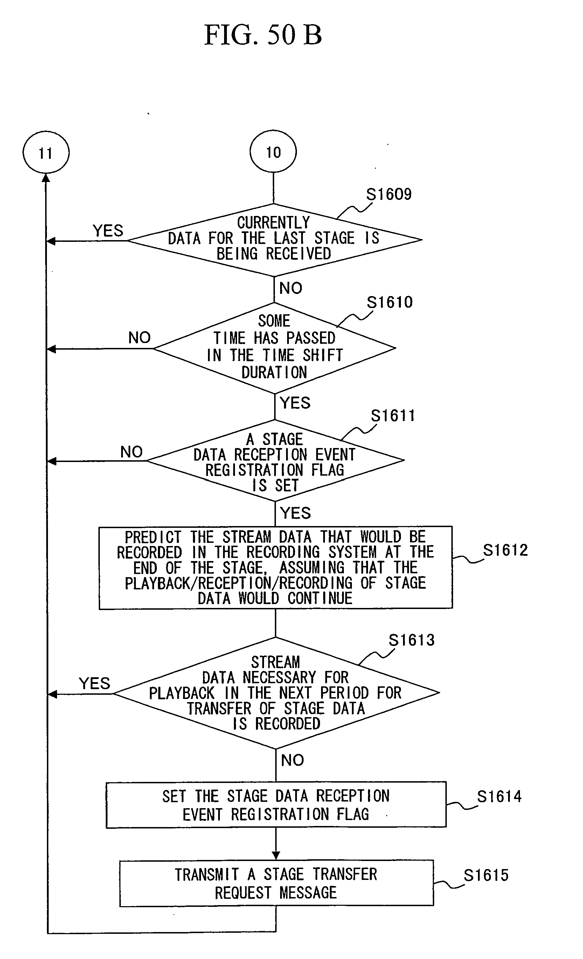

Figs. 50A and 50B show a flowchart of the process that is carried out when the viewer selects the button for resuming playback following the pressing of the Control button on the remote controller 2000 during the viewing of content, or when the button for resuming playback is selected when the playback of content is paused.

In Figs. 50A and 50B, the processes identical to those processes shown in Figs. 35A, 35B, and 36 are designated by the same step numbers and are not described herein.

In step S2001, the viewer operates the remote controller 2000 and selects the button for resuming the viewing of content. In step S2002, the button for pausing the viewing of content, the button for canceling the viewing of content, and the button for resuming the viewing of content displayed on the display 0111 are eliminated. In step S2003, it is checked if the playback of stream data is paused. If not ("No"), the process comes to an end. On the other hand, if it is determined in step S2003 that the playback is paused ("Yes"), then step S1303 is carried out.

Through these processes, the buttons for controlling the playback of stream that are displayed on the display 0111 can be erased when the viewer selects the button for resuming the viewing of content by operating the remote controller 2000.

Further, through these processes, if the button for resuming the viewing of content is selected by the viewer when the playback of the content is paused, the buttons for controlling the playback of stream displayed on the display 0111 are erased and the playback of the content stream data is resumed.

The flowchart of Fig. 50 includes the selection of the button for resuming the viewing of content and the playback of content stream. Alternatively, however, the flowchart portion for playing back the content (from S1303 to S1307 and from S1609 to S1615) may be processed by a separate task, process, or thread. In this case, the task, process, or thread for playing back the content may be generated or activated, or a message may be transmitted to or an interruption may be caused in the halted task, process, or thread for playing back the content so as to re-activate such task, process, or thread.

### (Second Embodiment)

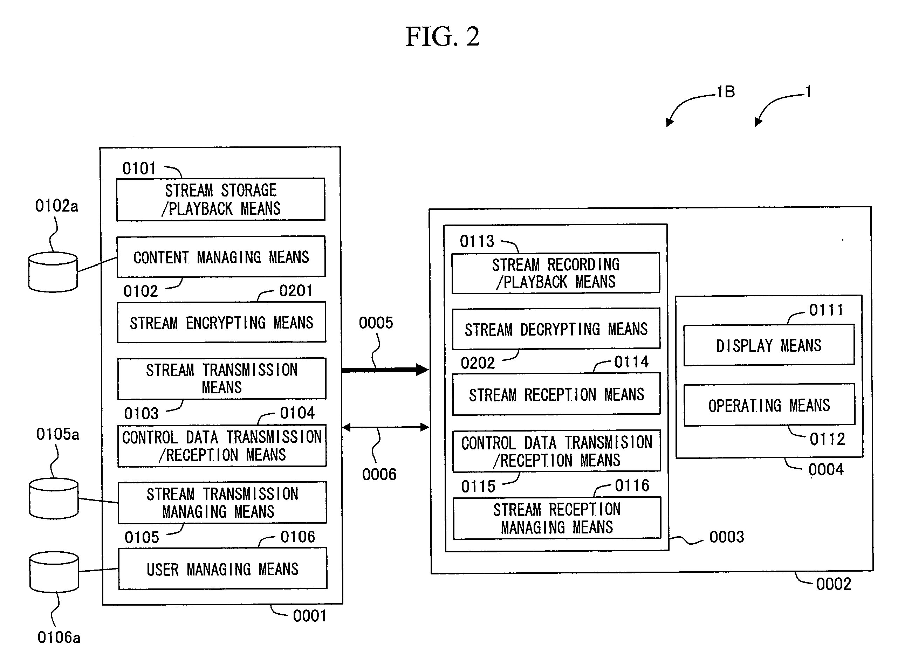

In the following, the near video-on-demand system 1 according to a second embodiment of the invention will be described with reference to the drawings. Fig. 2 shows a block diagram of a near video-on-demand system 1B according to the second embodiment, in which descriptions of the elements that are designated by the same numerals are omitted. In Fig. 2, the stream transmission system 0001 includes a stream encrypting means 0201 for the encryption of stream data, in addition to the stream storage/playback means 0101, the content managing means 0102, the stream data transmission managing means 0103, the control data transmission/reception means 0104, the stream transmission managing means 0105, and the user managing means 0106. The stream reception unit 0003 in the stream reception system 0002 includes a stream decrypting means 0202 for the decryption of encrypted stream data, in addition to the stream recording/playback means 0113, the stream reception means 0114, the control data transmission/reception means 0115, and the stream reception managing means 0116. In Fig. 2, the configuration of the stream transfer means 0005 and the control data transfer means 0006 for the transmission and reception between the stream transmission system 0001 and the stream reception system 0002 are the same as that shown in Fig. 1.

Although in Fig. 2 a pair of the stream transmission system 0001 and the stream reception system 0002 is shown, more than one of each may be provided.

In the near video-on-demand system 1B shown in Fig. 2, content is transferred from the stream transmission system 0001 to the stream reception system 0002, where content can be displayed. Further, exchange of control data allows the viewing of content to be paused or resumed by user operation. This system is secure because the stream data is encrypted when transmitted.

The stream encrypting means 0201 and the stream decrypting means 0202 shown in Fig. 2 can be realized with a secret-key cryptography system and/or a public-key cryptography system.

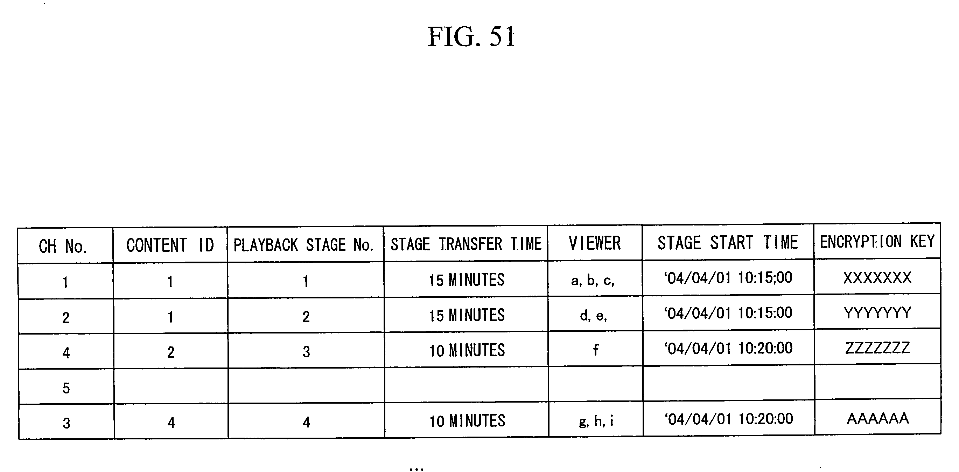

Fig. 51 shows a fourth example of the stream data stored in the transfer database 0105a used in the present embodiment. This transfer database 0105a stores a stream encryption key, in addition to the items shown in Fig. 51, i.e., the number of the channel for transferring a stream, the ID indicating the type of content, the number of the stage being played back, stage transmission time, the list of the viewers to which the stream is being transferred, and the stage start time.

When conducting encrypted data transmission using the data contained in the transfer database 0105a, the stream data is encrypted by the stream encrypting means 0201 using the stream encryption key and then transferred to the stream reception system 0002. For the encryption of stream data, a secret-key cryptography system can be used in which the same encryption key is used by the stream transmission system 0001 and the stream reception system 0002, which share the encryption key in one way or another. It is also possible to use a public-key cryptography system in which a pair of different encryption keys are used by the transmission system 0001 and the stream reception system 0002. In this case, the stream transmission system 0001 uses a public key for encryption, while the stream reception system 0002 uses a secret key for decryption.

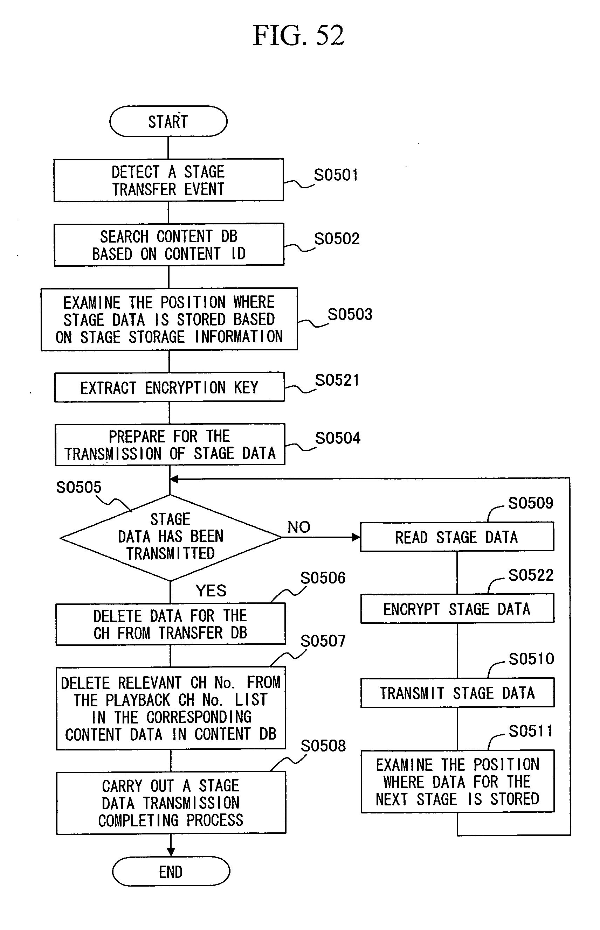

Fig. 52 shows the process that is carried out upon the occurrence of a stage transfer event that the stream transmission system 0001 has registered by itself. Specifically, Fig. 52 is a flowchart of the process that is carried out by the stream transmission system 0001 at the point in time (x) of Fig. 26 instead of the process of Fig. 33. In the flowchart shown in Fig. 33, the transfer database 0105a shown in Fig. 51 is used. While in the process of Fig. 33 stream data was transferred without encryption, stream data is encrypted as it is transferred in the process of Fig. 52.

In Fig. 52, the processes identical to those shown in Fig. 33 are designated by the same step numbers and their descriptions are omitted herein.

After step S0503 is carried out, step S0521 is carried out. In step S0521, the key for encryption of the stream data is obtained. Then, step S0504 is carried out.

After step S0509 is carried out, step S0522 is carried out. In step S0522, the stream data that has been read is encrypted. Then, step S0510 is carried out.

Through these processes, the stream transmission system 0001 can encrypt the stage stream data and transfer it to the stream reception system 0002.

The flowchart of Fig. 52 includes the detection of a stage transfer event and the transfer of stage data. However, the flowchart portion for the transfer of stage data (from S0503 to S0511, S0521, and S0522) may be processed by a separate task, process, or thread. In this case, the task, process, or thread for transferring stage data may be generated/activated, or a message may be transmitted to or an interruption may be caused in the halted task, process, or thread for transferring stage data so as to re-activate such task, process, or thread.

The third example of stream data shown in Fig. 51 is also used in the processes of the flowchart shown in Figs. 39A and 39B when the process of Fig. 26 is carried out according to the present embodiment.

The configuration and processes other than those described in the foregoing are the same as those of the first embodiment.

### (Third Embodiment)

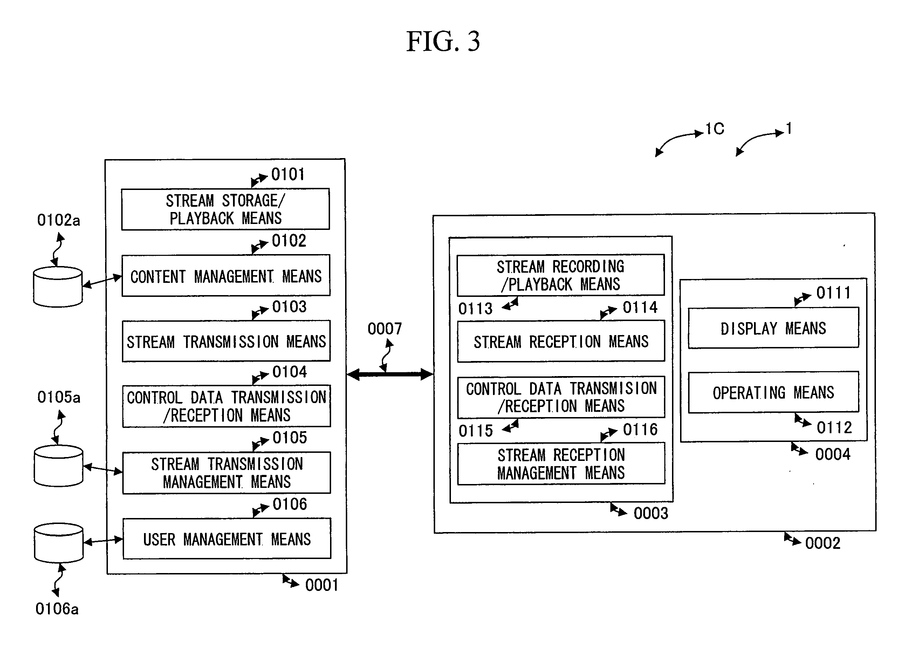

The near video-on-demand system 1 according to a third embodiment of the invention will be described with reference to the drawings. Fig. 3 shows a block diagram of a near video-on-demand system 1C according to the third embodiment, in which descriptions of the elements that are designated by the same numerals are omitted. In Fig. 3, the configuration of the stream transmission system 0001 and the stream reception system 0002 is the same as that shown in Fig. 1.

The transfer of stream data from the stream transmission system 0001 to the stream reception system 0002 and the exchange of control data therebetween are conducted by a stream data/control data transmission/reception system 0007.

The other features and processes of the present embodiment are the same as those of the first embodiment.

While in Fig. 3, a pair of the stream transmission system 0001 and the stream reception system 0002 is shown, more than one of each may be provided.

In the near video-on-demand system 1C of Fig. 3, content is transferred from the stream transmission system 0001 to the stream reception system 0002 where the content can be displayed. Further, by exchanging control data, the viewing of content can be paused or resumed by an operation by the user.

### (Fourth Embodiment)

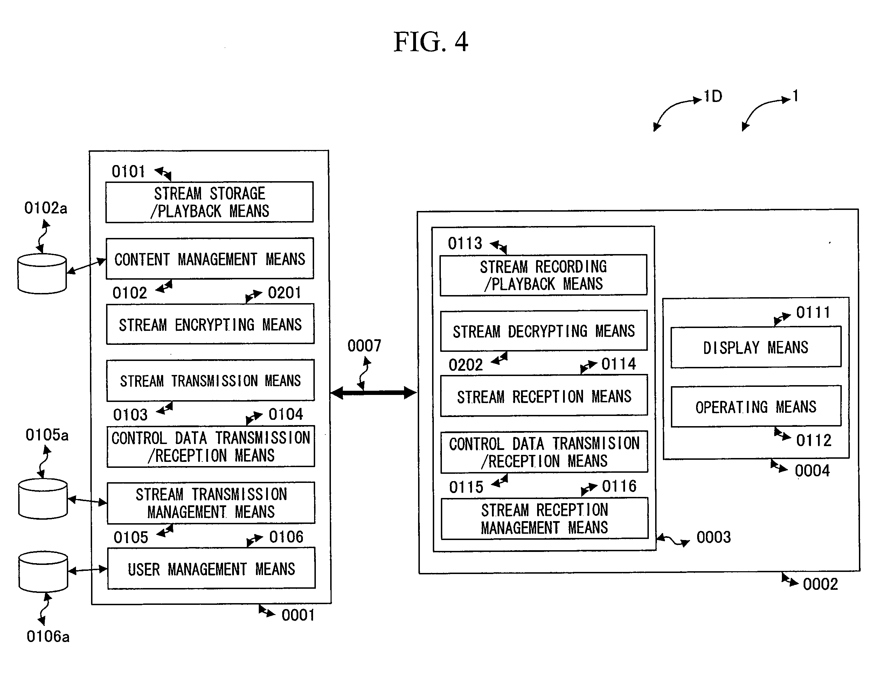

In the following, the near video-on-demand system 1 according to a fourth embodiment of the invention will be described with reference to the drawings. Fig. 4 shows a block diagram of a near video-on-demand system 1D according to the fourth embodiment, in which descriptions of the elements that are designated by the same numerals are omitted. The configuration of the stream transmission system 0001 and the stream reception system 0002 shown in Fig. 4 is the same as that of the second embodiment shown in Fig. 2. The transfer of stream data and control data between the stream transmission system 0001 and the stream reception system 0002 is conducted in the same way as shown in Fig. 3.

While in Fig. 4 a pair of the stream transmission system 0001 and the stream reception system 0002 is shown, more than one of each may be provided.

In the near video-on-demand system 1D shown in Fig. 4, content is transferred from the stream transmission system 0001 to the stream reception system 0002 where the content can be displayed. By exchanging control data, the viewing of content can be paused or resumed by an operation by the user. The system is secure because stream data is encrypted when transmitted.

The stream encrypting means 0201 and the stream decrypting means 0202 shown in Fig. 4 can be realized with a secret-key cryptography system and/or a public-key cryptography system.

While the embodiments of the near video-on-demand control system of the invention have been described above focusing on the individual functions, the invention can also be embodied as a near video-on-demand control method, as described as a method to be carried out by a computer. It is also possible to embody the invention as a program for causing a computer to function as a near video-on-demand control system having the same individual functions, or for causing a computer to carry out the near video-on-demand control method.

In the following, embodiments are described of the invention as recording media in which a program and data for realizing the functions of the invention is stored. Examples of the recording media include CD-ROM (-R/-RW), magnetooptic discs, DVD-ROM (-RW/+RW/-R/+R/-RAM), FD, flush memories, memory cards and sticks, and other various ROM and RAM. A program for causing a computer to carry out and realize the functions of the foregoing embodiments of the invention can be recorded on these recording media and distributed, whereby realization of the functions can be facilitated. Such recording media can be mounted on an information processing device such as a computer and the program can be read thereby. Alternatively, the program can be stored in a recording medium that the information processing device is equipped with and read as needed so as to carry out the individual functions of the invention.

In the following, examples of such embodiments of the invention will be described.

### (Example 1)

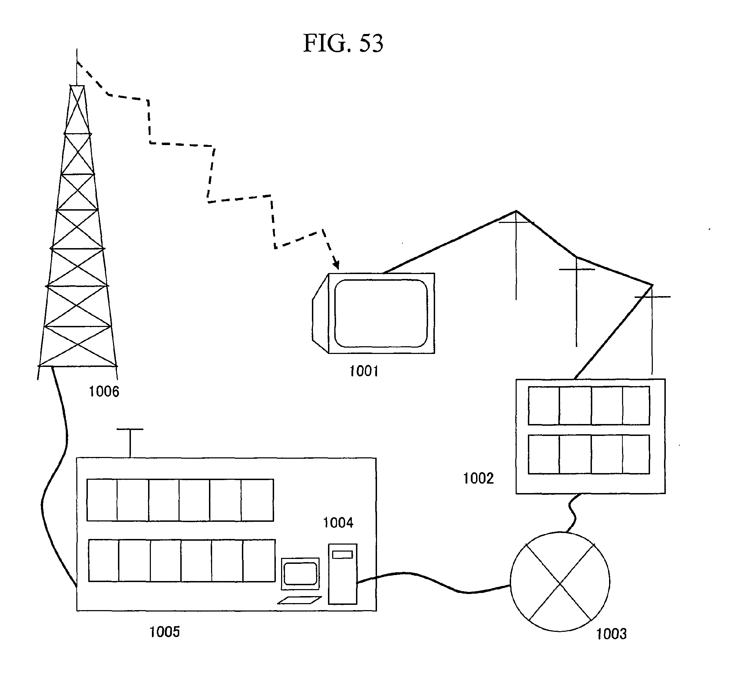

Fig. 53 shows a first example of the near video-on-demand system 1 of the invention. Numeral 1001 designates a terrestrial digital broadcast reception terminal. Numeral 1002 designates an Internet service provider. Numeral 1003 designates an Internet network. Numeral 1005 designates a terrestrial digital broadcast station. Numeral 1006 designates a terrestrial digital radio tower. Numeral 1004 designates a computer system installed in the broadcast station for processing bidirectional communications data. The reception terminal 1001 corresponds to the stream reception unit 0003 in the first through fourth embodiments shown in Figs. 1 through 4. The Internet network 1003 corresponds to the stream transfer means 0005 and the control data transfer means 0006 in the first and second embodiments, or the stream data/control data transmission/reception system 0007 of the third and fourth embodiments. The computer system 1004 corresponds to the stream transmission system 0001 shown in Figs. 1 through 4.

In the first example shown in Fig. 53, NVOD content data is transferred from the broadcast station to the reception terminal 1001 via the terrestrial digital radio tower. The exchange of control data for controlling stream data is conducted by means of the terrestrial digital bidirectional communications function. The stream data can be transferred in MPEG stream format.

While in Fig. 53 a pair of the broadcast station and the reception terminal is shown, more than one of each may be provided. Furthermore, it is also possible to encrypt the stream data before transferring it.

In the near video-on-demand system 1 shown in Fig. 53, transfer of content from the broadcast station to the reception terminal is conducted within the framework of terrestrial digital broadcast, and the content can be displayed on the reception terminal. Further, by exchanging control data using the terrestrial digital bidirectional function, it becomes possible to pause or resume the viewing of content by an operation conducted by the user. The system will be secure if the stream data is encrypted before transmission.

### (Example 2)

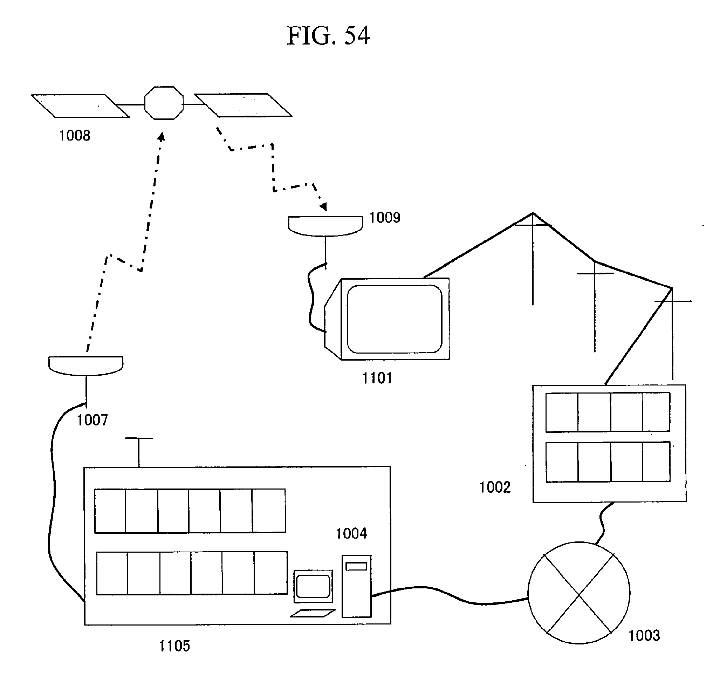

Fig. 54 shows a second example of the near video-on-demand system 1 of the invention. Numeral 1101 designates a digital BS broadcast reception terminal. Numeral 1002 designates an Internet service provider. Numeral 1003 designates an Internet network. Numeral 1105 designates a BS digital broadcast station. Numeral 1004 designates a computer system installed in the broadcast station for processing bidirectional communications data. Numeral 1007 designates ground equipment for satellite broadcast. Numeral 1008 designates a satellite for satellite broadcast. Numeral 1009 designates an antenna for the reception of satellite broadcast. The reception terminal 1001 corresponds to the stream reception unit 0003 in the first through fourth embodiments shown in Figs. 1 to 4. The Internet network 1003 corresponds to the stream transfer means 0005 in the first and second embodiments. The satellite broadcast ground equipment 1007, the satellite 1008, and the antenna 1009 correspond to the control data transfer means 0006 in the first and second embodiments. The computer system 1004 corresponds to the stream transmission system 0001 shown in Figs. 1 to 4.

In Fig. 54, NVOD content data is transferred from the broadcast station 1105 to the reception terminal via the digital BS broadcast satellite. Exchange of control data for controlling the stream data is conducted by means of the BS digital bidirectional communications function. The stream data can be transferred in MPEG stream format.

While in Fig. 54 a pair of the broadcast station 1105 and the reception terminal 1101 is shown, more than one of each may be provided. It is also possible to encrypt the stream data before transfer. In Fig. 6, digital BS broadcast is assumed; however, the same effects would be obtained by using digital CS broadcast.

In the near video-on-demand system 1 shown in Fig. 54, content can be transferred from the broadcast station 1105 to the reception terminal 1101 in the framework of digital BS broadcast or digital CS broadcast, and the content can be displayed on the reception terminal 1101. Furthermore, by exchanging control data using the bidirectional function of digital BS broadcast or digital CS broadcast, viewing of content can be paused or resumed by an operation conducted by the user. The system will be secure if the stream data is encrypted before transmission.

### (Example 3)

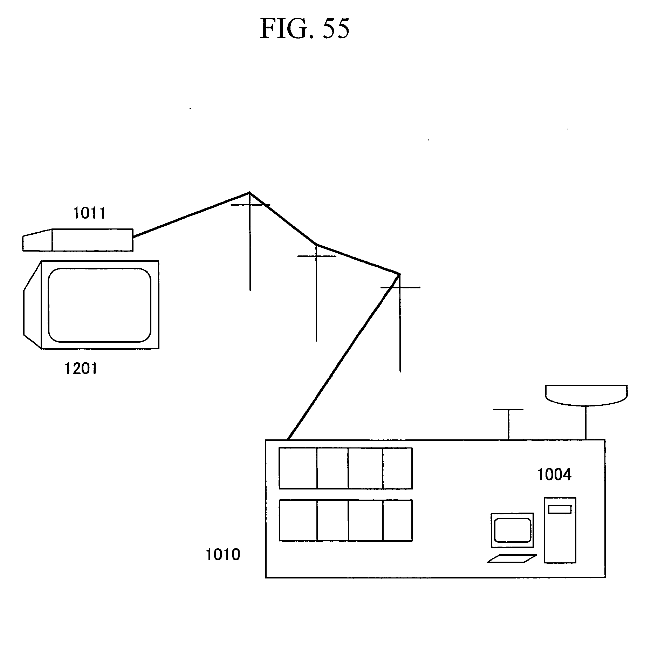

Fig. 55 shows a third example of the near video-on-demand system 1 of the invention. Numeral 1010 designates a CATV broadcast station. Numeral 1201 designates a CATV broadcast reception terminal. Numeral 1202 designates a CATV broadcast network. Numeral 1011 designates an STB for the reception of CATV broadcast and for the bidirectional communications using CATV. Numeral 1004 designates a computer system installed within the CAT broadcast station for processing bidirectional communications data. The reception terminal 1201 corresponds to the stream reception unit 0003 of the first through fourth embodiments shown in Figs. 1 through 4. The CATV broadcast network 120 corresponds to the stream transfer means 0005 and the control data transfer means 0006 of the first and second embodiments, or to the stream data/control data transmission/reception system 0007 of the third and fourth embodiments. The computer system 1004 corresponds to the stream transmission system 0001 shown in Figs. 1 through 4.

In Fig. 55, NVOD content data is transferred from the CAT broadcast station 1010 to the STB via the CATV broadcast network, and is displayed on the reception terminal 1201. Exchange of control data for controlling the stream data is conducted by means of the CATV broadcast bidirectional communications function. The CATV broadcast bidirectional communications function may be enabled by the Internet using the CATV broadcast network. The stream data can be transferred in the MPEG stream format.

While in Fig. 55 there is only one reception terminal 1201 shown, more than one of the terminal may be provided. It is also possible to encrypt the stream data before transfer.

In the near video-on-demand system 1 shown in Fig. 55, content can be transferred from the broadcast station 1010 to the reception terminal 1201 within the framework of CATV broadcast, and the content can be displayed on the reception terminal 1201. By exchanging control data using the bidirectional function of CATV, the viewing of content can be paused or resumed by an operation conducted by the user. The system will be secure if the stream data is encrypted before transmission.

### (Example 4)

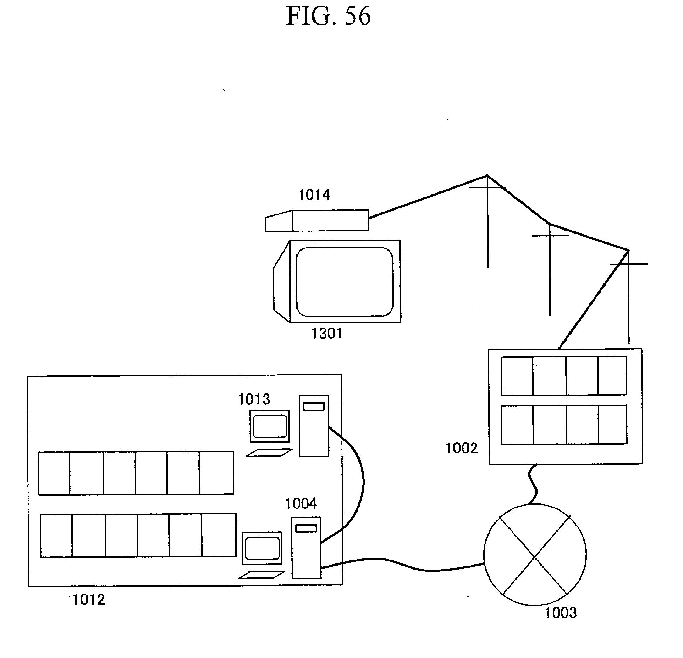

Fig. 56 shows a fourth example of the near video-on-demand system 1 of the invention. Numeral 1301 designates a reception terminal for displaying the stream data from the Internet. Numeral 1014 designates an STB to which NVOD is provided over the Internet. Numeral 1002 designates an Internet service provider. Numeral 1003 designates an Internet network. Numeral 1202 designates a CATV broadcast network. Numeral 1012 designates a provider of NVOD using the Internet. Numeral 1013 designates a computer system in which content data is stored and that transmits stream data via the Internet. Numeral 1004 designates a computer system installed at the provider for processing control data. The reception terminal 1001 corresponds to the stream reception unit 0003 of the first through fourth embodiments shown in Figs. 1 through 4. The Internet network 1003 and the CATV broadcast network 1202 correspond to the stream transfer means 0005 and the control data transfer means 0006 of the first and second embodiments, or to the stream data/control data transmission/reception system 0007 of the third and fourth embodiments. The computer system 1004 corresponds to the stream transmission system 0001 shown in Figs. 1 through 4.

In the near video-on-demand system 1 using the Internet, stream data can be transferred by means of the IP multicast transfer function. Also, the stream data can be transferred by using the RTP protocol. The stream data can be transferred in the MPEG stream format.

### While Fig. 56 shows only one NVOD provider using the Internet 1012 and one reception terminal 1301, more than one of each may be provided. It is also possible to encrypt the stream data before transfer.

In the near video-on-demand system 1 shown in Fig. 56, the NVOD provider using the Internet 1012 transmits stream data in which content is stored to the reception terminal 1301 via the Internet network 1003. By exchanging control data using the Internet, the viewing of content can be paused or resumed by an operation conducted by the user. The system will be secure if the stream data is encrypted before transmission.

## Claims

1. A near video-on-demand system in which a plurality of items of the same content are transmitted with their respective time shifts, each item consisting of stream data, the system comprising:
a stream transmission system for transmitting a stream; and
a stream reception system for receiving a stream,
wherein the stream transmission system manages the stream data on a stage-by-stage basis by dividing the stream data at predetermined time intervals.

2. A near video-on-demand system in which a plurality of items of the same content are transmitted with their respective time shifts, each item consisting of stream data, the system comprising:
a transmission system for transmitting a stream;
a reception system for receiving a stream;
a stream data transfer means for transferring a stream; and
a control data transfer means for transferring control data,
wherein the stream transmission system includes a stream storage/playback means, a content managing means, a stream transmission means, a control data transmission/reception means, a stream transmission managing means, and a user managing means,
wherein the stream transmission system transfers the content stream data on a stage-by-stage basis by dividing the stream data at predetermined time intervals.

3. A near video-on-demand system in which a plurality of items of the same content are transmitted with their respective time shifts, each item consisting of stream data, the system comprising:
a transmission system for transmitting a stream;
a reception system for receiving a stream; and
a data transfer means for transferring a stream,
wherein the stream transmission system includes a stream storage/playback means, a content managing means, a stream transmission means, a control data transmission/reception means, a stream transmission managing means, and a user managing means, and the stream reception system includes a stream reception unit and a user interface unit,
the stream reception system includes a stream reception unit and a user interface unit,
the stream reception unit includes a stream recording/playback means, a stream reception means, a control data transmission/reception means, and a stream reception managing means, and
the user interface unit includes a display means and an operating means,
and wherein the stream transmission system transfers the content stream data on a stage-by-stage basis by dividing the stream data at predetermined time intervals.

4. The near video-on-demand system according to any one of claims 1 to 3, wherein the stream transmission system comprises a stream encrypting means for encrypting a stream, and wherein the stream reception system comprises a stream decrypting means for decrypting an encrypted stream.

5. The near video-on-demand system according to claim 4, wherein the stream encrypting means and the stream decrypting means comprise at least one of a secret-key cryptography system and a public-key cryptography system.

6. The near video-on-demand system according to any one of claims 3 to 5, wherein the stream transmission managing means manages the content stream data by dividing it into a plurality of stages at predetermined time intervals.

7. The near video-on-demand system according to any one of claims 3 to 6, wherein the stream transmission managing means sets the duration of the time shift between the items of stream data to be shorter than the time in which one of the stages is transferred from the stream data transmission system to the stream data reception system.

8. The near video-on-demand system according to any one of claims 1 to 7, wherein the transfer rate of stream data in the stream transmission system is substantially identical to the playback rate of the stream data in the stream reception system.

9. The near video-on-demand system according to any one of claims 1 to 7, wherein the transfer rate of stream data in the stream transmission system is higher than the playback rate of stream data in the stream reception system.

10. The near video-on-demand system according to any one of claims 3 to 9, wherein the stream recording/playback means includes a memory area with such a capacity as to record the stream data transferred in a single stage period.

11. The near video-on-demand system according to claim 10, wherein the memory area of the stream recording/playback means has the function of a plurality of ring buffers.

12. The near video-on-demand system according to any one of claims 1 to 11, wherein the stream recording/playback means included in the stream reception system for recording/playing back a stream is capable of interrupting the playback of stream data and then resuming the playback.

13. The near video-on-demand system according to any one of claims 2 to 12, wherein the stream data transmission managing means, upon reception of a request from the stream reception system for transferring the stream data for each stage, determines whether or not the stream data for the stage pertaining to the request should be transferred.

14. The near video-on-demand system according to any one of claims 2 to 13, wherein the stream data transmission managing means determines whether or not the stream data for a particular stage should be transferred depending on whether or not enough stream data is stored in the stream recording/playback means for the playback of the stage.

15. The near video-on-demand system according to any one of claims 2 to 14, wherein the stream transmission managing means determines a transfer channel for the stream data dynamically for each stage of the stream data.

16. The near video-on-demand system according to any one of claims 2 to 15, wherein the user managing means manages the information about the stream reception system that is receiving the stream data, with respect to each stage of the stream data.

17. The near video-on-demand system according to any one of claims 2 to 16, wherein the stream transmission managing means terminates or pauses the transmission of the stream data if there is no stream reception system that receives the stream data of a particular stream.

18. The near video-on-demand system according to any one of claims 1 to 17, wherein the stream reception system makes a reservation for the transfer of stream data on a stage-by-stage basis before the stream transmission system starts transferring a particular stage.

19. The near video-on-demand system according to any one of claims 2 to 18, wherein the stream transmission managing means comprises a transfer database that contains at least the number of transfer channel, ID for identifying content, the number of the stage being played back, a list of the stream reception systems that receive the stream data for the stage, and the start time of the stage that is being played back.

20. The near video-on-demand system according to claim 19, wherein the transfer database contains the stage transfer time as an additional data item.

21. The near video-on-demand system according to claim 19 or 20, wherein the transfer database contains a key for the encryption of the stream data for each stage as an additional item.

22. The near video-on-demand system according to any one of claims 19 to 21, wherein the transfer database contains the number of the stage that is transferred in the next time shift duration, a list of the stream reception systems that receive the stream data in the next time shift duration, and the start time of transfer of the stage in the next time shift duration as additional items.

23. The near video-on-demand system according to any one of claims 1 to 22, wherein the content managing means comprises a content database that contains at least ID for identifying content, name of content, the number of stages, playback rate, transfer rate, total playback time, the number of the channel that is currently transferring particular content, a transfer reference time as a reference for the transfer of stream data in a stage, and information about the storage of each stage of the stream data of the content.

24. The near video-on-demand system according to claim 23, wherein the content database contains the fee for viewing content as a data item.

25. The near video-on-demand system according to claim 23 or 24, wherein the content database contains additional information about the content as an additional data item.

26. The near video-on-demand system according to any one of claims 23 to 25, wherein the storage information about each stage stored in the content database includes position information about each stage of stream data stored in the storage/playback means.

27. The near video-on-demand system according to any one of claims 1 to 26, wherein the user managing means has a user managing database that contains at least the user name, user ID, a list of IDs of the content viewed by the user, and the fees for all of the content viewed by the user as data items.

28. The near video-on-demand system according to any one of claims 1 to 27, wherein the control data transfer means transmits messages to each other, the messages containing at least a content list request/content list response, content view request/content view response, stage transfer request/stage transfer response, content viewing start confirmation, and view cancel confirmation.

29. The near video-on-demand system according to any one of claims 1 to 28, wherein, upon reception of a content list response by the stream reception system, a content list is presented on the display means.

30. The near video-on-demand system according to any one of claims 1 to 29, wherein, upon reception of a content view response by the control data transmission/reception means of the stream reception system, the display means displays content information, an indicator of the wait time before the viewing of content becomes possible, and a button for canceling the viewing of content.

31. The near video-on-demand system according to claim 30, wherein, upon reception by the operating means of an instruction for cancelling the viewing of content, the stream reception system terminates the reception and playback of the content.

32. The near video-on-demand system according to claim 30 or 31, wherein, when the wait time before the viewing of content is possible becomes zero, a button for starting the viewing of content and a button for cancelling the viewing of content are presented on the display means of the stream reception system.

33. The near video-on-demand system according to claim 32, wherein, after the button for starting the viewing of content and the button for cancelling the viewing of content are presented on the display means, and upon reception by the operating means of an instruction for cancelling the viewing of content, the stream recording/playback means of the stream reception system terminates the reception and playback of content.

34. The near video-on-demand system according to claim 32, wherein, after the button for starting the viewing of content and the button for cancelling the viewing of content are presented on the display means, and upon reception by the operating means of an instruction for starting the viewing of content, the stream recording/playback means of the stream reception system starts the reception and playback of the content.

35. The near video-on-demand system according to any one of claims 31 to 34, wherein, upon reception by the operating means of an instruction for an operation while the stream reception system is receiving or playing back content, a button for cancelling the viewing of content, a button for pausing the viewing of content, and a button for resuming the viewing of content are displayed on the display means.

36. The near video-on-demand system according to any one of claims 31 to 35, wherein, upon reception by the operating means of a selection/decision to pause the viewing of content, playback of content is paused and a notice that the playback of content is being paused is displayed on the display means.

37. The near video-on-demand system according to any one of claims 31 to 36, wherein, upon reception by the operating means of a selection/decision to cancel the viewing of content, the display means displays a dialog asking if the viewing of content should be cancelled or not,
wherein the dialog screen includes a "Yes" button for cancelling the reception and playback of content and a "No" button for continuing the reception and playback of content.

38. The near video-on-demand system according to claim 37, wherein upon reception by the operating means of an instruction to select/decide on the "Yes" button, the stream recording/playback means cancels the reception and playback of the content.

39. The near video-on-demand system according to claim 37, wherein, upon reception by the operating means of an instruction to select/decide on the "No" button, the stream recording/playback system continues the reception and playback of the content.

40. The near video-on-demand system according to any one of claims 31 to 39, wherein, upon reception by the operating means of an instruction to select/decide on the button for resuming the viewing of content, the button for cancelling the viewing of content, the button for pausing the viewing of content, and the button for resuming the viewing of content, which are already on display, are erased on the display means.

41. The near video-on-demand system according to any one of claims 31 to 40, wherein the operating means is operated by an instruction from a remote controller having at least a control button, up, down, left, and right buttons, and an enter button.

42. The near video-on-demand system according to any one of claims 1, 2, and 4 to 41, wherein the stream data transfer means transmits stream data using a terrestrial digital broadcast system, and wherein the control data transfer means transmits and receives control data using a bidirectional communications means of the terrestrial digital broadcast system.

43. The near video-on-demand system according to any one of claims 1, 2, and 4 to 41, wherein the stream data transfer means transmits stream data using a digital broadcast system utilizing a satellite, and wherein the control data transfer means transmits and receives control data using a bidirectional communications function of the digital broadcast system utilizing the satellite.

44. The near video-on-demand system according to any one of claims 1, 2, and 4 to 41, wherein the stream data transfer means transmits stream data using a digital broadcast system for CATV, and wherein the control data transfer means transmits and receives control data using an IP network function of CATV.

45. The near video-on-demand system according to any one of claims 1 to 41, wherein the data transfer means uses an IP network for the transmission of stream data and for the transmission/reception of control data.

46. The near video-on-demand system according to claim 44 or 45, wherein the data transfer means includes an IP multicast transferring function, wherein the stream data is transferred using the IP multicast transferring function.

47. The near video-on-demand system according to any one of claims 44 to 46, wherein the stream data is transferred using the RTP protocol in the IP network.

48. The near video-on-demand system according to any one of claims 1 to 47, wherein the stream data comprises MPEG stream data.

49. A method for controlling a near video-on-demand system, the near video-on-demand system comprising:
a stream transmission system for transmitting a stream; and
a stream reception system for receiving a stream,
wherein a plurality of items of stream data of the same content are transmitted with their respective time shifts, the method comprising the steps of:
dividing the content stream data at predetermined time intervals into stages;
transferring the content stream data to the stream reception system on a stage-by-stage basis;
receiving the stream data with the stream reception system;
accumulating the received stream data on a stage-by-stage basis; and
playing back the accumulated stream data.

50. A method for controlling a near video-on-demand system, the near video-on-demand system comprising:
a stream transmission system for transmitting a stream; and
a stream reception system for receiving a stream,
wherein a plurality of items of stream data of the same content are transmitted with their respective time shifts, the method comprising the steps of:
the stream transmission system dividing the content stream data at predetermined time intervals into stages, and transferring the divided stream data to the stream reception system on a on a stage-by-stage basis;
the stream reception system receiving the stream data;
accumulating the received stream data on a stage-by-stage basis; and
playing back the stream data.

51. The method for controlling the near video-on-demand system according to claim 49 or 50, further comprising the steps of:
encrypting the stream data that is divided into stages; and
receiving and decrypting the encrypted stream data.

52. The near video-on-demand system according to any one of claims 49 to 51, further comprising the steps of:
the stream reception system resuming the playback of content that has been paused, upon reception of a user interface prompting the resumption of viewing of content; and
erasing the user interface associated with the interruption of playback of content, upon resumption of the playback of content.

53. The method for controlling the near video-on-demand system according to any one of claims 49 to 52, the method further comprising the steps of:
the stream transmission system receiving a content list request message from the stream reception system requesting a content list;
checking to see if a transfer reference time as a reference for the transferring of content is set as content information in a content database in which content and content information are associated and stored;
setting, if no transfer reference time is set in the content, a certain time after the current time as a transfer reference time;
creating message information about the content and storing the content information that has been read in parameters associating the message information with the content information; and
creating a content list response message regarding the content information based on the message information associated with the content information, and transmitting it from the stream transmission system to the stream reception system.

54. The method for controlling the near video-on-demand system according to any one of claims 49 to 53, comprising the steps of:
the stream transmission system receiving a content view request message from the stream reception system, and searching the content database based on a designated ID;
checking to see if a playback channel is allocated;
searching the transfer database based on the channel number;
checking to see if the playback stage number is 1, if the stage start time is in the future, and if transfer would be in time if a playback reservation were to be made now;
searching for an unused channel;
transmitting an error content view response message to the stream transmission system;
checking to see if a reference time is set in the content;
writing an appropriate time in the future as a reference time in the content database;
determining a stage start time such that the sum of the reference time and the product of stage playback time and a constant number greater than zero is sometime in the future and such that transfer would be in time if a reservation for playback were to be made now;
writing channel information in the transfer database, the channel information including the channel number, content ID, playback stage number, viewer information, and stage start time;
registering a stage transfer start event;
adding viewer information in the transfer database; and
putting the communications channel, stage start time, stage playback time, the number of stages, transfer rate, and playback rate in the parameters and transmitting a content view response message to the stream reception system.

55. The method for controlling the near video-on-demand system according to any one of claims 49 to 54, the method comprising the steps of:
receiving a stage transfer request message and extracting the parameters upon reception by the stream transmission system of a stage transfer request message from the stream reception system;
searching the content database based on a designated ID;
checking to see if a playback channel is allocated;
searching the transfer database based on the channel number;
checking to see if the stage start time with the stage number that has been played back is in the future, and if transfer would be in time if a reservation for playback were to be made now;
searching for a channel that is not being used;
checking to see if such channel has been found;
transmitting an error stage transfer response message to the stream transmission system;
checking to see if a reference time is set in the content;
writing an appropriate time in the future in the content database as a reference time;
determining a stage start time such that the sum of the reference time and the product of the stage playback time and a constant number greater than zero is in the future and such that transfer would be in time if a reservation for playback were to be made now;
writing channel information in the transfer database, the channel information including the channel number, content ID, playback stage number, viewer information, and stage start time;
registering a stage transfer start event;
adding viewer information in the transfer database; and
putting a communication channel and the stage start time in the parameters and transmitting a stage transfer response message to the stream reception system.

56. The method for controlling the near video-on-demand system according to any one of claims 49 to 55, the method further comprising the steps of:
receiving a stage transfer request message and extracting parameters upon reception by the stream transmission system of a stage transfer request message from the stream reception system;
searching the content database based on a designated ID;
checking to see if a playback channel is allocated;
searching the transfer database based on the channel number;
checking to see if the stage start time with the stage number that has been played back is in the future and if transfer would be in time if a reservation for playback were to be made now;
the stream transmission managing means checking to see if a stage immediately before the designated playback stage number is currently being played back;
searching for a channel that is not being used;
checking to see if such channel is found;
transmitting an error stage transfer response message to the stream transmission system;
checking to see if a reference time is set in the content;
writing an appropriate time in the future in the content database as a reference time;
determining a stage start time such that the sum of the reference time and the product of the stage playback time and a constant number is greater than zero and such that transfer would be in time if a reservation for playback were to be made now;
writing channel information in the transfer database, the channel information including the channel number, content ID, playback stage number, viewer information, and stage start time;
registering a stage transfer start event;
adding viewer information in the transfer database;
checking to see if a next stage is already registered;
writing the playback number and playback time of the next stage in the transfer database;
adding the viewer information concerning the next stage in the transfer database; and
the stream transmission means putting the communication channel and the stage start time in the parameters and transmitting a stage transfer response message to the stream reception system.

57. The method for controlling the near video-on-demand system according to any one of claims 49 to 56, the method comprising the steps of
receiving a content view start confirming message and extracting parameters upon reception by the stream transmission system of a content view start confirming message from the stream reception system;
searching the content database based on a designated ID;
examining the fee for viewing the content;
searching the user managing database based on a designated user ID;
adding the fee for the content to be viewed to the total fee for the user; and
adding the content ID of the content to be viewed to a total viewed content list.

58. The method for controlling the near video-on-demand system according to any one of claims 49 to 57, the method comprising the steps of:
receiving a content view start confirming message and extracting parameters or the like upon reception by the stream transmission system of a content view start confirming message from the stream transmission system;
searching for a following user ID based on a designated user ID;
examining a total viewed content list;
checking to see if the relevant content is already having been viewed;
searching the content database based on the designated content ID;
examining the fee for viewing the content;
adding the fee for the content to be viewed to the total fee for the user; and
adding the content ID of the content to be viewed to a total viewed content list.

59. The method for controlling the near video-on-demand system according to any one of claims 49 to 58, the method comprising the steps of:
receiving a view cancel confirmation message and extracting parameters upon reception by the stream transmission system of a view cancel confirmation message from the stream transmission system;
searching the content database based on a designated ID;
examining the channel number that is being played back or that is to be played back;
searching the transfer database based on the channel number;
deleting the designated user ID from a list of viewers who are viewing the channel;
checking to see if there is at least one viewer in the viewer list;
checking to see if a stage transfer start event has taken place;
canceling the transmission of stage data;
deleting the stage transfer start event;
deleting the information about the channel from the transfer database; and
deleting the channel number from the playback channel number list in the content database.

60. The method for controlling the near video-on-demand system according to any one of claims 49 to 59, the method comprising the steps of:
carrying out a stage transfer event detection process upon reception by the stream transmission system of a stage transfer event;
searching the content database based on a content ID;
examining the position where stage data is stored based on the stage storage information;
preparing for the transmission of stage data;
checking to see if all of the stage data has been transferred;
reading stage data;
transmitting the stage data that has been read on a predetermined channel;
examining the position where the next stage data is stored;
deleting the channel information from the transfer database;
deleting the channel number from a playback channel number list of the corresponding content data in the content database; and
carrying out a process for completing the transmission of stage data.

61. The method for controlling the near video-on-demand system according to claim 60, the method comprising the steps of:
the stream transmission system extracting an encryption key; and
encrypting stage data.

62. The method for controlling the near video-on-demand system according to claim 59 or 60, the method comprising the steps of:
the stream transmission system examining whether or not the next stage data should be also transmitted from the transfer database using the channel;
checking to see if it is necessary to transmit the next stage data;
copying the next playback stage number, viewer list, and stage start time onto the current playback stage number, viewer list, and stage start time in the content information on the content database; and
clearing the next stage number, viewer list, and stage start time in the content information on the content database.

63. The method for controlling the near video-on-demand system according to any one of claims 49 to 62, the method comprising the steps of:
the stream reception system making a request for a content list based on a content list acquisition request entered in the operating means; and
the stream reception system transmitting a message requesting a content list to the stream transmission system.

64. The method for controlling the near video-on-demand system according to any one of claims 49 to 63, the method comprising the steps of:
the stream reception system receiving a content list response message from the stream transmission system and extracting parameters and the like;
checking to see if the content list response message is an error;
the stream transmission system causing, if the content list response message is an error, an error message to be displayed on the display means of the stream reception system;
the content managing means, if the content list response message is successful, extracts the information about the content list from the parameters in the message and modifying the information such that it can be displayed in the form of a list; and
the stream transmission system causing the content list to be displayed.

65. The method for controlling the near video-on-demand system according to any one of claims 49 to 64, the method comprising the steps of:
receiving an instruction for selecting specific content in the displayed content list; and
the stream reception system transmitting a content view request message to the stream transmission system.

66. The method for controlling the near video-on-demand system according to any one of claims 49 to 65, the method comprising the steps of:
the stream reception system receiving a content view response message from the stream transmission system and extracting parameters and the like;
checking to see if the content view response message is an error;
the stream transmission system causing the stream reception system to display an error message;
the stream transmission system, if the content list response message is successful, causing the stream reception system to secure a recording area for recording stream data;
registering a stage data reception event and setting a stage data reception event registration flag; and
displaying the information about the content to be viewed, an indicator indicating the time at which viewing of content can start, and a user interface button for canceling the viewing of content.

67. The method for controlling the near video-on-demand system according to any one of claims 49 to 66, the method comprising the steps of:
the stream reception system receiving an instruction for starting the viewing of content;
transmitting a content view start confirming message to the stream transmission system;
checking to see if the playback of the content stream data has been completed;
checking to see if an instruction to interrupt the playback of stream data has been issued;
reading the recorded stream data;
decoding the stream data; and
the stream reception system displaying the stream data that has been decoded.

68. The method for controlling the near video-on-demand system according to any one of claims 49 to 67, the method comprising the steps of:
the stream reception system receiving an instruction to cancel the viewing of content prior to the start of the viewing of content;
transmitting a view cancel confirmation message to the stream transmission system;
checking to see if a stage data reception event is registered;
deleting the stage data reception event if it is registered;
resetting the stage data reception event registration flag;
checking to see if stream data is currently being received;
terminating the stream data if it is being received;
checking to see if stream data is recorded;
deleting the stream data if it is recorded.

69. The method for controlling the near video-on-demand system according to any one of claims 49 to 68, the method comprising the steps of:
the stream reception system receiving a stage transfer response message from the stream transmission system and extracting parameters and the like;
checking to see if the response message is an error;
resetting, if the response message is an error, a stage data reception event registration flag and displaying an error message; and
registering a stage data reception event.

70. The method for controlling the near video-on-demand system according to any one of claims 49 to 69, the method comprising the steps of:
the stream reception system detecting a stage data reception event and extracting parameters and the like;
checking to see if the stage number is 1;
displaying, if the stage number is 1, the information about the content to be viewed, a button for canceling the viewing of content, and a button for staring the viewing of content, and resetting a stage data reception event registration flag;
the stream reception system making preparations for the reception of stage data;
the stream reception system receiving stage stream data;
checking to see if the received stream data is the last continuation data of the stream data that has been recorded;
recording the stream data if the received stream data is the last continuation data of the stream data that has been recorded;
checking to see if the stream reception system is currently receiving the last stage stream data;
checking to see if some time has passed in the time shift duration;
checking to see if a stage data reception event registration flag is set;
predicting the stream data that will be recorded at the end of the stage assuming that the reception/playback of stage data would continue;
checking to see if stream data necessary for the playback during the next stage transfer time is recorded;
setting, if such stream data is not recorded, a stage data reception event registration flag;
the stream reception system transmitting a stage transfer request message to the stream transmission system;
the stream transmission system checking to see if the last stream data of the stage has been received; and
subjecting the received stage stream data to post-processing.

71. The method for controlling the near video-on-demand system according to any one of claims 49 to 70, the method comprising the steps of:
the stream reception system displaying, based on a request to pause playback that is entered during the playback of content, a button for cancelling the viewing of content, a button for pausing the viewing of content, and a button for resuming the viewing of content for user interface.

72. The method for controlling the near video-on-demand system according to any one of claims 49 to 71, the method comprising the step of:
the stream reception system, based on a content view cancel request that is entered after the start of viewing of content, presenting a dialog asking if the viewing of content should really be cancelled.

73. The method for controlling the near video-on-demand system according to any one of claims 49 to 72, the method comprising the steps of:
the stream reception system, when canceling the viewing of content after the start of the viewing of content, receiving a content view cancel request and prompting the confirmation of the canceling of viewing;
receiving a content view cancel request again after the canceling of viewing is prompted, and the stream transmission system transmitting a view cancel confirmation message to the stream transmission system;
checking to see if the playback of stream is paused;
issuing an instruction to interrupt the playback of stream data if the playback of stream is paused;
checking to see if a stage data reception event is registered;
deleting the stage data reception event if it is registered;
resetting the stage data reception event registration flag;
checking to see if the stream reception system is receiving stream data;
the stream reception system, if it is receiving stream data, terminating the reception of the stream data;
checking to see if stream data is recorded;
deleting the stream data if it is recorded; and
switching the screens that are displayed.

74. The method for controlling the near video-on-demand system according to any one of claims 49 to 73, the method comprising the steps of:
the stream reception system receiving an instruction to pause the viewing of content;
issuing an instruction to interrupt the playback of stream data; and
displaying a message notifying the viewer that the playback of stream data is paused, a button for cancelling the viewing of content, and a button for resuming the viewing of content.

75. The near video-on-demand system according to any one of claims according to any one of claims 49 to 74, the method comprising the steps of:
erasing the message notifying the viewer that the playback of stream data is paused, the button for canceling the viewing of content, and the button for resuming the viewing of content that are displayed on the screen, upon reception of an instruction to resume the viewing of content when the viewing is paused, upon reception of an instruction to pause or cancel the playback of content after the viewing of content is started, or upon reception of an instruction to cancel the pausing or cancelling of the playback of content;
checking to see if the playback of stream data is paused, and checking to see if the playback of content stream data has been completed;
checking to see if an instruction to interrupt the playback of stream data has been issued;
reading the stream data that is recorded;
decoding the stream data that has been read;
displaying the stream data;
checking to see if the stream reception system is currently receiving the last stage stream data;
checking to see if some time has passed in the time shift duration;
checking to see if a stage data reception event registration flag is set;
predicting the stream data that will be recorded at the end of the stage assuming that the reception/playback of stage data would continue;
checking to see if the stream data necessary for the playback during the next stage transfer time is recorded;
setting a stage data reception event registration flag if the stream data is not recorded; and
the stream reception system transmitting a stage transfer request message to the stream transmission system.

76. A program for causing a computer to carry out the method for controlling a near video-on-demand system according to any one of claims 49 to 75.

77. A computer-readable recording medium in which the program according to claim 76 is recorded.

78. A stream transmission system used in a near video-on-demand system in which a plurality of items of the same content are transmitted with their respective time shifts, wherein the content stream data is managed on a stage-by-stage basis by dividing it at predetermined time intervals into stages.

79. A stream transmission system used in a near video-on-demand system in which a plurality of items of the same content are transmitted with their reapective time shifts, the system comprising:
a stream storage/playback means;
a content managing means;
a stream transmission means;
a control data transmission/reception means;
a stream transmission managing means; and
a user managing means,
wherein the stream transmission means transfers the content stream data on a stage-by-stage basis by dividing the stream data at predetermined time intervals.

80. The stream transmission system according to claim 78 or 79, further comprising:
a transfer means for transferring stream data; and
a transfer means for transferring control data.

81. The stream transmission system according to any one of claims 78 to 80, further comprising a data transfer means.

82. The stream transmission system according to any one of claims 78 to 81, further comprising a stream encrypting means for encrypting a stream.

83. The stream transmission system according to claim 82, wherein the stream encrypting means comprises at least one of a secret-key cryptography system and a public-key cryptography system.

84. The stream transmission system according to any one of claims 78 to 83, wherein the stream transmission managing means manages the content stream data by dividing it into a plurality of stages at predetermined time intervals.

85. The stream transmission system according to any one of claims 78 to 84, wherein the stream transmission managing means sets the time shift duration between the individual items of stream data to be smaller than the time for transferring a single stage from the stream data transmission system to the stream data reception system.

86. The stream transmission system according to any one of claims 78 to 84, wherein the transfer rate of stream data is substantially identical to the playback rate of the stream data in the stream reception system.

87. The stream transmission system according to any one of claims 78 to 84, wherein the transfer rate of stream data is higher than the playback rate of the stream data in the stream reception system.

88. The stream transmission system according to any one of claims 78 to 87, wherein the stream data transmission managing means, upon request from the stream reception system for transferring the stream data of each stage, determines whether or not the stream data of the stage concerning the transfer request should be transferred.

89. The stream transmission system according to any one of claims 78 to 88, wherein the stream data transmission managing means determines whether or not the stream data for a particular stage should be transferred depending on whether or not enough stream data is stored in the stream recording/playback means for the playback of the stage.

90. The stream transmission system according to any one of claims 78 to 89, the stream transmission managing means determines a transfer channel for the stream data dynamically for each stage of the stream data.

91. The stream transmission system according to any one of claims 78 to 90, wherein the user managing means manages the information about the stream reception system that is receiving the stream data, with respect to each stage of the stream data.

92. The stream transmission system according to any one of claims 78 to 91, wherein the stream transmission managing means terminates or pauses the transmission of the stream data if there is no stream reception system that receives the stream data of the particular stream.

93. The stream transmission system according to any one of claims 78 to 92, wherein the stream transmission managing means has a transfer database that contains at least the transfer channel number, ID for identifying content, the stage number being played back, a list of the stream reception systems that receive the stream data for the stage, and the start time of the stage that is being played back.

94. The stream transmission system according to claim 93, wherein the transfer database contains the stage transfer time as an additional data item.

95. The stream transmission system according to claim 93 or 94, wherein the data items in the transfer database include a key for the encryption of the stream data for each stage.

96. The stream transmission system according to any one of claims 93 to 95, wherein the data items in the transfer database further include the number of the stage that is transferred in the next time shift duration, a list of the stream reception systems that receive the stream data in the next time shift duration, and the start time of transfer of the stage in the next time shift duration.

97. The stream transmission system according to any one of claims 78 to 96, wherein the content managing means has a content database that contains at least ID for identifying content, name of content, the number of stages, playback rate, transfer rate, total playback time, the number of the channel that is currently transferring the content, a transfer reference time as a reference for the transfer of the stream data in a stage, and information about the storage of each stage of the stream data of the content.

98. The stream transmission system according to claim 97, wherein the data items in the content database include the fee for viewing the content.

99. The stream transmission system according to claim 97 or 98, wherein the data items in the content database further include additional information about content.

100. The stream transmission system according to any one of claims 97 to 99, wherein the storage information about each stage stored in the content database includes position information about each stage of stream data stored in the storage/playback means.

101. The stream transmission system according to any one of claims 78 to 100, wherein the user managing means has a user managing database that contains at least the user name, user ID, a list of IDs of the content viewed by the user, and the fees for all of the content viewed by the user.

102. The stream transmission system according to any one of claims 78 to 101, wherein the control data transfer means transmit messages including at least a content list request/content list response, a content view request/content view response, a stage transfer request/stage transfer response, a content viewing start confirmation, and a view cancel confirmation to each other.

103. A stream reception system used in a near video-on-demand system in which a plurality of items of the same content are transmitted with their respective time shifts, the system comprising:
a stream reception unit that manages the content stream data on a stage-by-stage basis by dividing the content stream data at predetermined time intervals.

104. A stream reception system used in a near video-on-demand system in which a plurality of items of the same content are transmitted with their respective time shifts, the system comprising:
a stream reception unit; and
a user interface unit,
wherein the stream reception unit includes a stream recording/playback means, a stream reception means, a control data transmission/reception means, and a stream reception managing means, and wherein the user interface unit includes a display means and an operating means.

105. The stream reception system according to claim 103 or 104, further comprising a stream decrypting means.

106. A stream reception system according to claim 105, wherein the stream decrypting means comprises at least one of a secret-key cryptography system and a public-key cryptography system.

107. A stream reception system according to any one of claims 103 to 106, wherein the stream recording/playback means includes a memory area having a capacity for recording the stream data that is transferred within a single stage period.

108. The stream reception system according to claim 107, wherein the memory area in the stream recording/playback means comprises a structure forming a plurality of ring buffers or having a function similar to a ring buffer.

109. The stream reception system according to any one of claims 103 to 108, wherein the stream recording/playback means is capable of interrupting the playback of stream data and then resuming the playback of the stream data.

110. The stream reception system according to any one of claims 103 to 109, wherein the stream reception system makes a reservation for the transfer of the stream data on a stage-by-stage basis before the stream transmission system starts transferring the particular stage.

111. The stream reception system according to any one of claims 103 to 110, wherein, upon reception by the control data transmission/reception means of a content list response, a content list is displayed on the display means.

112. The stream reception system according to any one of claims 103 to 111, wherein upon reception by the control data transmission/reception means of a content view response, content information, an indicator of the wait time before the viewing of content becomes possible, and a button for cancelling the viewing of content are presented on the display means.

113. The stream reception system according to claim 112, wherein, upon reception by the operating means of an instruction for cancelling the viewing of content, the stream reception system terminates the reception and playback of the content.

114. The stream reception system according to claim 112 or 113, wherein, when the wait time before the viewing of content becomes possible has become zero, a button for starting the viewing of content and a button for cancelling the viewing of content are presented on the display means.

115. The stream reception system according to claim 114, wherein, after the button for starting the viewing of content and the button for cancelling the viewing of content are presented on the display means, the stream recording/playback means terminates the reception and playback of content upon reception by the operating means of an instruction for cancelling the viewing of content.

116. The stream reception system according to claim 114, wherein, after the button for starting the viewing of content and the button for cancelling the viewing of content are presented on the display means, the stream recording/playback means of the stream reception system resumes the reception and playback of the content upon reception by the operating means of an instruction for starting the viewing of content.

117. The stream reception system according to any one of claims 112 to 116, wherein, upon reception by the operating means of an instruction for an operation while the stream recording/playback means is receiving and playing back content, a button for cancelling the viewing of content, a button for pausing the viewing of content, and a button for resuming the viewing of content are displayed on the display means.

118. The stream reception system according to any one of claims 112 to 117, wherein upon reception by the operating means of a selection/decision to pause the viewing of content, the playback of content is paused and a notice that the playback of content is being paused is displayed on the display means.

119. The stream reception system according to any one of claims 112 to 118, wherein, upon reception by the operating means of a selection/decision to cancel the viewing of content, the display means displays a dialog asking if the viewing of content should be cancelled or not, wherein the dialog displays a first button for canceling the reception and playback of the content and a second button for continuing the reception and playback of the content.

120. The stream reception system according to claim 119, wherein upon reception by the operating means of an instruction to select/decide on the first button, the stream recording/playback means cancels the reception and playback of the content.

121. The stream reception system according to claim 119, wherein, upon reception by the operating means of an instruction to select/decide on the second button, the stream recording/playback system continues the reception and playback of the content.

122. The stream reception system according to any one of claims 112 to 121, wherein, upon reception by the operating means of an instruction to select/decide on the button for resuming the viewing of content, the button for cancelling the viewing of content, the button for pausing the viewing of content, and the button for resuming the viewing of content that have been displayed are erased from the screen on the display means.

123. The stream reception system according to any one of claims 112 to 122, wherein the operating means is operated in accordance with an instruction given via a remote controller having at least a control button, up, down, left, and right buttons, and an enter button.

124. A method for controlling a stream transmission system used in a near video-on-demand system in which a plurality of items of the same content are transmitted with their respective time shifts, the method comprising the steps of:
a stream transmission managing means dividing stream data of the content at predetermined time intervals into stages;
a stream transmission means transferring the stream data to a stream reception system on a stage-by-stage basis.

125. The method for controlling a stream transmission system according to claim 124, the method further comprising the step of the stream transmission means encrypting the stream data that has been divided into stages.

126. A method for controlling a stream reception system used in a near video-on-demand system in which a plurality of items of the same content are transmitted with their respective time shifts, the method comprising the steps of:
the stream reception means receiving stream data;
the stream recording/playback means accumulating the received stream data on a stage-by-stage basis; and
the stream recording/playback means playing back the stream data.

127. The method for controlling a stream reception system according to claim 126, the method comprising the steps of the stream reception means receiving and decrypting the encrypted stream data.

128. A program for causing a computer to carry out the method for controlling a near video-on-demand system according to any one of claims 124 to 127.

129. A computer-readable recording medium in which the program according to claim 128 is recorded.
